# EUROPEAN PATENT APPLICATION

(11) **EP 4 832 570 A1**
(43) Date of publication of application: **28.10.2026**
(21) Application number: 23961842.4
(22) Date of filing: 20.12.2023
(51) Int. Cl.: H04W 36/00

(54) **METHOD AND APPARATUS FOR EXECUTING SENSING SERVICE, AND DEVICE AND MEDIUM**

(71) Applicant: GUANGDONG OPPO MOBILE TELECOMMUNICATIONS CORP., LTD., Dongguan, Guangdong 523860 (CN)
(72) Inventor: YU, Xinlei, Dongguan, Guangdong 523860 (CN)
(74) Representative: Novagraaf Technologies
(86) International application number: PCT/CN2023/140295
(87) International publication number: WO 2025/129501

(57) **Abstract**

The present application relates to the field of sensing. Disclosed are a method and apparatus for executing a sensing service, and a device and a medium. The method, which is executed by a first communication node, comprises: receiving first information sent by an associated UE or a second communication node; and determining a handover between sensing nodes on the basis of the first information, wherein the sensing nodes are used for executing a sensing service on a sensing target corresponding to the associated UE, and there is an intersection between a communication range of the second communication node and a communication range of the associated UE. In the method provided in the present application, a first communication node controls a handover between sensing nodes, so as to ensure that a sensing target can be uniquely identified during a handover between different sensing nodes, thereby maintaining the continuity of the sensing service.

## Description

### TECHNICAL FIELD

The present disclosure relates to the field of sensing, and in particular, to a method for performing a sensing service, and an apparatus, a device, and a medium therefor.

### RELATED ART

Integrating wireless sensing with mobile communications to achieve communication services with integrated sensing is one of the newly proposed technologies by Third Generation Partnership Project (3GPP). It utilizes higher frequency ranges, wider bandwidths, and larger-scale antenna arrays to enable the entire communication system to function as a sensor for high-precision and high-resolution sensing.

For communication services with integrated sensing, during the performance of a sensing service, a sensing target may be in a constantly moving state, and the sensing target may switch between different sensing nodes.

However, when the sensing target moves between different sensing nodes, how to uniquely identify the sensing target and maintain the continuity of the sensing service among different sensing nodes is an urgent problem to be solved.

### SUMMARY

Embodiments of the present disclosure provide a method for performing a sensing service, and an apparatus, a device, and a medium therefor. The technical solutions are as follows.

According to one aspect of the embodiments of the present disclosure, a method for performing a sensing service is provided, wherein the method is performed by a first communication node and includes: receiving first information from an associated UE or a second communication node; determining switching of a sensing node based on the first information.

The sensing node is configured to perform a sensing service on a sensing target corresponding to the associated UE, and a communication range of the second communication node overlaps a communication range of the associated UE.

According to one aspect of the embodiments of the present disclosure, a method for performing a sensing service is provided, wherein the method is performed by an associated UE and includes: transmitting first information to a first communication node; or receiving a transmission configuration of a second reference signal from the first communication node, wherein the second reference signal is used for a second communication node to measure and then transmit first information to the first communication node.

The first information is used to assist the first communication node in determining switching of a sensing node, the sensing node is configured to perform a sensing service on a sensing target corresponding to the associated UE, and a communication range of the second communication node overlaps a communication range of the associated UE.

According to one aspect of the embodiments of the present disclosure, a method for performing a sensing service is provided, wherein the method is performed by a second communication node and includes: transmitting a first reference signal, wherein the first reference signal is used for an associated UE to measure and transmit first information to a first communication node; or transmitting the first information to the first communication node.

The first information is used to assist the first communication node in determining switching of a sensing node, the sensing node is configured to perform a sensing service on a sensing target corresponding to the associated UE, and a communication range of the second communication node overlaps a communication range of the associated UE.

According to one aspect of the embodiments of the present disclosure, an apparatus for performing a sensing service is provided, which includes: a first receiving module, configured to receive first information from an associated UE or a second communication node; and a first switching module, configured to determine switching of a sensing node based on the first information, wherein the sensing node is configured to perform a sensing service on a sensing target corresponding to the associated UE, and a communication range of the second communication node overlaps a communication range of the associated UE.

According to one aspect of the embodiments of the present disclosure, an apparatus for performing a sensing service is provided, which includes: a second transmitting module, configured to transmit first information to a first communication node; or a second receiving module, configured to receive a transmission configuration of a second reference signal from the first communication node, wherein the second reference signal is for a second communication node to measure and then transmit the first information to the first communication node.

The first information is used to assist the first communication node in determining switching of a sensing node, the sensing node is configured to perform a sensing service on a sensing target corresponding to the associated UE, and a communication range of a second communication node overlaps a communication range of the associated UE.

According to one aspect of the embodiments of the present disclosure, an apparatus for performing a sensing service is provided, which includes: a third transmitting module, configured to transmit a first reference signal, wherein the first reference signal is used for an associated UE to measure and transmit first information to a first communication node; or configured to transmit the first information to the first communication node.

The first information is used to assist the first communication node in determining the switching of a sensing node, the sensing node is configured to perform a sensing service on a sensing target corresponding to the associated UE, and a communication range of a second communication node overlaps a communication range of the associated UE.

According to one aspect of the present disclosure, a sensing device is provided, wherein the communication device includes a processor and a memory. The memory is configured to store at least one computer program, which when executed by the processor, cause the communication device to perform the method for performing a sensing service.

According to one aspect of the present disclosure, a computer-readable storage medium is provided, wherein the storage medium stores at least one computer program, which when executed by a processor, cause the processor to perform the method for performing a sensing service.

According to one aspect of the present disclosure, a chip is provided, which includes programmable logic circuitry and/or one or more program instructions, wherein the chip, when running, is caused to perform the method for performing a sensing service.

According to one aspect of the present disclosure, a computer program product is provided, which includes one or more computer instructions stored in a computer-readable storage medium. The one or more computer instructions, when read from the computer-readable storage medium and executed by a processor, cause the processor to perform the method for performing a sensing service.

The technical solutions according to the embodiments of the present disclosure may achieve the following beneficial effects.

Based on the first information received by the first communication node from the associated UE and the second communication node, switching of the sensing node is determined based on the content of the first information. The sensing node is configured to perform a sensing service on the sensing target corresponding to the associated UE. The communication range of the second communication node overlaps the communication range of the associated UE. When the sensing target moves between different sensing nodes, the first communication node can reasonably switch the sensing node during the movement of the sensing target, uniquely identify the sensing target, and thus ensure the continuity of the sensing service.

### BRIEF DESCRIPTION OF DRAWINGS

For clearer descriptions of the technical solutions in the embodiments of the present disclosure, the following briefly describes the accompanying drawings required for describing the embodiments. Apparently, the accompanying drawings in the following description illustrate merely some embodiments of the present disclosure, and those of ordinary skill in the art can still derive other drawings from these accompanying drawings without creative efforts.
FIG. 1 illustrates a schematic architecture diagram of a communication system according to some exemplary embodiments of the present disclosure;
FIG. 2 illustrates a schematic diagram of 5th Generation Mobile Communication Technology (5G) system architecture according to some exemplary embodiments of the present disclosure;
FIG. 3 illustrates a schematic diagram of device-free sensing/device-based sensing according to some exemplary embodiments of the present disclosure;
FIG. 4 illustrates a schematic diagram of a wireless sensing mode according to some exemplary embodiments of the present disclosure;
FIG. 5 illustrates a flowchart of Application Function (AF)-triggered sensing according to some exemplary embodiments of the present disclosure;
FIG. 6 illustrates a flowchart of a UE-triggered sensing according to some exemplary embodiments of the present disclosure;
FIG. 7 illustrates a flowchart of a UE-2-UE sensing mode controlled by a Sensing Function (SF) network element according to some exemplary embodiments of the present disclosure;
FIG. 8 illustrates a flowchart of a method for performing a sensing service according to some exemplary embodiments of the present disclosure;
FIG. 9 illustrates a schematic diagram of a method for performing a sensing service according to some exemplary embodiments of the present disclosure;
FIG. 10 illustrates a flowchart of a method for performing a sensing service according to some exemplary embodiments of the present disclosure;
FIG. 11 illustrates a schematic diagram of a method for performing a sensing service according to some exemplary embodiments of the present disclosure;
FIG. 12 illustrates a flowchart of a method for performing a sensing service according to some exemplary embodiments of the present disclosure;
FIG. 13 illustrates a schematic diagram of a method for performing a sensing service according to some exemplary embodiments of the present disclosure;
FIG. 14 illustrates a flowchart of a method for performing a sensing service according to some exemplary embodiments of the present disclosure;
FIG. 15 illustrates a schematic diagram of a method for performing a sensing service according to some exemplary embodiments of the present disclosure;
FIG. 16 illustrates a flowchart of a method for performing a sensing service according to some exemplary embodiments of the present disclosure;
FIG. 17 illustrates a schematic diagram of a method for performing a sensing service according to some exemplary embodiments of the present disclosure;
FIG. 18 illustrates a flowchart of a method for performing a sensing service according to some exemplary embodiments of the present disclosure;
FIG. 19 illustrates a flowchart of a method for performing a sensing service according to some exemplary embodiments of the present disclosure;
FIG. 20 illustrates a flowchart of a method for performing a sensing service according to some exemplary embodiments of the present disclosure;
FIG. 21 illustrates a flowchart of a method for performing a sensing service according to some exemplary embodiments of the present disclosure;
FIG. 22 illustrates a structural block diagram of an apparatus for performing a sensing service according to some exemplary embodiments of the present disclosure;
FIG. 23 illustrates a structural block diagram of an apparatus for performing a sensing service according to some exemplary embodiments of the present disclosure;
FIG. 24 illustrates a structural block diagram of an apparatus for performing a sensing service according to some exemplary embodiments of the present disclosure;
FIG. 25 illustrates a structural block diagram of an apparatus for performing a sensing service according to some exemplary embodiments of the present disclosure; and
FIG. 26 illustrates a structural block diagram of a sensing device according to some exemplary embodiments of the present disclosure.

### DETAILED DESCRIPTION

For clearer descriptions of the objectives, technical solutions, and advantages of the present disclosure, embodiments of the present disclosure are further described in detail hereinafter with reference to the accompanying drawings. Exemplary embodiments are described in detail herein, with examples shown in the accompanying drawings. When the following description refers to the drawings, unless otherwise indicated, the same numerals in different drawings represent the same or similar elements. The embodiments described in the following exemplary embodiments do not represent all embodiments consistent with the present disclosure. Instead, they are merely examples of apparatuses and methods consistent with some aspects of the present disclosure as detailed in the accompanying claims.

The terms used in the present disclosure are for the purpose of describing particular embodiments only and are not intended to limit the present disclosure. As used in the present disclosure and the appended claims, the singular forms "a," "an," and "the" are intended to include the plural forms as well, unless the context clearly indicates otherwise. It should also be understood that the term "and/or" as used herein refers to and encompasses any or all possible combinations of one or more associated listed items.

It should be understood that although the terms "first," "second," and the like may be used herein to describe various pieces of information, and such information should not be limited to these terms. These terms are only used to distinguish one type of information from another. For example, first information may also be referred to as second information, and similarly, second information may also be referred to as first information, without departing from the scope of the present disclosure. The word "if," as used herein, may be interpreted as "in a case where," "when," or "in response to determining that," depending on the context.

It should be understood that in various embodiments of the present disclosure, the serial numbers of the processes described above do not indicate the order of execution. The order of execution of each process should be determined by its function and inherent logic, and should not constitute any limitation on the implementation process of the embodiments of the present disclosure.

Before introducing the technical solutions of the present disclosure, some background technical knowledge related to the present disclosure will be introduced and explained first. The following related technologies can be combined with the technical solutions of the embodiments of the present disclosure as optional solutions, and all of them fall within the protection scope of the embodiments of the present disclosure. The embodiments of the present disclosure include at least some of the following contents.

Core network device: Refers to a communication device located in the core network of a communication network, responsible for processing and forwarding data traffic, providing network connectivity and service management functions.

Associated UE: UE stands for User Equipment, which also refers to a terminal device. The Associated UE is a user equipment that has established a connection with a communication network and is engaged in communication. For example, the Associated UE is an auxiliary UE that assists the core network device in switching a sensing node when performing a sensing service.

Access network device: Refers to a communication device located in the access network of a communication network, responsible for accessing UEs and providing access services. The access network device typically includes a base station, which is used for communicating with the associated UE and providing interfaces for accessing the network.

Access and Mobility Management Function (AMF): AMF is a functional module within the core network device, responsible for handling tasks related to access and mobility management. It communicates with the serving base station and the associated UE to manage the access, mobility, and other functions of the associated UE. AMF can transmit a sensing capability request to the serving base station to obtain sensing capability information of the serving base station.

SF: SF is another functional module in the core network device, primarily responsible for sensing session management and control, establishing and maintaining sensing sessions with the serving base station, the neighboring base station, and the associated UE, and handling tasks related to sensing sessions, such as policy control, user authentication, security management, etc. SF can transmit sensing capability requests to the serving base station and neighboring base station to obtain their sensing capability information.

Serving base station: The base station currently connected to the associated UE and providing the serving cell. The serving base station establishes a connection with the associated UE and processes communications with the associated UE. The serving base station communicates with the AMF and SF, provides information about the sensing capability to the AMF and SF, and receives sensing capability requests from the AMF and SF.

Neighboring base station: refers to the base station providing a neighboring cell. As a candidate base station participating in sensing capability exchange, when the UE needs to switch a base station or obtain better sensing capabilities, the neighboring base station can transmit a sensing capability request to the AMF and SF, and provide its own sensing capability information.

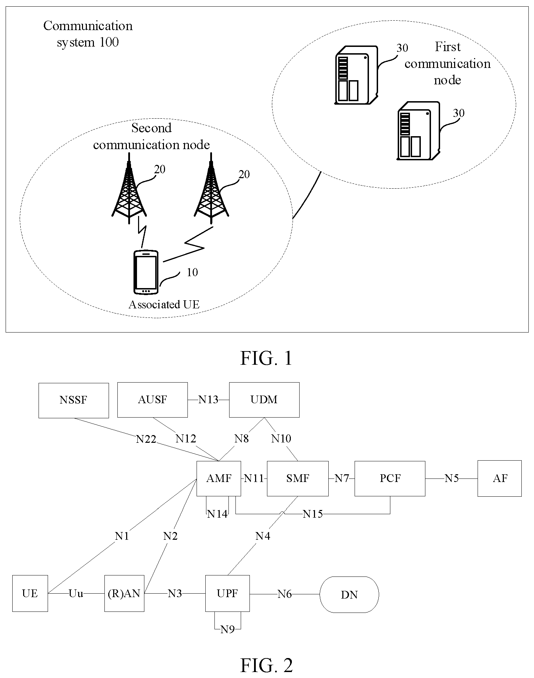

FIG. 1 illustrates the schematic architecture of a communication system according to some exemplary embodiments of the present disclosure. The communication system 100 may include: a terminal device 10, a second communication node 20, and a first communication node 30.

Terminal device 10 may refer to User Equipment (UE), Station (STA), access terminal, user unit, user station, mobile station, remote station, remote terminal, mobile device, wireless communication device, user agent, or user apparatus. In some embodiments, terminal device 10 may also be a cellular phone, cordless phone, Session Initiation Protocol (SIP) phone, Wireless Local Loop (WLL) station, Personal Digital Assistant (PDA), handheld device with wireless communication function, computing device, or other processing device connected to a wireless modem, in-vehicle device, wearable device, terminal device in 5th Generation System (5GS), terminal device in the future evolved Public Land Mobile Network (PLMN), or the like. The embodiments of the present disclosure are not limited to these. For ease of description, the above-mentioned devices are collectively referred to as terminal devices. A plurality of terminal devices 10 are usually deployed, and one or more terminal devices 10 may be distributed within the cell managed by each access network device 20. A terminal device may also be referred to simply as a terminal or UE, and those skilled in the art can understand their meaning. In some embodiments, the terminal device refers to an associated UE.

In some embodiments, the second communication node 20 is an access network device 20, which is a device deployed in the access network to provide wireless communication functionality for the terminal device 10. The access network device 20 may include various forms of macro base stations, micro base stations, relay stations, and the like. In systems employing different radio access technologies, the names of devices with access network device functionality may vary. For example, in a 5G NR system, it is referred to as the Next Generation Node B (gNodeB) or Next Generation Node B (gNB). As communication technology evolves, the term "access network device" may change. For ease of description, in the embodiments of the present disclosure, the aforementioned devices that provide wireless communication functionality for the terminal device 10 are collectively referred to as access network devices. In some embodiments, the second communication node 20 may be the terminal device.

In some embodiments, a communication relationship can be established between the terminal device 10 and the core network device 30 via the access network device 20. Illustratively, in a Long Term Evolution (LTE) system, the access network device 20 may be an Evolved Universal Terrestrial Radio Access Network (EUTRAN) or one or more eNodeBs within the EUTRAN; in a 5G New Radio (NR) system, the access network device 20 may be a Radio Access Network (RAN) or one or more gNBs within the RAN.

In some embodiments, the first communication node 30 is a core network device 30, which is a network element deployed in the core network. The main functions of the core network device 30 are to provide user connection, user management, and service bearer, and to serve as a bearer network that provides an interface to external networks. For example, the core network elements in the 5G NR system may include network elements such as SF, AMF entity, User Plane Function (UPF) entity, and Session Management Function (SMF) entity. In the embodiments of the present disclosure, unless otherwise specified, the term "network device" refers to the core network device 30. In some embodiments, the first communication node 30 may be an access network device.

In some embodiments, the access network device 20 and the core network device 30 communicate with each other via an air interface technology, such as the NG interface in the 5G NR system. The access network device 20 and the terminal device 10 communicate with each other via an air interface technology, such as the Uu interface.

The "5G NR system" in the embodiments of the present disclosure may also be referred to as a 5G system or an NR system, but those skilled in the art can understand its meaning. The technical solutions described in the embodiments of the present disclosure can be applied to LTE systems, 5G NR systems, subsequent evolution systems of 5G NR systems (such as Beyond 5G (B5G) systems, 6th Generation (6G) system, and other communication systems such as Narrow Band Internet of Things (NB-IoT) systems. The present disclosure does not limit this.

In the embodiments of the present disclosure, a network device can provide services for a cell, and a terminal device communicates with the network device through transmission resources (such as frequency-domain resources, or spectrum resources) on the carrier used by the cell. The cell may be a cell corresponding to an access network device (such as a base station), and the cell may belong to a macro base station or a base station corresponding to a small cell. The small cell may include: a metro cell, a micro cell, a pico cell, a femto cell, or the like. These small cells have the characteristics of small coverage area and low transmission power, and are suitable for providing high-rate data transmission services.

Before introducing the technical solutions of the present disclosure, some relevant technical knowledge involved in the present disclosure is introduced and explained first. The following related technologies can be arbitrarily combined with the technical solutions of the embodiments of the present disclosure as optional solutions, and all of them fall within the protection scope of the embodiments of the present disclosure. The embodiments of the present disclosure include at least some of the following contents.

The 5G network system architecture is illustrated in FIG. 2. The UE establishes an access stratum connection with the AN via the Uu interface to exchange access stratum messages and wireless data transmissions. The UE also maintains a Non-Access Stratum (NAS) connection with the AMF via the N1 interface to exchange NAS messages. The AMF serves as the mobility management function within the core network device, while the SMF handles session management functions. Besides managing mobility for the UE, the AMF is also responsible for forwarding session management-related messages between the UE and the SMF. The Policy Control Function (PCF) is the policy management function within the core network device, responsible for formulating policies related to mobility management, session management, billing, and other aspects for the UE. The User Plane Function (UPF) is the user plane function within the core network device, facilitating data transmission with external data networks via the N6 interface and with the Access Network (AN) via the N3 interface.

Current cellular networks, including 5G networks, are solely utilized for communication. However, the wireless electromagnetic wave signals employed by cellular networks can not only be used for wireless data transmission and communication purposes, but also possess environmental sensing capabilities, such as recognizing user actions or gestures, monitoring breathing, measuring terminal movement speed, imaging the environment, and monitoring weather. Therefore, in future cellular networks, consideration can be given to utilizing them not only for communication and data transmission but also for acquiring sensing information. Table 1 enumerates some different levels of sensing information.

**Table 1: Different levels of sensing information**

| | Different levels of sensing information | Content of sensing information |
|---|---|---|
| 1 | Received signal or raw channel information | Complex result of the received signal or channel response, amplitude/phase, I/Q components, and their related operation results |
| 2 | Basic measurement quantities | Time delay, Doppler shift, angle, signal strength, and their multidimensional combination representation |
| 3 | Basic attributes or states of the sensing target | Distance, speed, orientation, acceleration, etc |
| 4 | Advanced attributes or states of the sensing target | Whether the target exists, spatial location, trajectory, action, expression, vital signs, quantity, imaging results, weather, air quality, shape, material, composition, etc |

### 1. Definition of wireless sensing

In Integrated Sensing and Communication (ISAC), the sensing capability focuses on wireless signal sensing, which involves obtaining sensing of information about the environment and/or target objects within the environment (such as attributes and states) by analyzing direct, reflected, and scattered signals of radio waves. This enables functions such as localization, range measurement, speed measurement, imaging, detection, identification, and environmental reconstruction, facilitating the sensing and exploration of the physical world.

Passive sensing: A sensing node (network side or the terminal) performs sensing by acquiring electromagnetic waves (such as terahertz waves) emitted by target objects or reflecting electromagnetic waves from outside the sensing node and target object, such as the passive imaging sensing technology in radio astronomy.

·Active sensing: The sensing transmitting node (network side or terminal) emits electromagnetic waves, which, after being reflected by the target object, are received by the sensing receiving node for sensing. For example, active radar-based sensing technology that emits detection signals. The node receiving the reflected waves is not necessarily the node that transmitted the detection signals, that is, a plurality of nodes on the sensing side can achieve active sensing through some form of joint processing.

### 2. Sensing scenarios and use cases

In the intelligent transportation scenario, sensing of the road environment is achieved based on ISAC base stations or inter-base station cooperation, effectively enabling the construction of high-precision maps and providing over-the-horizon assistance for the safe operation of autonomous vehicles. The movement trajectory and speed of traveling vehicles are detected comprehensively, round-the-clock, and continuously based on ISAC base stations or inter-base station cooperation, and the sensing information is uploaded to the processing center, comprehensively enhancing the intelligent sensing capability of highway operation status and providing data support for road supervision. The sensing of the railway track environment is achieved based on the ISAC base stations, enabling round-the-clock detection of foreign object intrusion around high-speed railways.

In the intelligent low-altitude scenario, utilizing ISAC base stations or inter-base station cooperation to comprehensively and multi-angle sense the airspace and provide the sensing results to Unmanned Aerial Vehicles (UAVs) can provide redundancy for obstacle avoidance warnings, thereby enhancing the success rate of UAV obstacle avoidance. By utilizing ISAC base stations or inter-base station cooperation for full-airspace sensing, UAVs that intrude into the supervised area can be located and tracked, thus achieving UAV intrusion monitoring for fixed areas.

In the intelligent living scenario, based on the working mode of base station and terminal cooperation, or terminal self-transmitting and self-receiving, or terminal-to-terminal cooperation, respiratory monitoring, fitness monitoring, gesture/posture recognition, etc. are carried out by sensing wireless channel changes. Based on ISAC base stations or inter-base station cooperation, the signal link attenuation in the communication link is measured, and then the corresponding weather indicators are obtained by analyzing the relationship between signal link attenuation and weather indicators, thus performing weather monitoring.

In the intelligent network scenario, based on ISAC base stations or inter-base station cooperation, information such as the density and location of idle terminals within the cell is obtained, which assists in energy saving of base stations within the cell and optimization of base station resource scheduling.

In the intelligent transportation scenario, continuous tracking of vehicles is achieved based on ISAC base stations or inter-base station cooperation, enabling real-time dynamic monitoring of vehicle status. For vehicles equipped with wireless communication capabilities, the sensing accuracy can be further enhanced through cooperative sensing among vehicles.

In the intelligent low-altitude scenario, based on ISAC base stations or inter-base station cooperation, UAVs that intrude into the supervised area are located and tracked, and then actions are taken to drive away the UAVs flying without permission. For networked UAVs with wireless communication capabilities, cooperative sensing among UAVs can also be used to identify the flight status of the UAVs, obstacles in the flight path, etc., providing auxiliary flight services.

In the intelligent living scenario, by carrying a terminal with communication capabilities, based on the working mode of base station and terminal cooperation, or terminal self-transmitting and self-receiving, or terminal-to-terminal cooperation, respiratory monitoring, fitness monitoring, gesture/posture recognition, etc., are performed on a specific human body to achieve accurate real-time dynamic monitoring.

In the intelligent network scenario, ISAC technology is used to assist in enhancing beam management and channel estimation accuracy, improving the timeliness of terminal beam tracking, improving channel estimation accuracy, and reducing feedback overhead.

Per-Area/Object Sensing: 5G-Advanced (5G-A) ISAC scenarios can be divided into Per-Area and Per-Object scenarios based on whether the sensing requirements primarily focus on a designated sensing area or a designated sensing target. Sensing requirements are prevalent across various industries. For scenarios that require efficient sensing of real-time states of roads, vehicles, and people in factories, roads, low-altitude areas, cities, and even larger spatial and temporal scales, such scenarios are referred to as Per-Area ISAC scenarios. For scenarios that utilize ISAC technology to continuously sense and track sensed objects to obtain dynamic monitoring of their states, such scenarios are referred to as Per-Object ISAC scenarios.

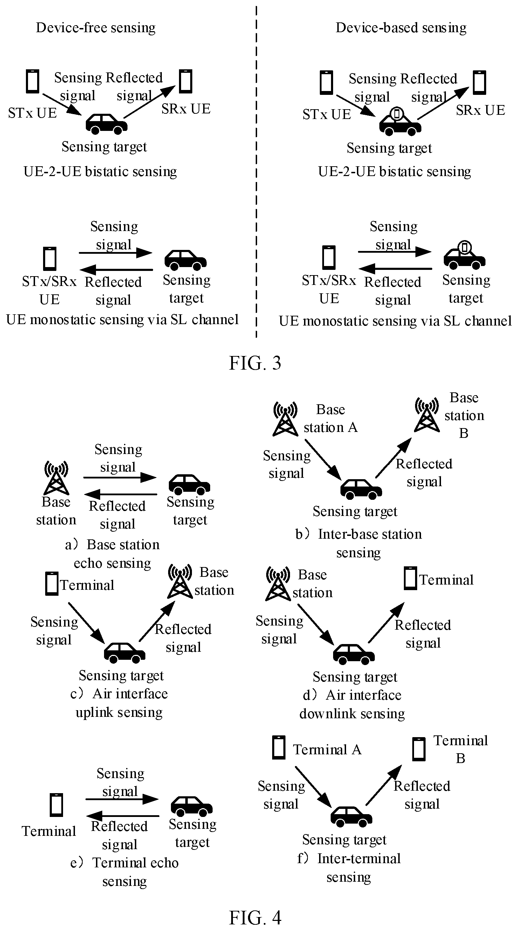

Device-based/free sensing: As shown in FIG. 3, based on whether the sensing target possesses signal transmission or reception capabilities, it can be divided into device-based ISAC scenarios and device-free ISAC scenarios. For example, in flight path management, base station, and terminal beam management, the sensing targets, i.e., UAVs and terminals, are user devices with signal transmission or reception capabilities, belonging to device-based ISAC scenarios. In weather monitoring and respiratory monitoring, the sensing targets, i.e., rainfall and people, do not possess signal transmission or reception capabilities, belonging to device-free sensing scenarios.

### 3. Wireless sensing mode

Support for sensing functionality in 3GPP networks is achieved by adding a SF network element and corresponding procedures. When an application transmits a sensing request for a sensing target to the core network device of the 3GPP network, the core network device selects the correct access network device or auxiliary UE (associated UE) through the SF or AMF, and triggers the capability to perform sensing-related wireless measurements, initiating the measurement of sensing information and generating sensing results.

For sensing, there are a plurality of wireless sensing modes in the ISAC. FIG. 4 illustrates six possible modes related to wireless sensing.
a) Base station echo sensing (gNB self-transmitting and self-receiving sensing): The base station transmits a sensing signal and receives the reflected signal.
b) Inter-base station sensing (gNB-2-gNB sensing, also referred to as gNB-to-gNB sensing): Base station B receives the sensing signal from base station A.
c) Air interface uplink sensing (UE-2-gNB sensing, also referred to as UE-to-gNB sensing): The base station receives the sensing signal from the terminal.
d) Air interface downlink sensing (gNB-2-UE sensing, also referred to as gNB-to-UE sensing): The terminal receives the sensing signal from the base station.
e) Terminal echo sensing (UE self-transmitting and self-receiving sensing): The terminal transmits a sensing signal and receives the reflected signal.
f) Inter-terminal sensing (UE-2-UE sensing, also referred to as UE-to-UE sensing): Terminal B receives the sensing signal from Terminal A.

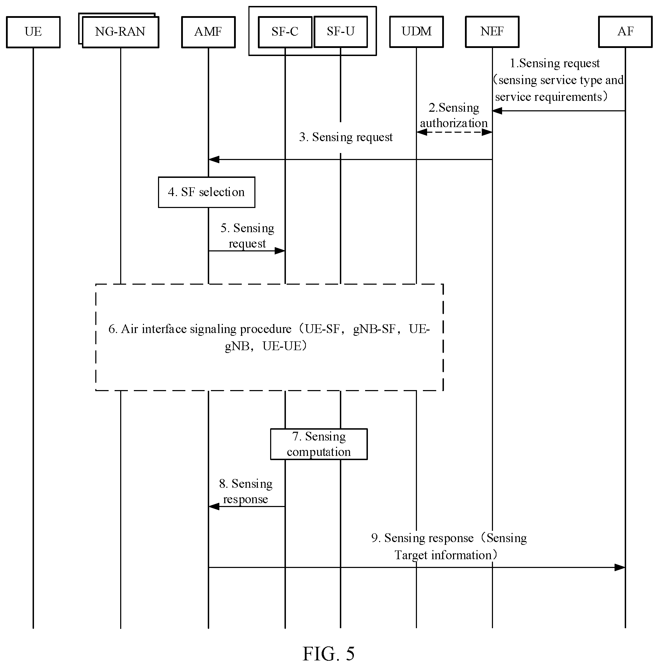

FIG. 5 is a flowchart of a possible procedure for controlling the sensing operations of an access network device or UE. In step 1, the sensing request is triggered by AF, hence it is called AF-triggered sensing procedure, and the sensing request belongs to Mobile Terminated-Sensing Request (MT-SR). In addition to MT-SR, the sensing request further includes Mobile Originated-Sensing Request (MO-SR) as shown in FIG. 4, as well as possible Network Induced-Sensing Request (NI-SR) triggered by network internal elements.

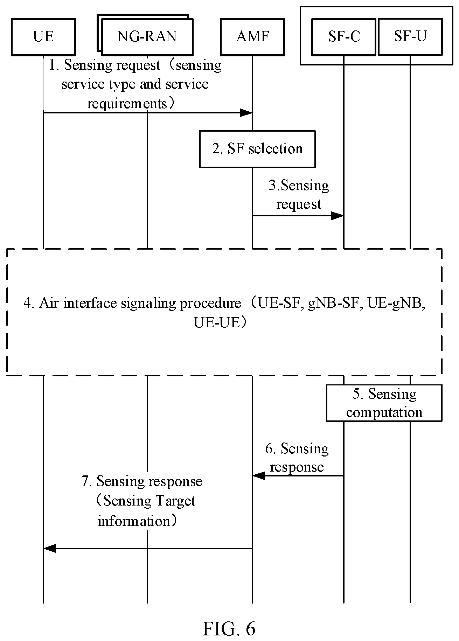

Step 6 in FIG. 5 and Step 4 in FIG. 6 are air interface sensing signaling procedures. The air interface sensing signaling procedures can be divided into the following based on the different network elements involved: SF and gNB signaling interaction, SF and UE signaling interaction, gNB and UE signaling interaction, and UE and UE signaling interaction. Due to the different types of sensing nodes (UE/gNB) involved in different sensing modes, the air interface signaling procedures required for different sensing modes are also different, as shown in Table 2.

**Table 2: Air interface signaling procedures corresponding to different sensing modes**

| sensing mode | gNB sensing | | UE-gNB sensing | | UE sensing | |
|---|---|---|---|---|---|---|
| | gNB self-transmitting and self-receiving | gNB-2-gNB | UE-2-gNB | gNB-2-UE | UE self-transmitting and self-receiving | UE-2-UE |
| SF-gNB | √ | √ | √ | √ | √ | √ |
| SF-UE | × | × | √ | √ | √ | √ |
| gNB-UE | × | × | √ | √ | √ | √ |
| UE-UE | × | × | × | × | √ | √ |

Next, the air interface sensing signaling procedure is introduced using the terminal sensing mode (i.e., UE-2-UE sensing, UE self-transmitting and self-receiving sensing) as an example.

For terminal sensing modes (i.e., UE-2-UE sensing, UE self-transmitting and self-receiving sensing), the basic process design needs to consider different coverage scenarios in which the terminal is located: In Coverage (IC) and Out Of Coverage (OOC).

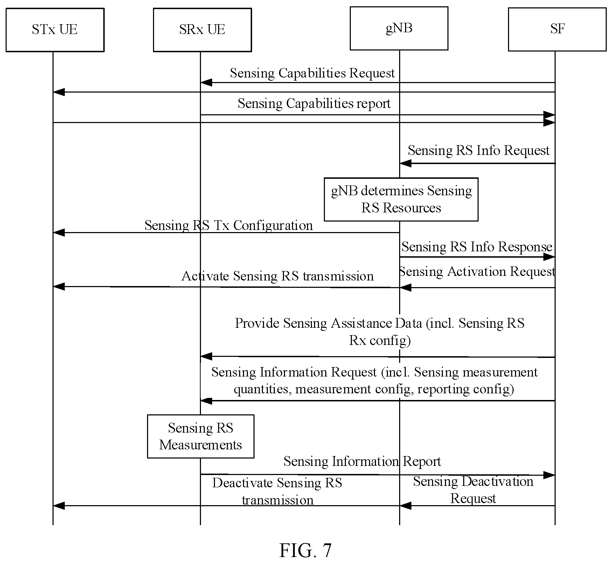

FIG. 7 illustrates the air interface sensing signaling procedure for a UE-2-UE sensing mode controlled by SF. For other sensing modes involving a terminal device, the air interface sensing signaling procedure is similar, and only appropriate modifications are required based on this. For example, for UE self-transmitting and self-receiving sensing, the STx UE (Sensing Transmitting UE) and SRx UE (Sensing Receiving UE) are the same terminal; for the UE-2-gNB sensing mode, gNB replaces SRx UE; and for the gNB-2-UE sensing mode, gNB replaces STx UE.

### 4. NR Radio Resource Control (RRC) measurement

Measurement primarily refers to mobility measurement in a connected state. After the network issues measurement configuration to the UE, the UE detects the signal quality status of neighboring cells based on parameters such as measurement objects and reporting configuration indicated in the measurement configuration, and feeds back the measurement reporting information to the network for handover or improving the neighboring cell relationship list.

### 4.1 Measurement configuration

In NR, the network transmits measurement configuration information to the UE in a connected state over RRC signaling. The UE performs measurements (intra-frequency, inter-frequency, and inter-technology) based on the content of the measurement configuration information, and then reports the measurement results to the network. The network uses RRC connection reconfiguration for measurement configuration, and the measurement configuration information includes the following content.

### 1) Measurement Object

For both intra-frequency measurement and inter-frequency measurement, each measurement object indicates the time-frequency location to be measured and the subcarrier spacing of the reference signal. For the cell associated with this measurement object, the network may configure a cell offset list, a cell blacklist, and a cell whitelist.

For inter-technology measurement, each measurement object corresponds to a separate Evolved Universal Terrestrial Radio Access (E-UTRA) frequency point. For the cells associated with this E-UTRA frequency point, the network may configure a cell offset list, a cell blacklist, and a cell whitelist.

The UE refrains from performing any operations on a cell included in the cell blacklist in event evaluation and measurement reporting. The UE performs event evaluation and measurement reporting on a cell included in the cell whitelist.

For each measurement frequency point, the network configures a Serving Measurement and Timing Configuration (SMTC) to indicate the time for the UE to receive the Synchronization Signal block (SSB) on the neighboring cell corresponding to that frequency point. The SMTC configuration includes a period of the SMTC, a start time offset of the SMTC within a period, a duration of the SMTC, and the like.

### 2) Reporting Configuration

Each measurement object corresponds to one or more reporting configurations. The reporting configuration includes:
Reporting criteria: This refers to a trigger condition for the UE to perform measurement reporting, which can be either periodic reporting or event-triggered reporting.
   ·Reference Signal (RS) type: RS used by UE for beam and cell measurements, which can be Synchronization Signal / Physical Broadcast Channel (SS/PBCH) blocks or Channel State Information Reference Signal (CSI-RS).
Reporting format: The measurement reporting quantity (such as RSRP) reported by the UE for each cell and each beam, as well as other relevant information, such as the maximum number of cells reported by the UE and the maximum number of beams reported for each cell.

### 3) Measurement Identity (ID)

A unique ID is used to associate the measurement object with the reporting configuration. One measurement object may be associated with a plurality of reporting configurations simultaneously, and one reporting configuration may be associated with a plurality of measurement objects simultaneously. Measurement ID is used for differentiation.

### 4) Measurement Gap

This is used to indicate the time for the UE to perform inter-frequency/inter-system measurements. The UE performs inter-frequency/inter-system measurements during the measurement gap. The measurement gap configuration includes the periodicity of the measurement gap, a start time offset of the measurement gap within a period, and a duration of the measurement gap, etc.

### 4.2 Measurement reporting

The UE conducts measurements based on the measurement configuration issued by the network. When certain trigger conditions are met, it evaluates the measurement reporting. If the reporting conditions are met, the UE fills out the measurement report and transmits it to the network as part of the measurement report.

Measurement reporting is categorized into three types:
·Event triggering
·Periodic reporting
·Event-triggered periodic reporting

In some embodiments, the core network device determines whether to switch the sensing node based on the first information from the associated UE or access network device. The first information indicates information related to the mobility of the associated UE, assisting the core network device in deciding the switching of the sensing service among different sensing nodes. The reporting manners of the first information include, but are not limited to, at least one of the following three implementation manners (the order does not indicate the superiority or inferiority of the Implementation manners).
Implementation manner 1: The associated UE measures a downlink reference signal.
Implementation manner 2: The associated UE transmits an uplink reference signal.
Implementation manner 3: The associated UE measures a downlink reference signal.

It should be noted that in the embodiments of the present disclosure, "sensing" can be equated with or replaced by at least one of: localization, range measurement, speed measurement, angle measurement, target imaging, target detection, target tracking, or target identification.

The three Implementation manners are introduced respectively as follows.

### Implementation manner 1: The associated UE measures a downlink reference signal

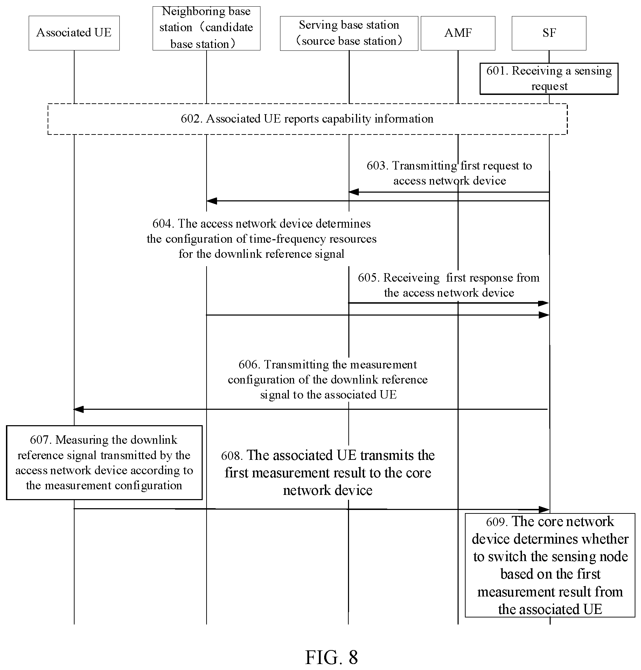

FIG. 8 illustrates a flowchart of a method for performing a sensing service according to some exemplary embodiments of the present disclosure, wherein a serving base station provides a serving cell of an associated UE, a neighboring base station provides a neighboring cell of an associated UE, and AMF and SF belong to network elements in the core network device responsible for sensing-related functions. The method is jointly performed by the core network device, the associated UE, and the access network device, and includes all or part of the following steps.

Step 601: The core network device receives a sensing request.

In some embodiments, upon receiving a sensing request, the core network device initiates a sensing session with the access network device, which is used to implement sensing service for sensing target. The sensing request received by the core network device includes at least one of the following information or parameters.
·Type of sensing service: at least one of intrusion detection, weather monitoring, UAV recognition, or the like used to distinguish the service type information for sensing scenario use cases.
·Characteristics of the sensing service: at least one of periodicity, non-periodicity, event triggering, or the like.
·Quality of Service (QoS) requirements of the sensing service: at least one of location accuracy, speed accuracy, sensing resolution, maximum sensing service delay, refresh rate, confidence level, missed detection rate, false alarm rate, or other indicators.
·Indication information for sensing service continuity: It may be explicitly indicated in the sensing request that the sensing service needs to ensure sensing service continuity; or it may be indicated implicitly, for example, by indicating that the sensing service is periodic and has a high refresh rate requirement.
·Sensing target information: indicating that the sensing target is an active sensing target, and/or indicating the ID information of the associated UE of the sensing target.

In some embodiments, the core network device initiates a sensing session based on a sensing request, and implements sensing service for the sensing target through the sensing session, while further ensuring the continuity of the sensing service.

In some embodiments, the sensing request may be a request from any of the associated UE, the access network device, the core network device, or the AF.

Step 602: The associated UE reports capability information.

In some embodiments, the core network device includes at least one of: an AMF for managing access, mobility, and other functions of the associated UE, or an SF responsible for sensing session management and control.

In some embodiments, the associated UE reports capability information to the access network device and/or the core network device based on a reporting request for capability information from the access network device and/or the core network device. The reporting request for capability information includes an indication that the associated UE provides capability information related to sensing service continuity.

In some embodiments, the associated UE of the sensing target may report capability information related to sensing service continuity to the access network device and the core network device. The reporting of capability information by the associated UE includes: reporting capability information to the access network device and/or the core network device.

The capability information is used to indicate whether the associated UE supports the capability associated with the first information. For example, the capability information is used to indicate whether the associated UE supports at least one of the measurement capability, generation capability, or reporting capability associated with the first information.

In some embodiments, the capability information includes the measurement capability of the associated UE for the downlink reference signal. Optionally, the capability information includes: the measurement capability of the associated UE for the downlink reference signal from the access network device corresponding to the current serving cell, and/or the measurement capability of the associated UE for the downlink reference signal from the access network device corresponding to the neighboring cell.

In some embodiments, the neighboring cell may be categorized into at least one of: an intra-frequency neighboring cell, an inter-frequency neighboring cell, or an inter-system neighboring cell. The measurement capabilities of the associated UE for the downlink reference signals from the access network devices corresponding to the neighboring cells include at least one of: the measurement capability for a downlink reference signal from the intra-frequency neighboring cell, the measurement capability for a downlink reference signal from the inter-frequency neighboring cell, or the measurement capability for a downlink reference signal from the inter-system neighboring cell. As an example, the measurement capabilities of the associated UE for downlink reference signals include at least one of the following capability parameters: whether measurement is supported, whether reporting is supported, which type of downlink reference signal is supported, whether intra-frequency measurement is supported, whether inter-frequency measurement is supported, whether inter-system measurement is supported, or the shortest switching time for inter-frequency measurement.

In some embodiments, the capability information includes at least one of the measurement capability or reporting capability of the associated UE for the downlink reference signal.

Step 603: The core network device transmits a first request to the access network device.

In some embodiments, the core network device transmits a first request to the access network device, including: transmitting a first request to the access network device corresponding to the serving cell and/or the access network device corresponding to the neighboring cell.

The first request is used to request the configuration of time-frequency resources for the downlink reference signal.

In some embodiments, the downlink reference signal is used by the associated UE to perform measurements related to ensuring the continuity of sensing service.

In some embodiments, the downlink reference signal may be at least one of Downlink Sensing Reference Signal (DL Sensing RS), Positioning Reference Signal (PRS), SSB, or CSI-RS.

In some embodiments, by transmitting a first request to the access network device, the core network device acquires the configuration of time-frequency resources for the downlink reference signal, so as to correctly instruct the associated UE to receive the downlink reference signal at the appropriate time-frequency resource location and frequency-domain resource location. The core network device can perform at least one of scheduling, optimization, correction, or supplementation on the configuration of time-frequency resources, thereby generating the measurement configuration of the downlink reference signal.

Step 604: The access network device determines the configuration of time-frequency resources for the downlink reference signal.

In some embodiments, upon receiving the first request from the core network device, the access network device determines the configuration of time-frequency resources for the downlink reference signal based on the current network status and wireless resource conditions.

In some embodiments, the access network device corresponding to the serving cell determines the configuration of time-frequency resources for the downlink reference signal based on the current network status and resource conditions, that is, determines at least one of the time-domain resource location, frequency-domain resource location, or spatial-domain resource location of the downlink reference signal. Optionally, the configuration of the time-frequency resources further includes reporting configuration. The access network device carries the configuration of the time-frequency resources in the first response and returns it to the core network device.

In some embodiments, in addition to at least one of time-domain resource location, frequency-domain resource location, or spatial-domain resource location, the configuration of time-frequency resources for the downlink reference signal further includes at least one of the measurement quantity, measurement period, or reporting configuration of the downlink reference signal.
·Measurement quantity of downlink reference signal: used to specify the parameters to be measured, such as at least one of Reference Signal Received Power (RSRP), Reference Signal Received Quality (RSRQ), Signal-to-Interference-and-Noise Ratio (SINR), or the like. These measurement quantities are used to evaluate the performance and quality of the serving cell and/or neighboring cells.
·Measurement period of downlink reference signal: It specifies the time interval for the associated UE to perform measurements on the serving cell and/or neighboring cells, determining when the associated UE performs measurements and obtains measurement results.

Reporting configuration of downlink reference signal: used to determine the reporting manner of measurement results, including event-triggered reporting and periodic reporting. Event-triggered reporting refers to triggering reporting when the measurement result meets a certain preset condition. Periodic reporting involves reporting measurement results at fixed intervals.

The process of transmitting the first response by the access network device to the core network device includes: transmitting the first response by the access network device corresponding to the serving cell to the core network device, wherein the first response includes the configuration of the time-frequency resources for the downlink reference signal of the serving cell; and/or transmitting the first response by the access network device corresponding to the neighboring cell to the core network device, wherein the first response includes the configuration of the time-frequency resources for the downlink reference signal of the neighboring cell.

Step 605: The core network device receives the first response from the access network device.

The first response includes the configuration of the time-frequency resources for the downlink reference signal.

In some embodiments, the core network device obtains the configuration of the time-frequency resources for the downlink reference signal of the access network device, which includes obtaining the configuration of the time-frequency resources for the downlink reference signal of the access network device corresponding to the serving cell and/or the configuration of the time-frequency resources for the downlink reference signal of the access network device corresponding to the neighboring cell.

Step 606: The core network device provides the measurement configuration of the downlink reference signal to the associated UE.

The measurement configuration of the downlink reference signal is the measurement configuration of the downlink reference signal of the serving cell and/or the neighboring cell, and is used to perform the measurement of the serving cell and/or the neighboring cell to ensure the continuity of the sensing service.

In some embodiments, the core network device provides the measurement configuration of the downlink reference signal to the associated UE, including: transmitting, by the core network device to the associated UE, the measurement configuration of the downlink reference signal of the access network device corresponding to the serving cell and/or the measurement configuration of the downlink reference signal of the access network device corresponding to the neighboring cell.

In some embodiments, the measurement configuration of the downlink reference signal is generated based on the configuration of the time-frequency resources. The measurement configuration of the downlink reference signal is the same as the configuration of the time-frequency resources, or a subset of the configuration of the time-frequency resources, or the configuration of the time-frequency resources is a subset of the measurement configuration.

In some embodiments, the core network device receives the configuration of time-frequency resources for the downlink reference signal from the access network device corresponding to the serving cell and/or the access network device corresponding to the neighboring cell, and determines the measurement configuration of the downlink reference signal based on the configuration of time-frequency resources. In addition to at least one of the time-domain resource location, frequency-domain resource location, or spatial-domain resource location, the measurement configuration of the downlink reference signal further includes at least one of the measurement quantity, measurement period, or reporting configuration of the downlink reference signal.

In some embodiments, the measurement configuration of the downlink reference signal can be generated, added, or modified by the core network device based on the configuration of time-frequency resources. For example, if the access network device corresponding to the serving cell and/or the access network device corresponding to the neighboring cell report to the core network device a configuration of time-frequency resources that does not include information such as the measurement quantity, measurement period, and reporting configuration of the downlink reference signal, the core network device can generate information such as the measurement quantity, measurement period, and reporting configuration of the downlink reference signal. If the access network device corresponding to the serving cell and/or the access network device corresponding to the neighboring cell report to the core network device a configuration of time-frequency resources that includes information such as the measurement quantity, measurement period, and reporting configuration of the downlink reference signal, the core network device may select part of the configuration of time-frequency resources, and supplement part of the configuration to form the measurement configuration, or modify part of the configuration of the time-frequency resources to generate the measurement configuration. In some embodiments, the measurement configuration of the downlink reference signal can be transmitted over RRC or NAS signaling, and may be carried and transmitted over one or more signaling messages. For instance, Provide Sensing Assistance Data messages and Sensing Information Request messages may be used to carry the measurement configuration of the downlink reference signal. In some embodiments, Provide Sensing Assistance Data messages are used to provide sensing assistance data to the associated UE, which may include the measurement configuration of the downlink reference signal. Sensing Information Request messages are used to request the associated UE to provide sensing information, which may carry the measurement configuration of the downlink reference signal.

In some embodiments, the core network device transmits sensing assistance data to the associated UE, wherein the sensing assistance data carries the measurement configuration of the downlink reference signal.

Step 607: The associated UE measures the downlink reference signal transmitted by the access network device according to the measurement configuration.

In some embodiments, the associated UE performs measurement of the downlink reference signal of the access network device according to the measurement configuration, that is, the associated UE performs measurement of the downlink reference signal transmitted by the access network device corresponding to the serving cell according to the measurement configuration, and/or measurement of the downlink reference signal transmitted by the access network device corresponding to the neighboring cell.

In some embodiments, the associated UE measures the downlink reference signal of the serving cell and/or neighboring cells according to the measurement configuration. Optionally, the measurement includes measuring at least one indicator such as RSRP, RSRQ, SINR, or the like of the downlink reference signal.

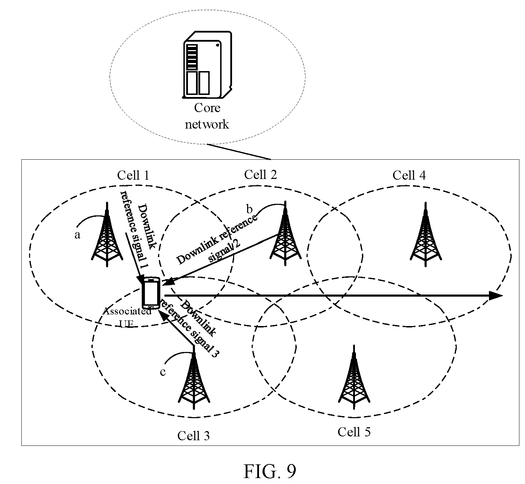

FIG. 9 illustrates a schematic diagram of a method for performing a sensing service according to some exemplary embodiments of the present disclosure. Access network device a is the access network device corresponding to the serving cell, while access network device b and access network device c are the access network devices corresponding to neighboring cells. The associated UE measures, according to the measurement configuration, the downlink reference signal 1 from access network device a corresponding to the serving cell, the downlink reference signal 2 from access network device b corresponding to the neighboring cell, and the downlink reference signal 3 from access network device c corresponding to the neighboring cell.

Step 608: The associated UE transmits the first measurement result to the core network device.

The first measurement result is the measurement result of the downlink reference signal of the serving cell and/or the neighboring cell.

In some embodiments, the associated UE obtains a first measurement result after performing measurement of the downlink reference signal. Optionally, the first measurement result may include at least one of RSRP, RSRQ, SINR, or the like of the downlink reference signal of the serving cell and/or neighboring cells.

In some embodiments, according to the reporting configuration in the measurement configuration, the associated UE can transmit the first measurement result to the core network device. Optionally, the measurement configuration is event-triggered reporting, and when the first measurement result meets a preset condition, the associated UE transmits the first measurement result to the core network device; or the measurement configuration is periodic reporting, and the associated UE can regularly transmit the first measurement result to the core network device at periodic time intervals.

In some embodiments, the associated UE reports the first measurement result to the core network device, including the measurement result of the downlink reference signal of the access network device corresponding to the serving cell, and/or the measurement result of the downlink reference signal of the access network device corresponding to the neighboring cell.

In some embodiments, the associated UE can report its measurement results of the downlink reference signal to the access network device. The access network device corresponding to the serving cell and/or the access network device corresponding to the neighboring cell forward the measurement results to the core network device. These measurement results can be provided to the core network device as a basis for determining the continuity of the sensing service.

Step 609: The core network device determines whether to switch the sensing node based on the first measurement result from the associated UE.

In some embodiments, the core network device can switch the sensing node based on the first measurement result of the downlink reference signal from the serving cell and/or neighboring cells from the associated UE.

In some embodiments, the associated UE performs measurements of the downlink reference signals of the serving cell and/or neighboring cells according to the measurement configuration, and reports the first measurement result to the core network device. Optionally, the first measurement result includes at least one of the information such as RSRP, RSRQ, or SINR of the downlink reference signals of the serving cell and/or neighboring cells.

In some embodiments, the first measurement result includes the measurement result of the downlink reference signal of the serving cell and the measurement result of the downlink reference signal of the neighboring cell. The core network device evaluates the current network state based on the first measurement result and determines whether a switch of the sensing node is needed based on the current network state. For example, if the measurement result of the downlink reference signal of the serving cell is below the first condition and the measurement result of the downlink reference signal of the neighboring cell is above the second condition, the core network device switches the sensing node from the access network device corresponding to the serving cell to the access network device corresponding to the neighboring cell.

In some embodiments, after determining to switch the sensing node, the core network device transmits a switching instruction to the access network device corresponding to the serving cell. This switching instruction informs the access network device corresponding to the serving cell to switch to a new sensing node. The access network device corresponding to the serving cell performs the switching operation according to the switching instruction, switching the sensing node from the current node to the new node. As shown in FIG. 9, the associated UE reports the measurement results of the downlink reference signal 1 of the serving cell and the measurement results of the downlink reference signal 2 and downlink reference signal 3 of the neighboring cell to the core network device. The core network device determines whether to switch the sensing node based on the measurement results. If the measurement result of the downlink reference signal 1 of the serving cell is below the first condition and the measurement result of the downlink reference signal 2 of the neighboring cell is above the second condition, the core network device switches the sensing node from access network device a to access network device b.

In summary, the method according to the embodiments of the present disclosure eliminates the need for the associated UE to transmit signals. The associated UE only needs to measure the downlink reference signals from the access network device. When the sensing target is a battery-powered mobile device, this approach saves power for the associated UE. By reducing the frequency of active signal transmission by the associated UE, the associated UE can more efficiently utilize the battery power, extending the usage time and improving the endurance of the associated UE. Based on the downlink reference signals measured by the associated UE, the core network device can determine whether to switch the sensing node.

### Implementation manner 2: The associated UE transmits an uplink reference signal

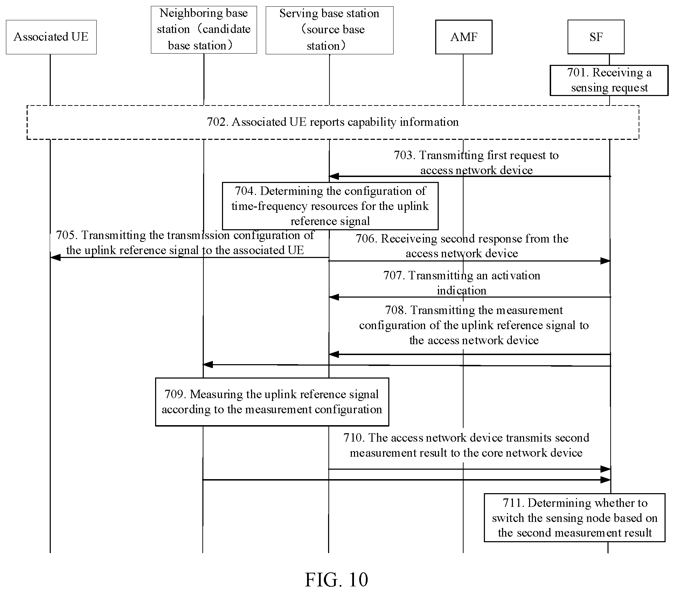

FIG. 10 illustrates a flowchart of a method for performing a sensing service according to some exemplary embodiments of the present disclosure, wherein a serving base station provides a serving cell of an associated UE, a neighboring base station provides a neighboring cell of an associated UE, and AMF and SF belong to network elements in the core network device responsible for sensing-related functions. The method is jointly performed by the core network device, the associated UE, and the access network device, and includes all or part of the following steps.

Step 701: The core network device receives a sensing request.

In some embodiments, upon receiving a sensing request, the core network device initiates a sensing session with the access network device, which is used to implement a sensing service for a sensing target. The sensing request received by the core network device includes at least one of the following information or parameters.
·Type of sensing service: at least one of intrusion detection, weather monitoring, UAV identification, or the like used to distinguish the service type information of sensing scenario use cases.
·Characteristics of the sensing service: at least one of periodicity, non-periodicity, event triggering, or the like.
·QoS requirements of the sensing service: location accuracy, speed accuracy, sensing resolution, maximum sensing service delay, refresh rate, confidence level, missed detection rate, false alarm rate, and other indicators.
·Indication information for sensing service continuity: It may be explicitly indicated in the sensing request that the sensing service needs to ensure sensing service continuity; or it may be indicated implicitly, for example, by indicating that the sensing service is periodic and has a high refresh rate requirement.
·Sensing target information: indicating that the sensing target is an active sensing target, and/or indicating the ID information of the associated UE of the sensing target.

In some embodiments, the core network device initiates a sensing session based on a sensing request, and implements a sensing service for the sensing target through the sensing session, while further ensuring the continuity of the sensing service.

In some embodiments, the sensing request may be a request from any of the associated UE, the access network device, the core network device, or the AF.

Step 702: The associated UE reports capability information.

In some embodiments, the core network device includes at least one of an AMF for managing access, mobility, and other functions of the associated UE, or an SF responsible for session management and control.

In some embodiments, the associated UE reports capability information to the access network device and/or the core network device based on the reporting request for capability information from the access network device and/or the core network device. The reporting request for capability information includes an indication for the associated UE to provide capability information related to sensing service continuity.

In some embodiments, the associated UE of the sensing target can report capability information related to the sensing service continuity to the access network device and the core network device. The reporting of capability information by the associated UE includes: the associated UE reports capability information to the access network device and/or the core network device.

The capability information is used to indicate whether the associated UE supports the capability associated with the first information. For example, the capability information is used to indicate whether the associated UE supports at least one of the measurement capability, generation capability, or reporting capability associated with the first information.

In some embodiments, the capability information includes the transmission capability of the uplink reference signal of the associated UE, wherein the uplink reference signal is a signal from the associated UE to the access network device. The transmission capability includes at least one of: whether the transmission of the uplink reference signal is supported, what type of uplink reference signal transmission is supported, the supported frequency range for transmission, or the supported maximum transmit power.

Step 703: The core network device transmits a second request to the access network device.

The second request is used for requesting the configuration of time-frequency resources for the uplink reference signal.

In some embodiments, the core network device transmits a second request to the access network device corresponding to the serving cell.

In some embodiments, the second request is used to request the access network device corresponding to the serving cell to provide the configuration of time-frequency resources for the uplink reference signal. The uplink reference signal is a reference signal transmitted by the associated UE to the access network device.

In some embodiments, the uplink reference signal may be at least one of an uplink sensing reference signal, a Sounding Reference Signal (SRS), a De-Modulation Reference Signal (DM-RS), or other reference signals.

In some embodiments, by transmitting a second request to the access network device corresponding to the serving cell, the core network device obtains the configuration information of the time-frequency resources for the uplink reference signal, so that the core network device can correctly instruct the associated UE to transmit the uplink reference signal at the appropriate time-frequency resource location and frequency-domain resource location. The core network device can perform at least one of scheduling, optimization, correction, or supplementation based on the configuration information of the time-frequency resources, thereby generating the measurement configuration of the uplink reference signal.

Step 704: The access network device determines the configuration of time-frequency resources for the uplink reference signal.

Optionally, the access network device refers to the access network device corresponding to the serving cell.

In some embodiments, upon receiving the second request from the core network device, the access network device corresponding to the serving cell determines the configuration of time-frequency resources for the uplink reference signal based on the current network status and resource conditions.

In some embodiments, the access network device corresponding to the serving cell determines the configuration of time-frequency resources for the uplink reference signal based on the current network status and resource conditions, that is, determines at least one of the time-domain resource location, frequency-domain resource location, or spatial-domain resource location of the uplink reference signal. The access network device corresponding to the serving cell carries the configuration of the time-frequency resources in the second response and returns it to the core network device. In some embodiments, in addition to at least one of the time-domain resource location, frequency-domain resource location, or spatial-domain resource location, the configuration of time-frequency resources for the uplink reference signal includes at least one of the measurement quantity, measurement period, reporting configuration, or the like of the uplink reference signal.

·Measurement quantity of uplink reference signal: specifies the parameters that need to be measured for the uplink reference signal, such as at least one of RSRP, RSRQ, SINR, or the like, used to evaluate the quality and performance of the uplink signal of the associated UE.

Measurement period of uplink reference signal: specifies the time interval for the access network device to perform uplink signal measurement, determining when the access network device conducts measurements and obtains measurement results.

Reporting configuration of uplink reference signal: specifies the reporting manner of measurement results, which can be event-triggered reporting or periodic reporting. Event-triggered reporting indicates that reporting is triggered when the measurement results meet a certain preset condition; periodic reporting indicates that measurement results are reported at fixed intervals.

In some embodiments, the access network device corresponding to the serving cell transmits the configuration of time-frequency resources for the uplink reference signal to the core network device. The core network device receives the configuration of time-frequency resources for the uplink reference signal and transmits it to the associated UE and/or the access network device corresponding to the neighboring cell.

In some embodiments, the access network device corresponding to the neighboring cell determines to monitor the uplink reference signal at an appropriate time based on the configuration of the time-frequency resources of the uplink reference signal.

Step 705: transmitting a transmission configuration of the uplink reference signal to the associated UE.

The uplink reference signal is used for the access network device corresponding to the serving cell to measure and transmit the first information to the core network device.

In some embodiments, the core network device transmits the transmission configuration of the uplink reference signal to the associated UE via the access network device, instructing the associated UE to transmit the uplink reference signal.

In some embodiments, the access network device corresponding to the serving cell transmits a second request to the access network device, requesting the configuration of the time-frequency resources for the uplink reference signal. After completing the configuration of the uplink reference signal, the access network device corresponding to the serving cell transmits the relevant configuration information to the associated UE. Illustratively, the transmission configuration may include at least one of the time-frequency resource location, frequency-domain resource location, transmission period, or type of the uplink reference signal.

Step 706: The core network device receives the second response from the access network device.

The second response includes configuration of time-frequency resources of an uplink reference signal.

In some embodiments, after receiving the second request from the core network device, the access network device corresponding to the serving cell transmits the second response to the core network device.

Step 707: The core network device transmits an activation indication to the access network device.

In some embodiments, the activation indication may be referred to as an activation request or an activation indication. The activation indication is used to activate the associated UE to transmit an uplink reference signal.

In some embodiments, in a case where the configuration of the uplink reference signal is a semi-static configuration or an aperiodic configuration, the core network device requests to activate the associated UE to transmit the uplink reference signal.

In some embodiments, the core network device generates a sensing activation request and transmits it to the access network device corresponding to the serving cell of the associated UE. The activation indication contains relevant information about the activation operation.

In some embodiments, the core network device transmits an activation indication to the access network device corresponding to the serving cell, and the access network device corresponding to the serving cell activates the associated UE to transmit an uplink reference signal according to the activation indication.

In some embodiments, after receiving the activation indication from the core network device, the access network device corresponding to the serving cell activates the uplink reference signal transmission of the associated UE via a Medium Access Control (MAC) Control Element (CE) in response to the request from the core network device.

In some embodiments, after receiving the activation indication forwarded by the access network device corresponding to the serving cell, the associated UE transmits the uplink reference signal according to the time-domain resource location in the configuration information of the uplink reference signal.

In some embodiments, the configuration information of the uplink reference signal includes at least one of: a time-domain resource location, a frequency-domain resource location, or a transmission period.

In some embodiments, the access network device corresponding to the serving cell transmits an activation indication acknowledgment message to the core network device.

In some embodiments, the access network device corresponding to the serving cell of the associated UE activates the uplink reference signal transmission of the associated UE via a MAC CE, and then transmits a sensing activation request acknowledgment message to the core network device. The acknowledgment message is used to reply to the sensing activation request from the core network device and inform the core network device of the execution status of the related operations.

In some embodiments, steps 705 and 706 may be performed after step 707. After the core network device transmits an activation indication to the access network device corresponding to the serving cell, the access network device corresponding to the serving cell transmits the transmission configuration of the uplink reference signal to the associated UE. The present disclosure does not impose any restrictions on the timing sequence of the steps.

Step 708: The core network device transmits the measurement configuration of the uplink reference signal to the access network device.

The measurement configuration of the uplink reference signal includes all or part of the information for the access network device to perform uplink reference signal measurement.

In some embodiments, the access network device corresponds to the neighboring cell.

In some embodiments, the measurement configuration of the uplink reference signal from the core network device to the access network device corresponding to the neighboring cell is the same as the measurement configuration determined by the access network device corresponding to the serving cell, or the measurement configuration of the uplink reference signal from the core network device to the access network device corresponding to the neighboring cell is different from the measurement configuration determined by the access network device corresponding to the serving cell.

When the measurement configuration of the uplink reference signal from the core network device to the access network device corresponding to the neighboring cell is different from the measurement configuration determined by the access network device corresponding to the serving cell, the core network device needs to transmit the measurement configuration of the uplink reference signal to the access network device corresponding to the serving cell.

In some embodiments, the measurement configuration of the uplink reference signal is generated based on the aforementioned configuration of the time-frequency resource. The access network device receives the measurement configuration of the uplink reference signal from the core network device. The measurement configuration of the uplink reference signal is the same as the configuration of the time-frequency resource, or the measurement configuration of the uplink reference signal is a subset of the configuration of the time-frequency resource, or the configuration of the time-frequency resource is a subset of the measurement configuration.

In some embodiments, the core network device receives the configuration of time-frequency resources for the uplink reference signal from the access network device corresponding to the serving cell, and determines the measurement configuration of the uplink reference signal based on the configuration of time-frequency resources. In some embodiments, in addition to at least one of the time-domain resource location, frequency-domain resource location, or spatial-domain resource location, the measurement configuration of the uplink reference signal further includes at least one of the measurement quantity, measurement period, or reporting configuration of the uplink reference signal.

In some embodiments, the measurement configuration of the uplink reference signal may be generated, added, or modified by the core network device based on the configuration of time-frequency resources. For example, if the configuration of time-frequency resources reported to the core network device by the access network device corresponding to the serving cell does not include information such as the measurement quantity, measurement period, and reporting configuration of the uplink reference signal, the core network device can generate information such as the measurement quantity, measurement period, and reporting configuration of the uplink reference signal. If the configuration of time-frequency resources reported to the core network device by the access network device corresponding to the serving cell and/or the access network device corresponding to the neighboring cell includes information such as the measurement quantity, measurement period, and reporting configuration of the downlink reference signal, the core network device may select part of the configuration of time-frequency resources, and supplement part of the configuration to form the measurement configuration, or modify part of the configuration of the time-frequency resources to generate the measurement configuration.

Step 709: The access network device measures the uplink reference signal transmitted by the associated UE according to the measurement configuration.

In some embodiments, measurement of the uplink reference signal is performed according to the measurement configuration. Specifically, the access network device corresponding to the serving cell performs measurement of the uplink reference signal transmitted by the associated UE according to the measurement configuration, and/or the access network device corresponding to the neighboring cell performs measurement of the uplink reference signal transmitted by the associated UE according to the measurement configuration.

In some embodiments, based on the measurement configuration information, the access network device corresponding to the serving cell and/or the access network device corresponding to the neighboring cell measures the uplink reference signal on the designated time-frequency resources. Optionally, the measurement may include measuring at least one indicator of the uplink reference signal, such as RSRP, RSRQ, SINR, etc.

In some embodiments, the access network device corresponding to the serving cell and/or the access network device corresponding to the neighboring cell perform measurements according to the measurement period in the measurement configuration, which may be based on a fixed period or event triggering.

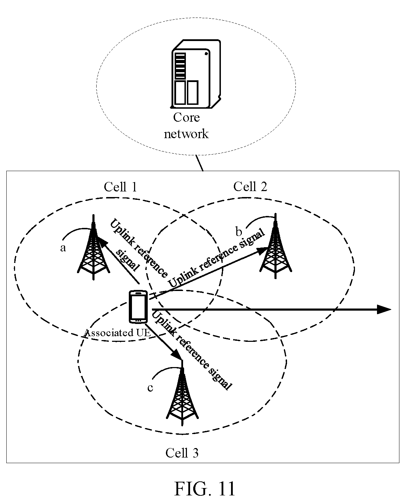

FIG. 11 illustrates a schematic diagram of a method for performing a sensing service according to some exemplary embodiments of the present disclosure. Access network device a is the access network device corresponding to the serving cell, while access network device b and access network device c are the access network devices corresponding to neighboring cells. The associated UE transmits uplink reference signals to access network device a corresponding to the serving cell, as well as to access network device b and access network device c corresponding to the neighboring cells. Access network device a corresponding to the serving cell, and access network device b and access network device c corresponding to the neighboring cells, measure the uplink reference signals according to the measurement configuration.

Step 710: The access network device transmits the second measurement result to the core network device.

In some embodiments, the second measurement result is the measurement result of the uplink reference signal of the associated UE as measured by the access network device.

In some embodiments, the access network device corresponding to the serving cell and the access network device corresponding to the neighboring cell obtain corresponding measurement results after performing measurements. Optionally, the second measurement result may include at least one of RSRP, RSRQ, SINR, or the like of the uplink reference signal of the serving cell and/or the neighboring cell.

In some embodiments, according to the reporting configuration in the measurement configuration, the access network device corresponding to the serving cell and/or the access network device corresponding to the neighboring cell may transmit the second measurement result to the core network device.

In some embodiments, the measurement configuration is event-triggered reporting, where the access network device immediately transmits the second measurement result to the core network device when the second measurement result meets a preset condition; or the measurement configuration is periodic reporting, where the access network device regularly transmits the second measurement result to the core network device at periodic intervals.

Step 711: The core network device determines whether to switch the sensing node based on the second measurement result from the access network device.

In some embodiments, the core network device may switch the sensing node based on the second measurement result of the uplink reference signal transmitted by the access network device corresponding to the serving cell and the access network device corresponding to the neighboring cell.

In some embodiments, the access network device corresponding to the serving cell and/or the access network device corresponding to the neighboring cell perform measurements of the uplink reference signal according to the measurement configuration, and report the second measurement result to the core network device. Optionally, the second measurement result includes at least one of RSRP, RSRQ, SINR, or the like of the downlink reference signal of the serving cell and/or the neighboring cell.

In some embodiments, the core network device evaluates the current network state based on the second measurement result and determines whether a switch of the sensing node is needed based on the current network state. For example, if the measurement result of the downlink reference signal of the serving cell is lower than the first condition and the measurement result of the downlink reference signal of the neighboring cell is higher than the second condition, the core network device switches the sensing node from the access network device corresponding to the serving cell to the access network device corresponding to the neighboring cell.

In some embodiments, after determining to switch to a sensing node, the core network device transmits a switching instruction to the access network device corresponding to the serving cell. This switching instruction informs the access network device corresponding to the serving cell to switch to the new sensing node. The access network device corresponding to the serving cell performs the switching operation according to the switching instruction, switching the sensing node from the current node to the new node. As shown in FIG. 11, the access network device a corresponding to the serving cell, along with the access network devices b and c corresponding to the neighboring cells, reports measurement results to the core network. The core network device determines whether to switch the sensing node based on these measurement results. Cell 1 is the serving cell of the associated UE, while cell 2 and cell 3 are the neighboring cells of the associated UE. If the measurement result of the uplink reference signal of cell 1 is below the first condition, and the measurement result of the uplink reference signal of cell 2 is above the second condition, the core network device switches the sensing node from the access network device a corresponding to the serving cell to the access network device b corresponding to the neighboring cell.

In summary, the method according to the embodiments of the present disclosure only requires the associated UE to transmit an uplink reference signal to the access network device, and the access network device corresponding to the serving cell and/or the access network device corresponding to the neighboring cell measure the uplink reference signal transmitted by the associated UE. This approach saves resource occupation on the air interface. Based on the uplink reference signal transmitted by the associated UE, the core network device can determine whether to switch the sensing node.

### Implementation manner 3: The associated UE measures a downlink reference signal

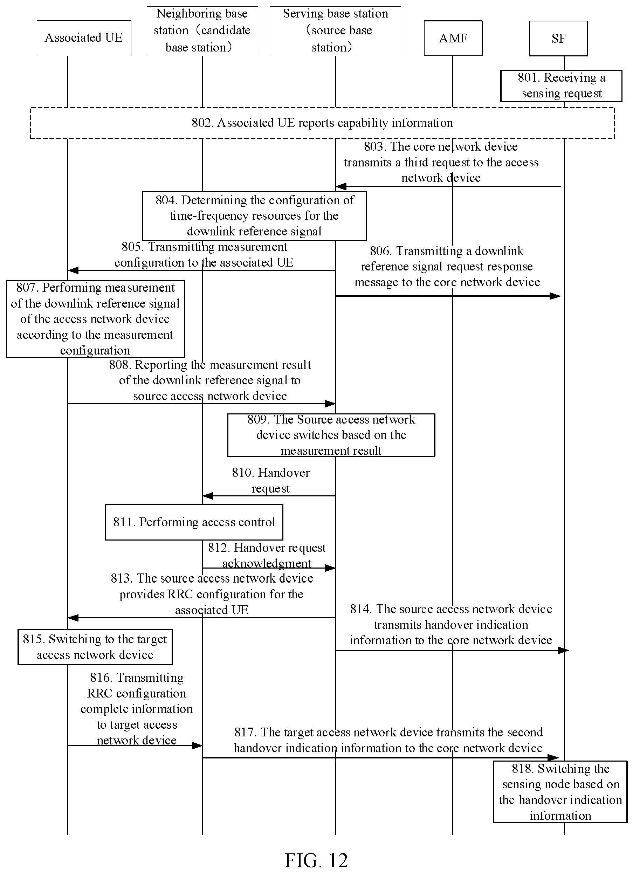

FIG. 12 illustrates a flowchart of a method for performing a sensing service according to some exemplary embodiments of the present disclosure, wherein a serving base station provides a serving cell of the associated UE, a neighboring base station provides a neighboring cell of the associated UE, and AMF and SF belong to network elements in the core network device responsible for sensing-related functions. The method is jointly performed by the core network device, the associated UE, and the access network device, and includes all or part of the following steps.

Step 801: The core network device receives a sensing request.

In some embodiments, upon receiving a sensing request, the core network device initiates a sensing session with the access network device, which is used to achieve continuity of sensing service for sensing target. The sensing request received by the core network device includes at least one of the following information or parameters:
·Type of sensing service: at least one of intrusion detection, weather monitoring, UAV recognition, or the like used to distinguish the service type information of sensing scenario use cases.
·Characteristics of the sensing service: at least one of periodicity, non-periodicity, event triggering, or the like.
·QoS requirements of the sensing service: at least one of location accuracy, speed accuracy, sensing resolution, maximum sensing service delay, refresh rate, confidence level, missed detection rate, false alarm rate, or other indicators.
·Indication information for sensing service continuity: It may be explicitly indicated in the sensing request that the sensing service needs to ensure sensing service continuity; or it may be indicated implicitly, for example, by indicating that the sensing service is periodic and has a high refresh rate requirement.
·Sensing target information: indicating that the sensing target is an active sensing target and/or indicating the ID information of the associated UE the sensing target.

In some embodiments, the core network device initiates a sensing session based on a sensing request, and implements sensing service for the sensing target through the sensing session, while further ensuring the continuity of the sensing service.

Step 802: The associated UE reports capability information.

In some embodiments, the core network device includes at least one of: an AMF for managing access, mobility, and other functions of associated UE, or an SF responsible for session management and control.

In some embodiments, the associated UE reports capability information to the access network device and/or the core network device based on a reporting request for capability information from the access network device and/or the core network device. The reporting request for capability information includes an indication that the associated UE provides capability information related to sensing service continuity.

Optionally, the access network device includes a source access network device and a target access network device. Taking the access network device as a base station as an example, the source access device is the base station currently connected to the associated UE, and the target access network device serves as a candidate base station to provide communication services for the associated UE.

In some embodiments, the associated UE of the sensing target may report capability information related to sensing service continuity to the access network device and the core network device. The reporting of capability information by the associated UE includes: the associated UE reports capability information to at least one of the source access network device, the target access network device, or the core network device.

The capability information is used to indicate whether the associated UE supports the capability associated with the first information.

In some embodiments, capability information includes the measurement capability of the associated UE for downlink reference signal. Specifically, the capability information includes the measurement capability of the associated UE for downlink reference signals from the access network device corresponding to the current serving cell, as well as the measurement capability for downlink reference signals from the access network device corresponding to neighboring cells. In some embodiments, the neighboring cell may be categorized into at least one of: an intra-frequency neighboring cell, an inter-frequency neighboring cell, or an inter-system neighboring cell. The measurement capabilities of the associated UE for downlink reference signals from the access network devices corresponding to neighboring cells includes at least one of: the measurement capability for a downlink reference signal from the intra-frequency neighboring cell, the measurement capability for a downlink reference signal from the inter-frequency neighboring cell, or the measurement capability for a downlink reference signal from the inter-system neighboring cell. As an example, the measurement capabilities of the associated UE for downlink reference signals includes at least one of the following capability parameters: whether measurement is supported, whether reporting is supported, which type of downlink reference signal is supported, whether intra-frequency measurement is supported, whether inter-frequency measurement is supported, whether inter-system measurement is supported, the shortest switching time for inter-frequency measurement, or the like.

In some embodiments, the capability information includes at least one of the measurement capability or reporting capability of the associated UE for the downlink reference signal.

Step 803: The core network device transmits a third request to the access network device.

The third request is used to instruct the source access network device to provide the core network device with the auxiliary information required for switching the sensing node.

In some embodiments, upon receiving the third request from the core network device, the source access network device provides auxiliary information for the switching of the sensing node to the core network device.

In some embodiments, the auxiliary information may include at least one of the following items.
·Switching type: indicates the type of switching, such as sensing node switching.
·Switching target: indicates the target sensing node (target access network device) for switching.
·Switching parameters: includes the parameters required for switching, such as the switching trigger condition and switching timing.

Step 804: The access network device determines the configuration of time-frequency resources for the downlink reference signal.

In some embodiments, the access network determines the configuration of time-frequency resources for the downlink reference signal, including: determining the configuration of time-frequency resources for the downlink reference signal by both the source access network device and the target access network device.

In some embodiments, the downlink reference signal may be at least one of reference signals such as DL Sensing RS, PRS, SSB, or CSI-RS.

In some embodiments, the downlink reference signal is determined by both the source access network device and the target access network device. After their respective determinations, the source and target access network devices transmit the downlink reference signal to the associated UE. This downlink reference signal is used by the associated UE to perform measurements related to sensing service continuity.

In some embodiments, after determining the time-frequency resource configuration for the downlink reference signal, the target access network device transmits the configuration of the time-frequency resources to the source access network device, for example, via the Xn interface between the target access network device and the source access network device.

Step 805: The access network device transmits measurement configuration to the associated UE.

In some embodiments, the source access network device transmits the measurement configurations of the downlink reference signals for both the serving cell and the neighboring cell (including the target cell) to the associated UE together.

In some embodiments, after determining the configuration of time-frequency resources for the downlink reference signal of the neighboring cell, the target access network device transmits the configuration of the time-frequency resources for the downlink reference signal of the neighboring cell to the source access network device. The source access network device can generate the measurement configuration of the downlink reference signal of the neighboring cell based on the configuration of the time-frequency resources.

In some embodiments, the measurement configuration of the downlink reference signal of the neighboring cell can be generated, added, or modified based on the configuration of time-frequency resources. For example, if the configuration of time-frequency resources transmitted by the access network device corresponding to the neighboring cell to the source access network device does not include information such as the measurement quantity, measurement period, and reporting configuration of the downlink reference signal, the source access network device can generate information such as the measurement quantity, measurement period, and reporting configuration of the downlink reference signal. If the configuration of time-frequency resources transmitted by the access network device corresponding to the neighboring cell to the source access network device includes information such as the measurement quantity, measurement period, and reporting configuration of the downlink reference signal, the source access network device may select part of the configuration of the time-frequency resources, and supplement the remaining configuration to form the measurement configuration for the neighboring cell, or modify part of the configuration of the time-frequency resources to generate the measurement configuration for the neighboring cell.

Optionally, the source access network device may transmit the measurement configurations for the downlink reference signals of the serving cell and the neighboring cell together to the associated UE. Alternatively, the source access network device may transmit the measurement configurations for the downlink reference signals of the serving cell and the neighboring cell separately in different signaling messages to the associated UE.

In some embodiments, the source access network device transmits measurement configuration information to the associated UE via RRC signaling.

In some embodiments, the measurement configuration includes at least one of a measurement object, a reporting configuration, a measurement identifier, a measurement interval, or the like.

Step 806: The access network device transmits a downlink reference signal request response message to the core network device.

In some embodiments, the source access network device transmits a downlink reference signal request response message to the core network device to facilitate coordination and interaction with the core network device, ensuring the normal operation of the sensing service.

Step 807: The associated UE performs measurement of the downlink reference signal of the access network device according to the measurement configuration.

In some embodiments, the associated UE performs measurements of the downlink reference signal of the access network device according to the measurement configuration, that is, the associated UE performs measurements of the downlink reference signal of the serving cell and/or neighboring cells according to the measurement configuration information. The associated UE measures the downlink reference signal of the connected serving cell to evaluate the signal quality and strength of the serving cell. The associated UE measures the downlink reference signal of the neighboring cell to obtain information about the signal quality and strength of the neighboring cell.

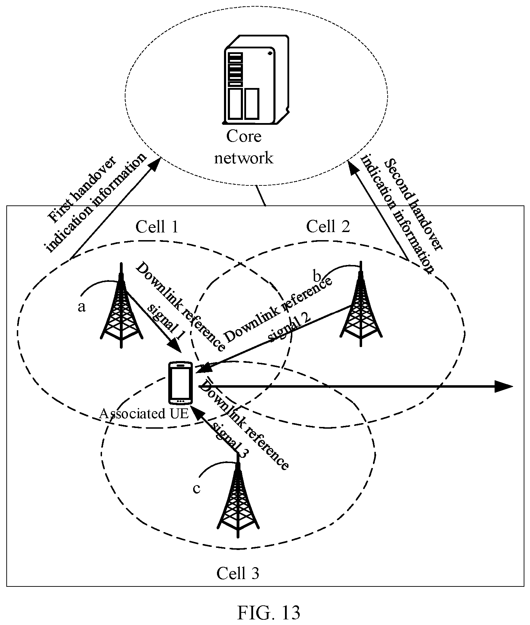

FIG. 13 illustrates a schematic diagram of a method for performing a sensing service according to some exemplary embodiments of the present disclosure. Access network device a is the access network device corresponding to the serving cell, while access network devices b and c are the access network devices corresponding to neighboring cells. The associated UE measures, according to the measurement configuration, the downlink reference signal 1 transmitted by the access network device corresponding to the serving cell, as well as the downlink reference signals 2 and 3 transmitted by the access network devices corresponding to the neighboring cells. The associated UE reports the measurement results of downlink reference signal 1, downlink reference signal 2, and downlink reference signal 3 to the access network device a corresponding to the serving cell.

Step 808: The associated UE reports the measurement result of the downlink reference signal to the access network device.

In some embodiments, the associated UE reports the measurement results of the downlink reference signals of the serving cell and/or neighboring cells to the source access network device. These measurement results may include at least one of the RSRP, RSRQ, SINR, or the like of the downlink reference signals of the serving cell and/or neighboring cells.

Step 809: The access network device switches based on the measurement result.

In some embodiments, the source access network device switches to the target access network device based on the measurement result.

In some embodiments, the associated UE reports the measurement result of the downlink reference signal to the source access network device. The source access network device analyzes the measurement results reported by the associated UE, including at least one of the information such as RSRP, RSRQ, or SINR of the downlink reference signal of the neighboring cell, as well as at least one of the information such as RSRP, RSRQ, or SINR of the downlink reference signal of the current serving cell. The measurement results can be used to evaluate the performance of the current serving cell and the availability of the neighboring cell.

In some embodiments, the source access network device determines whether a switching is needed and to which target access network device based on the analysis of measurement result and a preset handover strategy. Optionally, the preset handover strategy can be based on different indicators, such as switching based on at least one of the indicators of downlink reference signal, such as RSRP, RSRQ, SINR, or the like.

Step 810: The source access network device transmits a handover request.

In some embodiments, when the source access network device determines to switch to the target access network device, the source access network device transmits a handover request to the target access network device via the Xn interface.

As shown in FIG. 13, after receiving the measurement results of downlink reference signal 1, downlink reference signal 2, and downlink reference signal 3 reported by the associated UE, if the measurement result of downlink reference signal 1 of the serving cell is lower than the first condition and the measurement result of downlink reference signal 2 of the neighboring cell is higher than the second condition, the access network device a corresponding to the serving cell determines to switch the associated UE to the access network device b corresponding to the neighboring cell. At this time, the access network device a corresponding to the serving cell transmits a handover request to the access network device b corresponding to the neighboring cell through the Xn interface. The access network device a corresponding to the serving cell transmits the first handover indication information to the core network device in advance to inform the core network device that the associated UE has undergone cell handover.

Step 811: The target access network device performs access control.

In some embodiments, upon receiving the handover request from the source access network device, the target access network device performs access control and provides a new RRC configuration for the associated UE.

In some embodiments, the target access network device provides the associated UE with a new RRC configuration as part of the handover request acknowledgement message, that is, the target access network device forwards the new RRC configuration for the associated UE via the source access network device.

Step 812: The target access network device transmits a handover request acknowledgment to the source access network device.

In some embodiments, after receiving the handover request from the source access network device, the target access network device transmits the acknowledgment message for the handover request to the source access network device.

Step 813: The source access network device provides RRC configuration for the associated UE.

In some embodiments, the source access network device receives the acknowledgment message for the handover request from the target access network device. This acknowledgment message for the handover request includes the new RRC configuration provided by the target access network device for the associated UE. The source access network device forwards this RRC configuration to the associated UE, so that the associated UE can update its own RRC configuration.

Optionally, the new RRC configuration may include at least one of the following configurations.
·Frequency and channel configuration: The target access network device specifies the frequency and channel resources that the associated UE needs to use for communication, including at least one of the information such as downlink frequency, uplink frequency, or physical channel type.
·Power control configuration: The target access network device configures power control parameters of the associated UE to ensure that the power level is maintained during communication after handover.

Step 814: The source access network device transmits the first handover indication information to the core network device.

The first handover indication information is used to indicate relevant information of a cell handover event of an associated UE.

In an optional example, the first handover indication information includes at least one of: UE identifier of the associated UE; cell identity of the target cell;·or session identifier of the sensing session associated with the associated UE.

In some embodiments, the first handover indication information includes the UE identifier of the associated UE. The UE identifier of the associated UE is information used to uniquely identify the associated UE. The UE identifier may be at least one of the UE Application Layer ID, Subscription Permanent Identifier (SUPI), Subscription Concealed Identifier (SUCI), 5G Globally Unique Temporary Identifier (5G-GUTI), etc. Through the UE identifier of the associated UE, the core network device can identify the associated UE and perform corresponding processing.

In some embodiments, the first handover indication information includes the cell identity of the target cell. The cell identity of the target cell is the identifier information indicating the target cell to which the associated UE is to be handed over. The cell identity of the target cell may be at least one of Cell Global Identity (CGI), Physical Layer Identity (PCI), or the like. Through the target cell identity, the core network device can know which cell the associated UE is about to be handed over to, and make corresponding handover decisions and configuration updates.

In some embodiments, the first handover indication information includes the session identifier of the sensing session associated with the associated UE. The session identifier of the sensing session associated with the associated UE is information used to identify different sensing service sessions, such as Sensing Session ID. Through the session identifier of the sensing session, the core network device can associate the handover indication with the sensing service and perform corresponding processing.

In some embodiments, the source access network device transmits the first handover indication information to the core network device, notifying the core network device that the associated UE has undergone a cell handover, where the associated UE is handed over from the source cell to the target cell (i.e., the serving cell is handed over to the neighboring cell). The core network device receives the first handover indication information from the source access network device, wherein the first handover indication information assists the core network device in making a switching decision for the sensing node and ensures the smooth progress of the switching process.

Step 815: The associated UE switches the RRC connection to the target access network device.

In some embodiments, the associated UE switches the RRC connection to the target access network device and communicates with the target access network device.

Step 816: The associated UE transmits RRC configuration complete information to the target access network device.

In some embodiments, after the associated UE switches to the target access network device and completes the RRC connection reconfiguration, the associated UE transmits RRC configuration completion information to the target access network device. The RRC configuration completion information is a signal from the associated UE to the target access network device to confirm that the RRC reconfiguration has been completed.

In some embodiments, the RRC configuration complete message is used to confirm that a new RRC connection has been established and is ready for normal use. This can assist the target access network device in verifying whether the associated UE has successfully switched to the target cell and is prepared for communication within the target cell.

Step 817: The target access network device transmits the second handover indication information to the core network device.

The second handover indication information is used to indicate relevant information of a cell handover event of the associated UE.

In an optional example, the second handover indication information includes at least one of: UE identifier of the associated UE; cell identity of the source cell; or session identifier of the sensing session associated with the associated UE.

In some embodiments, the second handover indication information includes the UE identifier of the associated UE. The UE identifier of the associated UE is information used to uniquely identify the associated UE, and the UE identifier may be at least one of the Application Layer ID, SUPI, SUCI, 5G-GUTI, or the like of the associated UE. Through the UE identifier of the associated UE, the core network device can identify the associated UE and perform corresponding processing.

In some embodiments, the second handover indication information includes the cell identity of the source cell. The cell identity of the source cell is identification information indicating the source cell of the associated UE before the handover. The cell identity of the source cell may be at least one of CGI, PCI, or the like. The core network device may use the cell identity of the source cell to determine the cell where the UE was located before the handover and perform configuration updates on the serving cell after the handover.

In some embodiments, the second handover indication information includes the session identifier of the sensing session associated with the associated UE, which is information used to identify different sensing service sessions, such as Sensing Session ID. Through the session identifier of the sensing session, the core network device can associate the handover indication with the sensing service and perform corresponding processing.

In some embodiments, the target access network device transmits second handover indication information to the core network device, notifying the core network device that the associated UE has undergone a cell handover, where the associated UE switches from the source cell to the target cell (i.e., the serving cell switches to a neighboring cell). The core network device receives the second handover indication information from the target access network device, wherein the second handover indication information assists the core network device in making a switching decision for the sensing node and ensures the smooth progress of the switching process.

Step 818: The core network device switches the sensing node based on the handover indication information.

In some embodiments, the core network device can switch the sensing node based on the first handover indication information from the source access network device and the second handover indication information from the target access network device.

In some embodiments, the first handover indication information includes at least one of the UE identifier of the associated UE, the cell identity of the target cell, or the session identifier of the sensing session associated with the associated UE. The second handover indication information includes at least one of the UE identifier of the associated UE, the cell identity of the source cell, or the session identifier of the sensing session associated with the associated UE.

In some embodiments, the core network device makes a switching decision based on the first handover indication information and the second handover indication information. Optionally, the core network device can coordinate the switching of the sensing node, switching the sensing node from the current node (source access network device) to a new node (target access network device), thereby optimizing the process of performing the sensing service. As shown in FIG. 13, Cell 1 is the serving cell of the associated UE, and cell 2 is the neighboring cell of the associated UE. The access network device a corresponding to the serving cell hands over the associated UE to the access network device b corresponding to the neighboring cell based on the measurement results of downlink reference signal 1, downlink reference signal 2, and downlink reference signal 3. The access network device a corresponding to the serving cell transmits the first handover indication information to the core network device. After the serving cell of the associated UE is successfully switched from cell 1 to cell 2, the access network device b corresponding to the neighboring cell transmits the second handover indication information to the core network device. Based on the first handover indication information and the second handover indication information, the core network device switches the sensing node from the access network device a corresponding to the serving cell to the access network device b corresponding to the neighboring cell.

It should be noted that in one possible implementation, the steps shown in FIG. 8 can be combined with the steps shown in FIG. 10 to form new embodiments, or the steps shown in FIG. 8 can be combined with the steps shown in FIG. 12 to form new embodiments, or the steps shown in FIG. 10 can be combined with the steps shown in FIG. 12 to form new embodiments, or the steps shown in FIG. 8 can be combined with the steps shown in FIG. 10 and the steps shown in FIG. 12 to form new embodiments. This is not further elaborated herein.

In summary, in the method according to the embodiments of the present disclosure, the access network device reports to the core network device based on measurement results reported by the associated UE. The core network device switches the sensing node according to the indication of the cell handover event, without transmitting a large amount of data, which can effectively save resource occupation of the air interface. Compared to transmitting a large amount of data, a small number of bits for the cell handover event have a faster transmission speed and higher success rate, which can promptly notify the core network device to perform the handover, thereby ensuring the continuity and real-time performance of the sensing service.

In some embodiments, the access network device determines whether to switch the sensing node based on the first information from the associated UE or terminal device. The first information indicates information related to the mobility of the associated UE, assisting the access network device in deciding the switching of sensing service among different sensing nodes. The reporting manner of the first information includes, but is not limited to, at least one of the following two Implementation manners (the order does not indicate the superiority or inferiority of the Implementation manners).

Implementation manner 1: The associated UE measures a sidelink reference signal.

Implementation manner 2: The associated UE transmits a sidelink reference signal.

It should be noted that in the embodiments of the present disclosure, "sensing" can be equated with or replaced by at least one of: localization, range measurement, speed measurement, angle measurement, target imaging, target detection, target tracking, or target identification.

The two Implementation manners are introduced respectively as follows.

### Implementation manner 1: The associated UE measures a sidelink reference signal

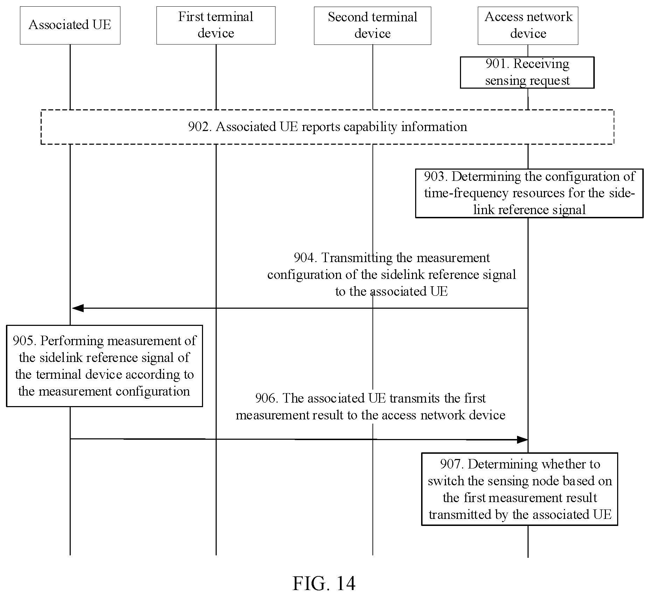

FIG. 14 illustrates a flowchart of a method for performing a sensing service according to some exemplary embodiments of the present disclosure. The method is jointly performed by an access network device, a terminal device, and an associated UE. The method includes all or part of the following steps.

Step 901: The access network device receives a sensing request.

In some embodiments, upon receiving a sensing request, the access network device initiates a sensing session with the terminal device, which is used to implement a sensing service for a sensing target. The sensing request received by the access network device includes at least one of the following information or parameters.
·Type of sensing service: at least one of intrusion detection, weather monitoring, UAV recognition, or the like used to distinguish the service type information of sensing scenario use cases.
·Characteristics of the sensing service: at least one of periodicity, non-periodicity, event triggering, or the like.
·QoS requirements of the sensing service: at least one of location accuracy, speed accuracy, sensing resolution, maximum sensing service delay, refresh rate, confidence level, missed detection rate, false alarm rate, or other indicators.
·Indication information for sensing service continuity: It may be explicitly indicated in the sensing request that the sensing service needs to ensure sensing service continuity; or it may be indicated implicitly, for example, by indicating that the sensing service is periodic and has a high refresh rate requirement.
·Sensing target information: indicating that the sensing target is an active sensing target, and/or indicating the ID information of the associated UE of the sensing target.

In some embodiments, the core network device initiates a sensing session based on a sensing request, and implements a sensing service for the sensing target through the sensing session, further ensuring the continuity of the sensing service.

In some embodiments, the sensing request may be a request from any of the associated UE, the access network device, or the terminal device.

Step 902: The associated UE reports capability information.

In some embodiments, the associated UE reports capability information to the access network device/or terminal device based on the reporting request for capability information from the access network device/or terminal device. The reporting request for capability information includes an indication that the associated UE provides capability information related to sensing service continuity.

In some embodiments, the associated UE of the sensing target may report capability information related to sensing service continuity to the access network device and the terminal device. The reporting of capability information by the associated UE includes: the associated UE reports capability information to the access network device and/or the terminal device.

The capability information is used to indicate whether the associated UE supports the capability associated with the first information. For example, the capability information is used to indicate whether the associated UE supports at least one of the measurement capability, generation capability, or reporting capability associated with the first information.

In some embodiments, the capability information includes the measurement capability of the associated UE for the sidelink reference signal. Optionally, the capability information includes the measurement capability of the associated UE for the sidelink reference signal transmitted by the terminal device.

In some embodiments, the measurement capability of the associated UE for sidelink reference signal includes at least one of the capability parameters, such as whether the associated UE supports measurement, whether the associated UE supports reporting, and which type of sidelink reference signal the associated UE supports.

In some embodiments, the capability information includes at least one of the measurement capability or reporting capability of the associated UE for the sidelink reference signal.

Step 903: The access network device determines the configuration of time-frequency resources for the side-link reference signal.

The sidelink reference signal is a reference signal used to measure the channel state between the terminal device and the associated UE. In some embodiments, the sidelink reference signal may be at least one of DM-RS, Phase Tracking Reference Signal (PT-RS), CSI-RS, or other reference signals.

In some embodiments, upon receiving a sensing request from a terminal device, the access network device determines the configuration of time-frequency resources for the side-link reference signal based on the current network status and wireless resource conditions.

In some embodiments, the access network device determines the configuration of time-frequency resources for the sidelink reference signal based on the current network status and resource conditions, that is, determines at least one of the time-domain resource location, frequency-domain resource location, or spatial-domain resource location of the sidelink reference signal. Optionally, the configuration of time-frequency resources further includes reporting configuration.

In some embodiments, in addition to at least one of time-domain resource location, frequency-domain resource location, or spatial-domain resource location, the configuration of time-frequency resources for sidelink reference signals further includes at least one of the measurement quantity, measurement period, reporting configuration, or the like of sidelink reference signals.

Measurement quantity of sidelink reference signal: used to specify at least one parameter to be measured, such as subcarrier spacing, waveform, etc.
·Measurement period of sidelink reference signal: specifies the time interval for the associated UE to measure the sidelink reference signal and provide feedback.
·Reporting configuration of sidelink reference signal: determines the reporting manner of measurement results, including event-triggered reporting and periodic reporting. Event-triggered reporting refers to triggering reporting when the measurement results meet a certain preset condition; periodic reporting involves reporting measurement results at fixed intervals.

Step 904: The access network device provides the measurement configuration of the sidelink reference signal to the associated UE.

The measurement configuration of the sidelink reference signal is the measurement configuration of the sidelink reference signal between the associated UE and the terminal device.

In some embodiments, the access network device provides the measurement configuration of the sidelink reference signal to the associated UE, including: providing, by the access network device to the associated UE, the measurement configuration for the terminal device that performs sidelink reference signal transmission with the associated UE.

In some embodiments, the measurement configuration of the sidelink reference signal is generated based on the configuration of time-frequency resources. The measurement configuration of the sidelink reference signal is the same as the configuration of time-frequency resources, or the measurement configuration of the sidelink reference signal is a subset of the configuration of time-frequency resources, or the configuration of time-frequency resources is a subset of the measurement configuration.

In some embodiments, the measurement configuration of the sidelink reference signal includes at least one of the measurement quantity, measurement period, or reporting configuration of the sidelink reference signal, in addition to at least one of the time-domain resource location, frequency-domain resource location, or spatial-domain resource location.

In some embodiments, the measurement configuration of the sidelink reference signal may be generated, added, or modified by the access network device based on the configuration of time-frequency resources. When generating the measurement configuration, the access network device can directly use the configuration of time-frequency resources as the measurement configuration, or select a portion of the configuration of time-frequency resources to add to the measurement configuration and then supplement the remaining configuration, or modify a portion of the configuration of time-frequency resources to generate the measurement configuration, etc. There are no limitations on these methods.

Step 905: The associated UE performs measurement of the sidelink reference signal of the terminal device according to the measurement configuration.

In some embodiments, the associated UE performs measurements of the sidelink reference signal of the terminal device according to the measurement configuration received from the access network device.

In some embodiments, the associated UE performs measurement of the sidelink reference signal according to the measurement configuration. The associated UE monitors and measures the sidelink reference signal based on the time-domain resource location and frequency-domain resource location specified in the measurement configuration. Optionally, the measurements include measuring at least one indicator such as the frequency range, subcarrier spacing, or waveform of the sidelink reference signal.

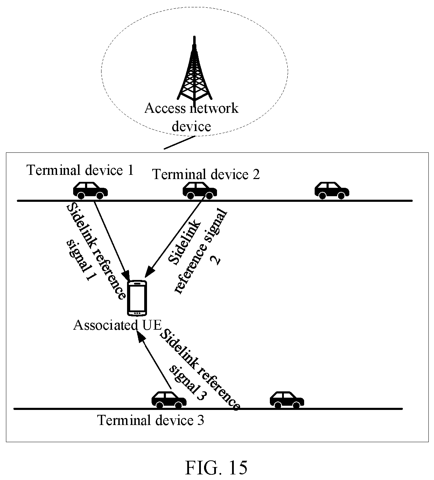

FIG. 15 illustrates a schematic diagram of a method for performing a sensing service according to some exemplary embodiments of the present disclosure. Terminal device 1, terminal device 2, and terminal device 3 engage in a sensing session with an associated UE. The associated UE measures, according to the measurement configuration, the sidelink reference signal 1 between the associated UE and terminal device 1, the sidelink reference signal 2 between the associated UE and terminal device 2, and the sidelink reference signal 3 between the associated UE and terminal device 3, respectively.

Step 906: The associated UE transmits the first measurement result to the access network device.

The first measurement result is the measurement result of the sidelink reference signal between the associated UE and the terminal device.

In some embodiments, the associated UE may obtain a first measurement result after performing measurement of the sidelink reference signal. Optionally, the first measurement result may include at least one of the frequency range, subcarrier spacing, waveform, or the like of the sidelink reference signal.

Optionally, when the associated UE reports the first measurement result to the access network device, the associated UE may select at least one of the following methods: reporting its own position information to the access network device in advance, reporting its own position information to the access network device in real time, or reporting its own position information to the access network device periodically. Optionally, the access network device can perform resource scheduling and optimization based on the position information of the associated UE. For example, based on the position of the associated UE, the access network device can select the optimal base station to connect with the associated UE, adjust power allocation, and provide better signal coverage and service quality for the associated UE.

In some embodiments, according to the reporting configuration in the measurement configuration, the associated UE can transmit the first measurement result to the access network device. Optionally, if the measurement configuration is event-triggered reporting, the associated UE transmits the first measurement result to the access network device when the first measurement result meets a preset condition; or if the measurement configuration is periodic reporting, the associated UE can regularly transmit the first measurement result to the access network device at periodic intervals. The first measurement result can be provided to the access network device as a basis for determining the continuity of the sensing service.

In some embodiments, when the associated UE is within the coverage range of the access network device, the associated UE can directly report the first measurement result to the access network device. In some embodiments, when the associated UE is not within the coverage range of the access network device, the terminal device can be used as a relay device to forward the first measurement result to the access network device via the relay device.

Step 907: The access network device determines whether to switch the sensing node based on the first measurement result transmitted by the associated UE.

In some embodiments, the access network device can switch the sensing node based on the first measurement result of the sidelink reference signal transmitted by the associated UE.

In some embodiments, the access network device evaluates the current network state based on the first measurement result and determines whether a switch of the sensing node is needed based on the current network state. For example, if the measurement result of the sidelink reference signal of the first terminal device is below the first condition and the measurement result of the sidelink reference signal of the second terminal device is above the second condition, the access network device switches the sensing node from the first terminal device to the second terminal device.

As shown in FIG. 15, the associated UE reports the measurement results of sidelink reference signal 1 between the associated UE and terminal device 1, sidelink reference signal 2 between the associated UE and terminal device 2, and sidelink reference signal 3 between the associated UE and terminal device 3 to the access network device. The access network device determines whether to switch the sensing node based on these measurement results. If the measurement result of sidelink reference signal 1 is below the first condition and the measurement result of sidelink reference signal 2 is above the second condition, the core network device switches the sensing node from terminal device 1 to terminal device 2.

In summary, in the method according to the embodiments of the present disclosure, the associated UE is not required to transmit signals. The associated UE only needs to measure the sidelink reference signal between the associated UE and the terminal device. When the sensing target is a battery-powered mobile device, this approach saves power for the associated UE. By reducing the frequency of active signal transmission by the associated UE, the battery power can be utilized more efficiently, extending the usage time and improving the endurance of the associated UE. Based on the sidelink reference signal measured by the associated UE, the access network device can decide whether to switch the sensing node.

### Implementation manner 2: The associated UE transmits sidelink reference signal

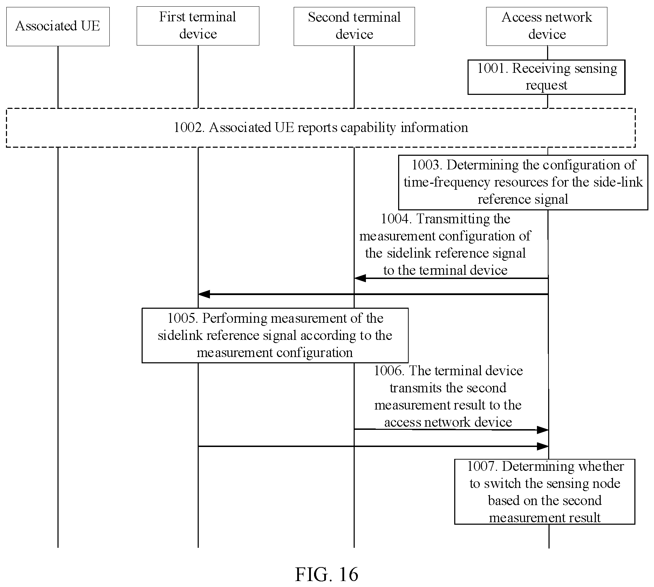

FIG. 16 illustrates a flowchart of a method for performing a sensing service according to some exemplary embodiments of the present disclosure. The method is jointly performed by an access network device, a terminal device, and an associated UE. The method includes all or part of the following steps.

Step 1001: The access network device receives a sensing request.

In some embodiments, upon receiving a sensing request, the access network device initiates a sensing session with the terminal device, wherein the sensing session is used to implement a sensing service for a sensing target. The sensing request received by the access network device includes at least one of the following information or parameters.
·Type of sensing service: at least one of intrusion detection, weather monitoring, UAV recognition, or the like used to distinguish the service type information of sensing scenario use cases.
·Characteristic of the sensing service: at least one of periodicity, non-periodicity, event triggering, or the like.
·QoS requirements of the sensing service: at least one of location accuracy, speed accuracy, sensing resolution, maximum sensing service delay, refresh rate, confidence level, missed detection rate, false alarm rate, or other indicators.
· Indication information for sensing service continuity: It may be explicitly indicated in the sensing request that the sensing service needs to ensure the sensing service continuity; or it may be indicated implicitly, for example, by indicating that the sensing service is periodic and has a high refresh rate requirement.
·Sensing target information: indicating that the sensing target is an active sensing target, and/or indicating the ID information of the associated UE of the sensing target.

In some embodiments, the core network device initiates a sensing session based on a sensing request, implements the sensing service for the sensing target through the sensing session, and further ensures the continuity of the sensing service.

In some embodiments, the sensing request may be a request from any of the associated UE, the access network device, or the terminal device.

Step 1002: The associated UE reports capability information.

In some embodiments, the associated UE reports capability information to the access network device/or terminal device based on the reporting request for capability information of the access network device/or terminal device. The reporting request for capability information includes an indication that the associated UE provides capability information related to sensing service continuity.

In some embodiments, the associated UE of the sensing target can report capability information related to the continuity of sensing service to the access network device and the terminal device. The reporting of capability information by the associated UE includes: the associated UE reports capability information to the access network device and/or the terminal device.

The capability information is used to indicate whether the associated UE supports the capability associated with the first information. For example, the capability information is used to indicate whether the associated UE supports at least one of the measurement capability, generation capability, or reporting capability associated with the first information.

In some embodiments, the capability information includes the transmission capability of the associated UE for sidelink reference signals. Optionally, the capability information includes the capability of the associated UE to transmit a sidelink reference signal to the terminal device. The transmission capability includes at least one of whether the transmission of a sidelink reference signal is supported, what type of sidelink reference signal is supported for transmission, the supported frequency range for transmission, or the supported maximum transmit power.

Step 1003: The access network device determines the configuration of time-frequency resources for the side-link reference signal.

The sidelink reference signal is a reference signal used to measure the channel state between the terminal device and the associated UE. In some embodiments, the sidelink reference signal can be at least one of DM-RS, PT-RS, CSI-RS, or other reference signals.

In some embodiments, upon receiving a sensing request from a terminal device, the access network device determines the configuration of time-frequency resources for the side-link reference signal based on the current network status and wireless resource conditions.

In some embodiments, the access network device determines the configuration of time-frequency resources for the sidelink reference signal based on the current network status and resource conditions, that is, determines at least one of the time-domain resource location, frequency-domain resource location, or spatial-domain resource location of the sidelink reference signal. Optionally, the configuration of time-frequency resources further includes reporting configuration.

In some embodiments, in addition to at least one of time-domain resource location, frequency-domain resource location, or spatial-domain resource location, the configuration of time-frequency resources for the sidelink reference signal further includes at least one of measurement quantity, measurement period, reporting configuration, or the like for the sidelink reference signal.

Measurement quantity of sidelink reference signal: used to specify at least one parameter to be measured, such as subcarrier spacing, waveform, or the like.

Measurement period of sidelink reference signal: specifies the time interval for the terminal device to measure the sidelink reference signal and provide feedback.

Reporting configuration of sidelink reference signal: determines the reporting manner of measurement results, including event-triggered reporting and periodic reporting. Event-triggered reporting refers to triggering reporting when the measurement result meets a certain preset condition; periodic reporting involves reporting measurement results at fixed intervals.

Step 1004: The access network device provides the measurement configuration of the sidelink reference signal to the terminal device.

The measurement configuration of the sidelink reference signal is the measurement configuration of the sidelink reference signal between the associated UE and the terminal device.

In some embodiments, the access network device provides the terminal device with measurement configuration of the sidelink reference signal, including: providing measurement configuration for sidelink reference signal transmission with associated UE.

In some embodiments, the measurement configuration of the sidelink reference signal is generated based on the configuration of time-frequency resources. The measurement configuration of the sidelink reference signal is either the same as the configuration of time-frequency resources, or the measurement configuration of the sidelink reference signal is a subset of the configuration of time-frequency resources, or the configuration of time-frequency resources is a subset of the measurement configuration.

In some embodiments, the measurement configuration of the sidelink reference signal includes at least one of the measurement quantity, measurement period, or reporting configuration of the sidelink reference signal, in addition to at least one of the time-domain resource location, frequency-domain resource location, or spatial-domain resource location.

In some embodiments, the measurement configuration of the sidelink reference signal can be generated, added, or modified by the access network device based on the configuration of time-frequency resources. When generating the measurement configuration, the access network device can directly use the configuration of time-frequency resources as the measurement configuration, or select part of the configuration of time-frequency resources to add to the measurement configuration and then supplement the remaining configurations, or modify part of the configuration of time-frequency resources to generate the measurement configuration, etc. There are no limitations on these methods.

Step 1005: The terminal device performs measurement of the sidelink reference signal of the associated UE according to the measurement configuration.

In some embodiments, the terminal device performs measurement of the sidelink reference signal of the associated UE according to the measurement configuration received from the access network device.

In some embodiments, the terminal device performs measurement of the sidelink reference signal according to the measurement configuration. The terminal device monitors and measures the sidelink reference signal based on the time-domain resource location and frequency-domain resource location specified in the measurement configuration. Optionally, the measurements include measuring at least one indicator such as the frequency range, subcarrier spacing, waveform, or the like of the sidelink reference signal.

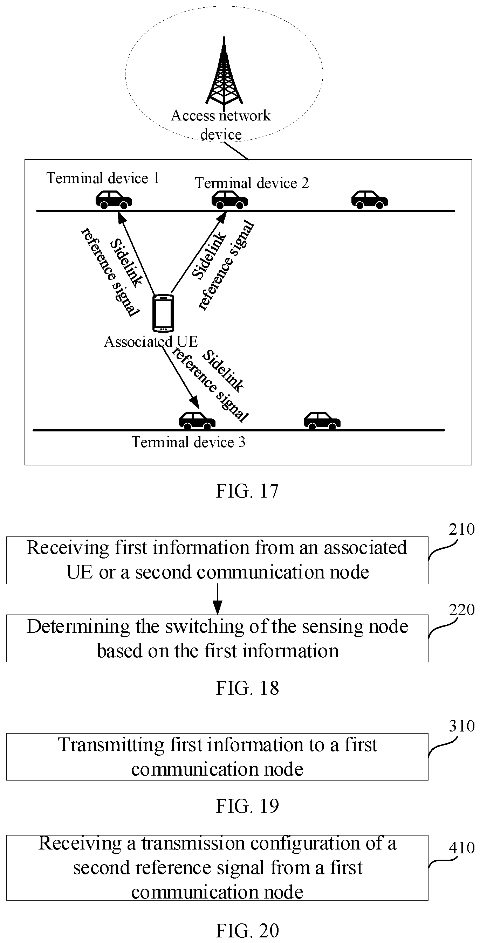

FIG. 17 illustrates a schematic diagram of a method for performing a sensing service according to some exemplary embodiments of the present disclosure. Terminal device 1, terminal device 2, and terminal device 3 engage in a sensing session with an associated UE, and each of these devices measures the sidelink reference signal between them and the associated UE.

Step 1006: The terminal device transmits the second measurement result to the access network device.

The second measurement result is the measurement result of the sidelink reference signal between the associated UE and the terminal device.

In some embodiments, the terminal device may obtain a second measurement result after performing measurement of the sidelink reference signal. Optionally, the second measurement result may include at least one of the frequency range, subcarrier spacing, waveform, or the like of the sidelink reference signal.

Optionally, when reporting the second measurement result to the access network device, the terminal device may select at least one of the following methods: reporting its own position information to the access network device in advance, reporting its own position information to the access network device in real time, or reporting its own position information to the access network device periodically. Optionally, the access network device can perform resource scheduling and optimization based on the position information of the terminal device. For example, based on the position of the terminal device, the access network device can select the optimal base station to connect with the terminal device, adjust power allocation, and provide better signal coverage and service quality for the terminal device.

In some embodiments, according to the reporting configuration in the measurement configuration, the terminal device can transmit the second measurement result to the access network device. Optionally, the measurement configuration is event-triggered reporting, and when the second measurement result meets a preset condition, the terminal device transmits the second measurement result to the access network device; or the measurement configuration is periodic reporting, and the terminal device can regularly transmit the second measurement result to the access network device at periodic intervals. The second measurement result can be provided to the access network device as a basis for determining the continuity of the sensing service.

Step 1007: The access network device determines whether to switch the sensing node based on the second measurement result from the terminal device.

In some embodiments, the access network device can switch the sensing node based on the second measurement result of the sidelink reference signal from the terminal device.

In some embodiments, the access network device evaluates the current network state based on the second measurement result and determines whether a switch of the sensing node is needed based on the current network state. For example, if the measurement result of the sidelink reference signal of the first terminal device is below the first condition and the measurement result of the sidelink reference signal of the second terminal device is above the second condition, the access network device switches the sensing node from the first terminal device to the second terminal device.

As shown in FIG. 17, terminal device 1 reports the measurement result of the sidelink reference signal between the terminal device 1 and the associated UE to the access network device. Terminal device 2 reports the measurement result of the sidelink reference signal between the terminal device 2 and the associated UE to the access network device. Terminal device 3 reports the measurement result of the sidelink reference signal between the terminal device 3 and the associated UE to the access network device. The access network device determines whether to switch the sensing node based on the measurement results. If the measurement result of terminal device 1 is below the first condition and the measurement result of terminal device 2 is above the second condition, the core network device switches the sensing node from terminal device 1 to terminal device 2.

In summary, in the method according to the embodiments of the present disclosure, the associated UE is only required to initiate sidelink reference signal transmission to the terminal device, the first terminal device measures the sidelink reference signal initiated by the associated UE, and the second terminal device measures the sidelink reference signal initiated by the associated UE. This approach saves resource occupation on the air interface. Based on the measurement results of the sidelink reference signal from the terminal device, the access network device can decide whether to switch the sensing node.

### First communication node side

FIG. 18 illustrates a flowchart of a method for performing a sensing service according to some exemplary embodiments of the present disclosure. Taking the method performed by a first communication node as an example, the method includes at least some of the following steps.

Step 210: Receiving first information from an associated UE or a second communication node.

The first information is used to assist the first communication node in determining the switching of the sensing node. The first information is reference information used to assist the first communication node in deciding whether the sensing node for the sensing target needs to be switched. The communication range of the second communication node overlaps the communication range of the associated UE.

In some embodiments, the first information includes mobility information about the sensing target. The associated UE is the UE corresponding to the sensing target. The associated UE may be the sensing target itself, such as when the associated UE is a vehicle terminal accessing the communication network. Alternatively, the associated UE may be the UE used by the sensing target, such as when the sensing target is a person and the associated UE is the mobile phone used by that person.

In some embodiments, the first communication node is a core network device, and the second communication node is an access network device. The first information is information transmitted by the associated UE to the core network device, or information transmitted by the access network device to the core network device. The access network device is associated with the serving cell and/or neighboring cells of the associated UE. In the scenario of cell handover, the serving cell of the associated UE includes at least one of the source serving cell or the target serving cell.

In some embodiments, the first information includes measurement results of downlink reference signals from the serving cell and/or neighboring cells, that is, measurement results of downlink reference signals from the serving cell and/or neighboring cells by the associated UE. In some embodiments, the first information includes measurement results of uplink reference signals from the associated UE, that is, measurement results of uplink reference signals from the associated UE by access network devices of the serving cell and/or neighboring cells. In some embodiments, the first information includes a cell handover event. This cell handover event is used to indicate relevant information about the cell handover process of the associated UE. This cell handover event is reported by the access network device corresponding to the source serving cell and/or the target serving cell.

In some embodiments, the first information includes at least one of: measurement results of downlink reference signals from the serving cell and/or neighboring cells, measurement results of uplink reference signals from the associated UE, or cell handover event.

In some embodiments, the first communication node is an access network device, and the second communication node is a terminal device. The first information is information transmitted by an associated UE to the access network device, or information transmitted by the terminal device to the access network device. The first information includes the measurement result of the sidelink reference signal. The first information includes the measurement result of the sidelink reference signal of the associated UE, and/or the measurement result of the sidelink reference signal of the terminal device.

Step 220: determining the switching of the sensing node based on the first information.

The first communication node determines or decides whether to switch the sensing node based on the first information. The sensing node is used to perform a sensing service for the sensing target corresponding to the associated UE.

In some embodiments, a sensing node refers to a node configured to perform a sensing service, and the sensing node senses the sensing target corresponding to the associated UE. For example, the sensing service may involve measuring the location of the sensing target within a cell covered by an access network device.

The sensing target may be an object, area, or event that requires sensing operations or monitoring.

In some embodiments, the sensing target is a terminal device capable of establishing a communication connection with an access network device and possessing signal transmission or signal reception capabilities. Optionally, in some embodiments, the sensing target can establish a communication connection with the access network device via an associated UE.

In some embodiments, the access network device provides access services for the associated UE. Taking the access network device as a base station as an example, the access network device includes a serving base station (source base station) and/or a neighboring base station (candidate base station), and the coverage area of the access network device includes a serving cell and/or a neighboring cell.

In some embodiments, the location of the sensing target is determined based on the sensing signal. The sensing target may be constantly moving within the cell covered by the access network device, thus requiring the core network device to switch the sensing node, that is, to switch the access network device.

In some embodiments, the first communication node determines whether to switch the sensing node based on the first information transmitted by the associated UE or the second communication node. The first information indicates information related to the mobility of the associated UE, assisting the first communication node in deciding the switching of sensing service among different sensing nodes. The reporting manner of the first information includes, but is not limited to, at least one of the following three Implementation manners (the order does not represent the superiority or inferiority of the Implementation manners).
Implementation manner 1: The associated UE measures a first reference signal.
Implementation manner 2: The associated UE transmits a second reference signal;
Implementation manner 3: The associated UE measures a first reference signal (in the case where the first communication node is a core network device and the second communication node is an access network device).

It should be noted that in the embodiments of the present disclosure, "sensing" can be equated with or replaced by at least one of: localization, range measurement, speed measurement, angle measurement, target imaging, target detection, target tracking, or target identification.

### For Implementation manner 1

In some embodiments, the first communication node receives the first measurement result from the associated UE.

In some embodiments, the first communication node is a core network device, and the second communication node is an access network device. The first measurement result is the measurement result of the downlink reference signal of the serving cell and/or neighboring cells.

In some embodiments, the associated UE obtains corresponding measurement result after performing measurement. Optionally, the first measurement result may include at least one of RSRP, RSRQ, SINR, or the like of the downlink reference signal of the serving cell and/or neighboring cell. Through the measurement result, the associated UE can acquire information about the downlink reference signal of the serving cell and/or neighboring cell.

In some embodiments, according to the reporting configuration in the measurement configuration, the associated UE can transmit the first measurement result to the core network device, and the core network device receives the first measurement result from the associated UE. Optionally, the measurement configuration is event-triggered reporting. When the first measurement result meets a preset condition, the associated UE transmits the first measurement result to the core network device; or the measurement configuration is periodic reporting, and the associated UE can regularly transmit the first measurement result to the core network device at periodic time intervals.

The associated UE can report its measurement result of the downlink reference signal to the access network device. The access network device corresponding to the serving cell and/or the access network device corresponding to the neighboring cell forward the measurement results to the core network device. These measurement results can be provided to the core network device as a basis for determining the continuity of the sensing service.

In some embodiments, the first communication node is an access network device, and the second communication node is a terminal device. The first measurement result is a measurement result of a sidelink reference signal between an associated UE and the terminal device. In some embodiments, the associated UE obtains the first measurement result after performing a measurement of the sidelink reference signal. Optionally, the first measurement result may include at least one of the frequency range, subcarrier spacing, waveform, or the like of the sidelink reference signal.

In some embodiments, according to the reporting configuration in the measurement configuration, the associated UE can transmit the first measurement result to the access network device. Optionally, the measurement configuration is event-triggered reporting, and when the first measurement result meets a preset condition, the associated UE transmits the first measurement result to the access network device; or the measurement configuration is periodic reporting, and the associated UE can regularly transmit the first measurement result to the access network device at periodic time intervals. The first measurement result can be provided to the access network device as a basis for determining the continuity of the sensing service.

In some embodiments, the first communication node transmits a measurement configuration of the first reference signal to the associated UE.

In some embodiments, the first communication node is a core network device, and the second communication node is an access network device. The first reference signal is a downlink reference signal. The measurement configuration of the first reference signal is the measurement configuration of the downlink reference signal of the serving cell and/or neighboring cell, and is used to perform serving cell and/or neighboring cell measurements to ensure the continuity of the sensing service. Before the associated UE measures the downlink reference signal, the core network device transmits the measurement configuration of the downlink reference signal to the associated UE.

In some embodiments, the core network device provides the associated UE with measurement configuration of downlink reference signals, including: transmitting, by the core network device to the associated UE, the measurement configuration of the downlink reference signal from the access network device corresponding to the serving cell and/or the measurement configuration of the downlink reference signal from the access network device corresponding to the neighboring cell.

In some embodiments, the measurement configuration of the downlink reference signal is generated based on the configuration of time-frequency resources. The measurement configuration of the downlink reference signal is either the same as the configuration of time-frequency resources, or the measurement configuration of the downlink reference signal is a subset of the configuration of time-frequency resources, or the configuration of time-frequency resources is a subset of the measurement configuration. In some embodiments, the first communication node is an access network device, while the second communication node is a terminal device. The first reference signal is a sidelink reference signal, and the measurement configuration of the first reference signal is the measurement configuration of the sidelink reference signal between the associated UE and the terminal device.

In some embodiments, the access network device provides measurement configuration of the sidelink reference signal to the associated UE, including: providing, by the access network device to the associated UE, the measurement configuration for the terminal device that performs sidelink reference signal transmission with the associated UE.

In some embodiments, the measurement configuration of the sidelink reference signal is generated based on the configuration of time-frequency resources. The measurement configuration of the sidelink reference signal is either the same as the configuration of time-frequency resources, or the measurement configuration of the sidelink reference signal is a subset of the configuration of time-frequency resources, or the configuration of time-frequency resources is a subset of the measurement configuration.

In some embodiments, the measurement configuration of the first reference signal includes at least one of the measurement quantity, measurement period, reporting configuration, or the like of the first reference signal, in addition to at least one of the time-domain resource location, frequency-domain resource location, or spatial-domain resource location.

In some embodiments, the first communication node acquires the configuration of the time-frequency resources of the first reference signal from the second communication node.

In some embodiments, the first communication node is an access network device, and the second communication node is a terminal device. The first reference signal is a downlink reference signal. The core network device acquires the configuration of the time-frequency resources of the downlink reference signal from the access network device before transmitting the measurement configuration. The core network device requests the access network device to determine the configuration of the time-frequency resources of the downlink reference signal.

In some embodiments, the access network device determines the configuration of time-frequency resources for the downlink reference signal, including: determining, by the access network device corresponding to the serving cell, the configuration of time-frequency resources for the downlink reference signal; and/or determining, by the access network device corresponding to the neighboring cell, the configuration of time-frequency resources for the downlink reference signal.

In some embodiments, the first communication node is an access network device, and the second communication node is a terminal device. The first reference signal is a sidelink reference signal. Upon receiving a sensing request from the terminal device, the access network device determines the configuration of the time-frequency resources for the sidelink reference signal based on the current network status and wireless resource conditions.

In some embodiments, the first communication node transmits a first request to the second communication node.

In some embodiments, the first communication node is a core network device, and the second communication node is an access network device. The first request is used to request the configuration of time-frequency resources for downlink reference signals. The core network device transmits the first request to the access network device, including transmitting the first request to the access network device corresponding to the serving cell and/or transmitting the first request to the access network device corresponding to the neighboring cell.

In some embodiments, the first request is used to request the access network device to provide the configuration of time-frequency resources for the downlink reference signal. The downlink reference signal is used by the associated UE to perform measurements related to ensuring the continuity of the sensing service.

In some embodiments, the downlink reference signal may be at least one of: DL Sensing RS, Primary Synchronization Signal, SSB, or CSI-RS.

In some embodiments, the first communication node receives the first response from the second communication node.

In some embodiments, the first communication node is a core network device, and the second communication node is an access network device. The first response includes the configuration of time-frequency resources for the downlink reference signal.

In some embodiments, the core network device obtains the configuration of time-frequency resources for the downlink reference signal of the access network device, including obtaining the configuration of time-frequency resources for the downlink reference signal of the access network device corresponding to the serving cell and/or the configuration of time-frequency resources for the downlink reference signal of the access network device corresponding to the neighboring cell.

### For Implementation manner 2

In some embodiments, the first communication node receives the second measurement result from the second communication node.

In some embodiments, the first communication node is a core network device, and the second communication node is an access network device. The second measurement result is the measurement result of the uplink reference signal of the associated UE as measured by the access network device.

In some embodiments, the access network device corresponding to the serving cell and the access network device corresponding to the neighboring cell obtains corresponding measurement results after performing measurements.

Optionally, the second measurement result may include at least one of RSRP, RSRQ, SINR, or the like of the uplink reference signal of the serving cell and/or neighboring cells.

In some embodiments, according to the reporting configuration in the measurement configuration, the access network device corresponding to the serving cell and/or the access network device corresponding to the neighboring cell can transmit the measurement results to the core network device, and the core network device receives the second measurement results from the access network device.

In some embodiments, the first communication node is an access network device, and the second communication node is a terminal device. The second measurement result is a measurement result of the sidelink reference signal between the associated UE and the terminal device. In some embodiments, the terminal device obtains the second measurement result after performing the measurement of the sidelink reference signal. Optionally, the second measurement result may include at least one of the frequency range, subcarrier spacing, waveform, or the like of the sidelink reference signal.

Optionally, the measurement configuration is event-triggered reporting, where when the second measurement result meets a preset condition, the second communication node immediately transmits the second measurement result to the first communication node device; or the measurement configuration is periodic reporting, where the second communication node regularly transmits the second measurement result to the first communication node at periodic time intervals.

In some embodiments, the first communication node transmits the measurement configuration of the second reference signal to the second communication node.

In some embodiments, the first communication node is a core network device, and the second communication node is an access network device. The second reference signal is an uplink reference signal, and the measurement configuration of the second reference signal includes all or part of the information required for the access network device to perform uplink reference signal measurements.

In some embodiments, the access network device corresponds to the neighboring cell.

In some embodiments, the measurement configuration of the uplink reference signal from the core network device to the access network device corresponding to the neighboring cell is the same as the measurement configuration determined by the access network device corresponding to the serving cell, or the measurement configuration of the uplink reference signal from the core network device to the access network device corresponding to the neighboring cell is different from the measurement configuration determined by the access network device corresponding to the serving cell.

When the measurement configuration of the uplink reference signal from the core network device to the access network device corresponding to the neighboring cell is different from the measurement configuration determined by the access network device corresponding to the serving cell, the core network device needs to transmit the measurement configuration of the uplink reference signal to the access network device corresponding to the serving cell.

In some embodiments, the first communication node is an access network device, and the second communication node is a terminal device. The second reference signal is a sidelink reference signal, and the measurement configuration of the sidelink reference signal is the measurement configuration of the sidelink reference signal between the associated UE and the terminal device.

In some embodiments, the access network device provides the terminal device with measurement configuration of the sidelink reference signal, including: providing, by the access network device to the terminal device, measurement configuration for sidelink reference signal transmission with the associated UE.

In some embodiments, the first communication node transmits the transmission configuration of the second reference signal to the associated UE via the second communication node.

In some embodiments, the first communication node is a core network device, and the second communication node is an access network device. The second reference signal is an uplink reference signal, which is used for the access network device corresponding to the serving cell to transmit the first information to the core network device after being measured by the access network device corresponding to the serving cell.

In some embodiments, the core network device transmits the transmission configuration of the uplink reference signal to the associated UE via the access network device corresponding to the serving cell, providing a set of parameters and settings to guide the associated UE in transmitting the uplink reference signal.

The transmission configuration may include at least one of the time-frequency resource location, frequency-domain resource location, transmission period, or type of uplink reference signal.

In some embodiments, the first communication node acquires the configuration of the time-frequency resources of the second reference signal from the second communication node.

In some embodiments, the first communication node is a core network device, and the second communication node is an access network device. The second reference signal is an uplink reference signal. In some embodiments, the access network device corresponding to the serving cell determines the configuration of time-frequency resources for the uplink reference signal based on the current network status and resource conditions.

In some embodiments, the access network device corresponding to the serving cell transmits the configuration of time-frequency resources for the uplink reference signal to the core network device. The core network device receives the configuration of time-frequency resources for the uplink reference signal and transmits it to the access network devices corresponding to the associated UE and/or neighboring cells.

In some embodiments, the configuration of time-frequency resources for the uplink reference signal includes at least one of: measurement configuration, measurement quantity, measurement period, reporting configuration, or the like for the uplink reference signal.

In some embodiments, the first communication node is an access network device, and the second communication node is a terminal device. The access network device determines the configuration of the time-frequency resources for the sidelink reference signal. The configuration of the time-frequency resources for the sidelink reference signal includes at least one of the time-domain resource location, frequency-domain resource location, or spatial-domain resource location of the sidelink reference signal.

In some embodiments, the first communication node transmits a second request to the second communication node.

In some embodiments, the first communication node is a core network device, and the second communication node is an access network device. The second request is used to request the configuration of time-frequency resources for uplink reference signals.

In some embodiments, the core network device transmits a second request to the access network device corresponding to the serving cell.

In some embodiments, the second request is used to request the access network device corresponding to the serving cell to provide the configuration of the time-frequency resources for the uplink reference signal. The uplink reference signal is a reference signal transmitted by the associated UE to the access network devices corresponding to both the serving cell and the neighboring cell.

In some embodiments, the uplink reference signal may be at least one of the uplink sensing reference signal, SRS, DM-RS, or other reference signals.

In some embodiments, by transmitting a second request to the access network device corresponding to the serving cell, the core network device obtains the configuration information of the time-frequency resources for the uplink reference signal, so that the core network device can correctly instruct the associated UE to transmit the uplink reference signal at the appropriate time-frequency resource location and frequency-domain resource location. The core network device can perform at least one of scheduling, optimization, correction, or supplementation based on the configuration information of the time-frequency resources, thereby generating the measurement configuration of the uplink reference signal.

In some embodiments, the first communication node receives a second response from the second communication node.

In some embodiments, the first communication node is a core network device, and the second communication node is an access network device. The second response includes the configuration of time-frequency resources for uplink reference signals.

In some embodiments, upon receiving the second request from the core network device, the access network device corresponding to the serving cell transmits a second response to the core network device. The access network device corresponding to the serving cell determines the configuration of time-frequency resources for the uplink reference signal based on the current network status and resource conditions, and transmit the configuration of time-frequency resources back to the core network device as the second response.

### For Implementation manner 3

In some embodiments, the first communication node receives handover indication information from the second communication node, wherein the handover indication information is used to indicate relevant information of a cell handover event of an associated UE.

In some embodiments, the first communication node is a core network device, and the second communication node is an access network device. The access network device includes a source access network device and/or a target access network device, and the handover indication information includes first handover indication information and second handover indication information.

In some embodiments, the second communication node includes a source access network. The first communication node receives the first handover indication information from a source access network device.

The first handover indication information is used to indicate the relevant information of the cell handover event of the associated UE.

In an optional example, the first handover indication information includes at least one of: UE identifier of the associated UE, cell identity of the target cell, or session identifier of the sensing session associated with the associated UE.

In some embodiments, the first handover indication information includes the UE identifier of the associated UE. The UE identifier of the associated UE is information used to uniquely identify the associated UE, and the UE identifier may be at least one of the application layer identifier, SUPI, SUCI, 5G-GUTI, or the like of the associated UE. Through the UE identifier of the associated UE, the core network device can identify the associated UE and perform corresponding processing.

In some embodiments, the first handover indication information includes the cell identity of the target cell. The cell identity of the target cell is the identifier information indicating the target cell to which the associated UE is to be handed over. The cell identity of the target cell may be at least one of CGI, PCI, or the like. Through the target cell identity, the core network device can know which cell the associated UE is about to be handed over to, and make corresponding handover decisions and configuration updates.

In some embodiments, the first handover indication information includes a session identifier of a sensing session associated with the associated UE. The session identifier of the sensing session associated with the associated UE is information used to identify different sensing service sessions, such as a Sensing Session ID. Through the session identifier of the sensing session, the core network device can associate the handover indication with the sensing service and perform corresponding processing.

In some embodiments, the core network device receives the first handover indication information from the target access network device. The first handover indication information is used to indicate to the core network device that the associated UE has undergone cell handover, where the associated UE is handed over from the source cell to the target cell (i.e., the serving cell is handed over to the neighboring cell). This first handover indication information assists the core network device in making decisions regarding the switching of the sensing node and ensures the smooth progress of the switching process.

In some embodiments, the second communication node includes a target access network device, and the first communication node receives the second handover indication information from the target access network device.

The second handover indication information is used to indicate the relevant information of the cell handover event of the associated UE.

In an optional example, the second handover indication information includes at least one of: UE identifier of the associated UE, cell identity of the source cell; or session identifier of the sensing session associated with the associated UE.

In some embodiments, the second handover indication information includes the UE identifier of the associated UE. The UE identifier of the associated UE is information used to uniquely identify the associated UE, and the UE identifier may be at least one of the application layer identifier, SUPI, SUCI, 5G-GUTI, or the like of the associated UE. Through the UE identifier of the associated UE, the core network device can identify the associated UE and perform corresponding processing.

In some embodiments, the second handover indication information includes the cell identity of the source cell. The cell identity of the source cell is identification information indicating the source cell of the associated UE before the handover. The cell identity of the source cell may be at least one of CGI, PCI, or the like. The core network device can use the cell identity of the source cell to determine the cell where the UE was located before the handover and perform configuration updates on the serving cell after the handover.

In some embodiments, the second handover indication information includes the session identifier of the sensing session associated with the associated UE, which is information used to identify different sensing service sessions, such as the Sensing Session ID. Through the session identifier of the sensing session, the core network device can associate the handover indication with the sensing service and perform corresponding processing.

In some embodiments, the core network device receives the second handover indication information from the target access network device. The second handover indication information is used to indicate to the core network device that the associated UE has undergone cell handover, where the associated UEs are handed over from the source cell to the target cell (i.e., the serving cell is handed over to the neighboring cell). This second handover indication information assists the core network device in making decisions for the handover of sensing nodes and ensures the smooth progress of the handover process.

In some embodiments, the first communication node transmits a third request to the second communication node.

In some embodiments, the first communication node is a core network device, and the second communication node is an access network device. The third request is used to request the access network device to report handover indication information.

The third request is used to instruct the source access network device to provide the core network device with auxiliary information required for switching the sensing node.

In some embodiments, upon receiving the third request from the core network device, that is, upon receiving the downlink reference signal request message from the core network device, the source access network device provides the core network device with auxiliary information for switching the sensing node.

In some embodiments, the auxiliary information may include at least one of the following items.
·Switching type: indicates the type of switching, such as sensing node switching.
·Switching target: indicates the target sensing node (target access network device) for switching.
·Switching parameters: includes the parameters required for switching, such as switching trigger condition, switching timing, and the like.

In some embodiments, the first communication node receives capability information reported by the associated UE, which is used to indicate whether the associated UE supports the capability associated with the first information.

In some embodiments, the first communication node is a core network device.

In some embodiments, the capability information includes the measurement capability of the associated UE for the downlink reference signal. Specifically, the capability information includes the measurement capability of the associated UE for the downlink reference signal transmitted by the serving base station corresponding to the current serving cell, as well as the measurement capability for the downlink reference signal transmitted by the neighboring base station corresponding to the neighboring cell.

In some embodiments, capability information includes the transmission capability of the associated UE for uplink reference signals. Illustratively, the associated UE can report its measurements of uplink or downlink reference signals to the core network device, and submit the measurement results to the core network device. The measurement results can be provided to the core network device as a basis for determining the continuity of the sensing service, so that the core network device can switch the sensing node according to specific situations.

In some embodiments, the first communication node transmits a reporting request for capability information to the associated UE.

In some embodiments, the first communication node receives at least one of: first indication information used to indicate whether the sensing service associated with the sensing target needs to ensure the continuity of the sensing service; second indication information used to indicate that the sensing target is an active sensing target; or identifier information of the associated UE.

In summary, in the method according to the embodiments of the present disclosure, based on the first information received by the first communication node from the associated UE and the second communication node, the switching of the sensing node is determined based on the content of the first information. The sensing node is configured to perform a sensing service for the sensing target corresponding to the associated UE, and the communication range of the second communication node overlaps the communication range of the associated UE. This ensures that the sensing target can be uniquely identified when switching between the coverage ranges of different sensing nodes, maintaining the continuity of the sensing service.

### Associated UE side

FIG. 19 illustrates a flowchart of a method for performing a sensing service according to some exemplary embodiments of the present disclosure. Taking the method performed by an associated UE as an example, the method includes at least some of the following steps.

Step 310: transmitting first information to a first communication node.

The first information is used to assist the first communication node in determining or deciding the switching of the sensing node. The first information is reference information used to assist the first communication node in deciding whether the sensing node for the sensing target needs to be switched. In some embodiments, the first information includes mobility information about the sensing target.

In some embodiments, the sensing node is configured to perform a sensing service for the sensing target corresponding to the associated UE. The communication range of the second communication node overlaps the communication range of the associated UE. The associated UE refers to the terminal device associated with the sensing target.

In some embodiments, the associated UE provides relevant information regarding the mobility of the sensing target to the first communication node by transmitting first information to the first communication node.

In some embodiments, the first communication node is a core network device, and the second communication node is an access network device. The access network device is associated with the serving cell and/or neighboring cells of the associated UE.

Optionally, the first information includes measurement results of downlink reference signals from the serving cell and/or neighboring cells. The associated UE transmits the first information to the core network device, wherein the first information includes the measurement results, as measured by the associated UE, of the downlink reference signals of the serving cell and/or neighboring cells transmitted by the access network device.

In some embodiments, the downlink reference signal is a signal from the base station to the associated UE, used for transmitting data and providing related services. The associated UE can assess the signal status of its serving cell and/or neighboring cells by measuring the strength, quality, and other parameters of the downlink reference signal.

In some embodiments, by transmitting the first measurement result to the core network device, the associated UE can provide information about the signal status of the serving cell and/or neighboring cells to the core network device. The first measurement result can be used to assist the core network device in determining the switching of the sensing node, ensuring the continuous execution and effective coverage of the sensing service.

In some embodiments, the first communication node is an access network device, and the second communication node is a terminal device. The associated UE transmits a first information to the access network device. The first information includes the measurement result of the sidelink reference signal, that is, the first information includes the measurement result of the sidelink reference signal of the associated UE.

In some embodiments, the associated UE transmits the first measurement result to the first communication node.

In some embodiments, the first communication node is a core network device. The first measurement result is the measurement result of the downlink reference signal of the serving cell and/or the neighboring cell.

In some embodiments, after the associated UE performs measurement of the downlink reference signal, a first measurement result is obtained. Optionally, the first measurement result may include at least one of RSRP, RSRQ, SINR, or the like of the downlink reference signal of the serving cell and/or neighboring cells.

The associated UE can report its measurement result of the downlink reference signal to the access network device, and the access network device then report the measurement result to the core network device. The measurement results can be provided to the core network device as a basis for determining the continuity of the sensing service.

In some embodiments, the first communication node is an access network device. The first measurement result is a measurement result of the sidelink reference signal between the associated UE and the terminal device. In some embodiments, the associated UE obtains the first measurement result after performing the measurement of the sidelink reference signal. Optionally, the first measurement result may include at least one of the frequency range, subcarrier spacing, waveform, or the like of the sidelink reference signal.

In some embodiments, according to the reporting configuration in the measurement configuration, the associated UE can transmit the first measurement result to the first communication node. Optionally, the measurement configuration is event-triggered reporting, and when the first measurement result meets a preset condition, the associated UE transmits the first measurement result to the first communication node; or the measurement configuration is periodic reporting, and the associated UE can regularly transmit the first measurement result to the first communication node at periodic time intervals.

In some embodiments, the associated UE receives the measurement configuration of the first reference signal from the first communication node;

In some embodiments, the first communication node is a core network device, and the second communication node is an access network device. The first reference signal is a downlink reference signal. The measurement configuration of the downlink reference signal is the measurement configuration of the downlink reference signal of the serving cell and/or neighboring cells, used to perform the measurement of the serving cell and/or neighboring cells to ensure the continuity of the sensing service.

The core network device provides measurement configuration of the downlink reference signal to the associated UE, including: transmitting, by the core network device to the associated UE, the measurement configuration of the downlink reference signal from the access network device corresponding to the serving cell and/or the measurement configuration of the downlink reference signal from the access network device corresponding to the neighboring cell.

In some embodiments, the first communication node is an access network device, and the second communication node is a terminal device. The first reference signal is a sidelink reference signal. The measurement configuration of the sidelink reference signal is the measurement configuration of the sidelink reference signal between the associated UE and the terminal device. In some embodiments, the access network device provides the measurement configuration of the sidelink reference signal to the associated UE, including: providing, by the access network device to the associated UE, the measurement configuration of the terminal device that performs sidelink reference signal transmission with the associated UE.

In some embodiments, the measurement configuration of the first reference signal is generated based on the configuration of time-frequency resources. The measurement configuration of the first reference signal is either the same as the configuration of time-frequency resources, or the measurement configuration of the first reference signal is a subset of the configuration of time-frequency resources, or the configuration of time-frequency resources is a subset of the measurement configuration.

In some embodiments, in addition to at least one of time-domain resource location, frequency-domain resource location, or spatial-domain resource location, the measurement configuration of the first reference signal further includes at least one of the measurement quantity, measurement period, reporting configuration, and the like of the first reference signal.

In some embodiments, the associated UE reports capability information to the first communication node, wherein the capability information is used to indicate whether the associated UE supports the capability associated with the first information.

In some embodiments, the first communication node is a core network device.

In some embodiments, the capability information includes the measurement capability of the associated UE for the downlink reference signal. Optionally, the capability information includes: the measurement capability of the associated UE for the downlink reference signal transmitted by the serving base station corresponding to the current serving cell, and/or the measurement capability of the associated UE for the downlink reference signal transmitted by the neighboring base station corresponding to the neighboring cell.

In some embodiments, the capability information includes the transmission capability of the associated UE for uplink reference signals, wherein the transmission capability includes at least one of whether to support the transmission of uplink reference signals, which type of uplink reference signals to support for transmission, the supported frequency range for transmission, or the supported maximum transmit power.

In some embodiments, the first communication node is an access network device. The capability information includes the measurement capability of the associated UE for the sidelink reference signal. Optionally, the capability information includes the measurement capability of the associated UE for the sidelink reference signal transmitted by the terminal device, and/or the capability information includes the transmission capability of the associated UE for the sidelink reference signal. Optionally, the capability information includes the capability of the associated UE to transmit the sidelink reference signal to the terminal device.

In some embodiments, the associated UE receives a reporting request for capability information from the first communication node.

In some embodiments, the associated UE transmits at least one of: first indication information used to indicate whether the sensing service associated with the sensing target needs to ensure the continuity of the sensing service; second indication information used to indicate that the sensing target is an active sensing target; or identifier information of the associated UE.

FIG. 20 illustrates a flowchart of a method for performing a sensing service according to some exemplary embodiments of the present disclosure. Taking the method performed by an associated UE as an example, the method includes at least some of the following steps.

Step 410: receiving a transmission configuration of a second reference signal from a first communication node.

In some embodiments, the first communication node is a core network device, the second communication node is an access network device, and the second reference signal is an uplink reference signal.

The uplink reference signal is used for the access network device to measure and transmit the first information to the core network device. The first information is reference information used to assist the core network device in deciding whether the sensing node for the sensing target needs to be switched. In some embodiments, the first information includes mobility information about the sensing target.

In some embodiments, the uplink reference signal is a signal from the associated UE to the access network device, used for transmitting data and providing related services.

In some embodiments, the core network device transmits the transmission configuration of the uplink reference signal to the associated UE via the access network device, to guide the associated UE in transmitting the uplink reference signal.

In some embodiments, the associated UE receives and applies the transmission configuration of the uplink reference signal from the core network device. The associated UE configures and adjusts its own way of transmitting the uplink reference signal based on the parameters and settings provided by the core network device.

In some embodiments, the associated UE transmits an uplink reference signal to the access network device. The access network device measures and evaluates the received uplink reference signal from the associated UE, and then transmits the measurement result to the core network device as the first information.

In some embodiments, the associated UE receives the transmission configuration of the uplink reference signal from the core network device, and transmits the uplink reference signal according to the guidance of the transmission configuration. The access network device measures the strength, quality, and other parameters of the uplink reference signal, and transmits the measurement result to the core network device. The measurement result is used to provide information about the signal status at the location of the associated UE.

In summary, in the method according to the embodiments of the present disclosure, the associated UE transmits first information to the core network device, or alternatively, the associated UE receives the transmission configuration of an uplink reference signal from the core network device. The uplink reference signal is used by the access network device to measure and then transmit the first information to the core network device. The first information is used to assist the core network device in determining the switching of a sensing node. Upon receiving the first information from the associated UE, the core network device determines the switching of the sensing node based on the content of the first information. The sensing node is configured to perform the sensing service on the sensing target corresponding to the associated UE. The access network device is associated with the serving cell and/or neighboring cells of the associated UE. This ensures that the sensing target can be uniquely identified when switching between different sensing nodes, maintaining the continuity of the sensing service.

In some embodiments, the associated UE transmits the second reference signal based on the transmission configuration of the second reference signal.

In some embodiments, the first communication node is a core network device, the second communication node is an access network device, and the second reference signal is an uplink reference signal.

The uplink reference signal is used for the access network device to measure and transmit the first information to the core network device.

In some embodiments, the core network device transmits the transmission configuration of the uplink reference signal to the associated UE via the access network device, providing the associated UE with a set of parameters and settings to guide the associated UE in transmitting the uplink reference signal.

In some embodiments, after receiving the activation indication forwarded by the access network device corresponding to the serving cell, the associated UE transmits the uplink reference signal according to the time-domain resource location in the configuration information of the uplink reference signal.

In summary, in the method according to the embodiments of the present disclosure, the associated UE transmits first information to a first communication node, or receives a transmission configuration of a second reference signal from the first communication node. The second reference signal is used for an access network device to measure and then transmit the first information to the first communication node. The first information is used to assist the first communication node in determining the switching of a sensing node. After receiving the first information from the associated UE, the first communication node determines the switching of the sensing node according to the content of the first information. The sensing node is configured to perform a sensing service on a sensing target corresponding to the associated UE, ensuring that the sensing target can be uniquely identified when switching between different sensing nodes, and maintaining the continuity of the sensing service.

### Second communication node side

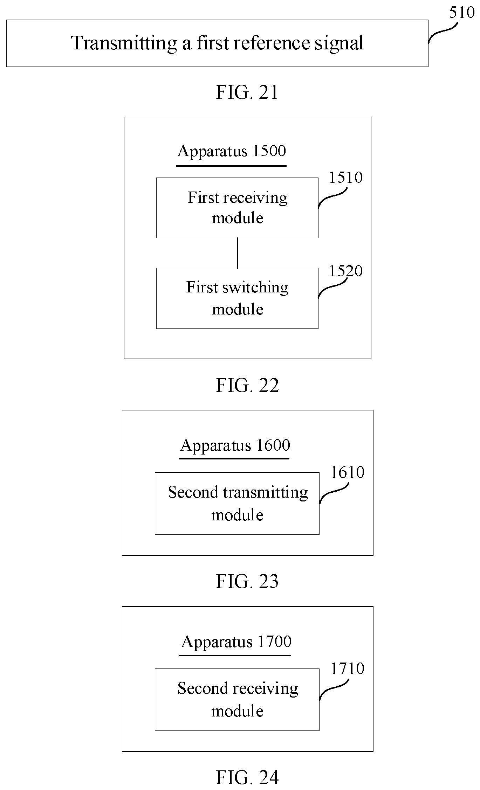

FIG. 21 illustrates a flowchart of a method for performing a sensing service according to some exemplary embodiments of the present disclosure. Taking the method performed by a second communication node as an example, the method includes at least some of the following steps.

Step 510: transmitting a first reference signal.

In some embodiments, the first communication node is a core network device, the second communication node is an access network device, and the first reference signal is a downlink reference signal.

The downlink reference signal is used for the associated UE to measure and transmit the first information to the core network device. The first information is reference information used to assist the core network device in deciding whether the sensing node for the sensing target needs to be switched. In some embodiments, the first information includes mobility information about the sensing target.

In some embodiments, the downlink reference signal is a signal transmitted by the access network device to the associated UE, used for transmitting data and providing related services.

In some embodiments, the associated UE measures the received downlink reference signal. Optionally, the associated UE can measure parameters such as RSRP, RSRQ, and SINR of the downlink reference signal. The measurement results can assist the associated UE in evaluating the quality and performance of the downlink reference signal.

In some embodiments, the associated UE transmits first information to the core network device, and the first information provides feedback from the associated UE on the downlink reference signal. The first information can assist the core network device in understanding the reception status of the downlink reference signal by the associated UE, so that the core network device can perform corresponding optimization and adjustment.

In some embodiments, the first communication node is an access network device, the second communication node is a terminal device, and the first reference signal is a sidelink reference signal. The sidelink reference signal is a reference signal used to measure the channel state between the terminal device and the associated UE. The sidelink reference signal is used to by the associated UE to measure and then transmit the first information to the access network device. The first information is reference information used to assist the access network device in deciding whether the sensing node for the sensing target needs to be switched.

In some embodiments, the second communication node transmits the first information to the first communication node.

The first information is used to assist the core network device in determining the switching of the sensing node. The first information includes relevant data or requests regarding the sensing service. The sensing node is used to perform the sensing service on the sensing target corresponding to the associated UE.

In some embodiments, the first communication node is a core network device, while the second communication node is an access network device. The access network device is associated with the serving cell and/or neighboring cells of the associated UE. In some embodiments, the access network device provides relevant information regarding performing the sensing service to the core network device by transmitting first information to the core network device.

Optionally, the first information includes the measurement result of the uplink reference signal transmitted by the associated UE. The access network device transmits the first information to the core network device, including: transmitting, by the access network device to the core network device, the measurement result of the uplink reference signal transmitted by the associated UE.

In some embodiments, the access network device transmits the first information to the core network device, which may include information related to the mobility of the sensing target, such as the location information of the associated UE. The access network device communicates with the core network device to transmit the first information to the core network device, wherein the first information is used by the core network device to coordinate performing the sensing service. For example, the core network device determines the switching of sensing nodes based on the first information transmitted by the access network device.

In some embodiments, the first communication node is an access network device, and the second communication node is a terminal device. The first information is information from an associated UE to the access network device, or information from the terminal device to the access network device. The first information includes the measurement result of the sidelink reference signal. The first information includes the measurement result of the sidelink reference signal of the associated UE, and/or the measurement result of the sidelink reference signal of the terminal device.

The reporting manners for the first information include, but are not limited to, at least one of the following three Implementation manners (the order does not indicate the superiority or inferiority of the Implementation manners).
Implementation manner 1: The associated UE measures a first reference signal.
Implementation manner 2: The associated UE transmits a second reference signal.
Implementation manner 3: The associated UE measures a first reference signal (in the case where the first communication node is a core network device and the second communication node is an access network device).

### For Implementation manner 1

In some embodiments, the second communication node provides the first communication node with the configuration of the time-frequency resources for the first reference signal.

In some embodiments, the first communication node is a core network device, the second communication node is an access network device, and the first reference signal is a downlink reference signal.

In some embodiments, the access network device determines the configuration of time-frequency resources for the downlink reference signal based on the current network status and resource conditions, that is, determines at least one of the time-domain resource location, frequency-domain resource location, or spatial-domain resource location of the downlink reference signal. Optionally, the configuration of time-frequency resources further includes reporting configuration. The access network device carries these configurations of time-frequency resources in the first response and returns them to the core network device.

In some embodiments, the access network device determines the configuration of time-frequency resources for the downlink reference signal, including: determining, by the access network device corresponding to the serving cell, the configuration of time-frequency resources for the downlink reference signal; and/or determining, by the access network device corresponding to the neighboring cell, the configuration of time-frequency resources for the downlink reference signal.

In some embodiments, the access network device provides the core network device with the configuration of time-frequency resources for the downlink reference signal, including: providing the configuration of time-frequency resources for the downlink reference signal of the access network device corresponding to the serving cell and/or the configuration of time-frequency resources for the downlink reference signal of the access network device corresponding to the neighboring cell.

In some embodiments, the second communication node receives the first request from the first communication node.

In some embodiments, the first communication node is a core network device, and the second communication node is an access network device. The first request is used to request the configuration of time-frequency resources for downlink reference signals.

In some embodiments, the access network device receives a first request from the core network device. The first request is transmitted by the core network to the access network device corresponding to the serving cell and/or the access network device corresponding to the neighboring cell.

The first request is used to request the configuration of time-frequency resources for the downlink reference signal.

In some embodiments, the downlink reference signal may be at least one of the reference signals such as DL Sensing RS, PRS, SSB, or CSI-RS.

In some embodiments, the second communication node transmits a first response to the first communication node.

In some embodiments, the first communication node is a core network device, and the second communication node is an access network device. The first response includes: configuration of time-frequency resources for the downlink reference signal.

In some embodiments, the access network device transmits a first response to the core network device, that is, the access network device transmits the configuration of time-frequency resources for the downlink reference signal to the core network device, including: the configuration of time-frequency resources for the downlink reference signal of the access network device corresponding to the serving cell and/or the configuration of time-frequency resources for the downlink reference signal of the access network device corresponding to the neighboring cell.

### For Implementation manner 2

In some embodiments, the second communication node transmits the second measurement result to the first communication node.

In some embodiments, the first communication node is a core network device, and the second communication node is an access network device. The second measurement result is the measurement result of the uplink reference signal of the associated UE as measured by the access network device.

In some embodiments, the access network device obtains corresponding measurement results after performing measurements. Optionally, the second measurement result may include at least one of RSRP, RSRQ, SINR, or the like of the uplink reference signal of the serving cell and/or neighboring cells.

In some embodiments, the first communication node is an access network device, and the second communication node is a terminal device. The second measurement result is a measurement result of the sidelink reference signal between the associated UE and the terminal device. Optionally, the second measurement result may include at least one of the frequency range, subcarrier spacing, waveform, or the like of the sidelink reference signal.

In some embodiments, according to the reporting configuration in the measurement configuration, the second communication node can transmit the measurement result to the first communication node, and the first communication node receives the second measurement result from the second communication node.

Optionally, the measurement configuration is event-triggered reporting, where the second communication node immediately transmits the second measurement result to the first communication node when the second measurement result meets a preset condition; or the measurement configuration is periodic reporting, where the second communication node regularly transmits the second measurement result to the first communication node at periodic intervals.

In some embodiments, the second communication node receives the measurement configuration of the second reference signal from the first communication node.

In some embodiments, the first communication node is a core network device, and the second communication node is an access network device. The second reference signal is an uplink reference signal. The measurement configuration of the uplink reference signal includes all information required for the access network device to perform uplink reference signal measurement.

In some embodiments, the access network device is the access network device corresponding to the neighboring cell.

In some embodiments, the first communication node is an access network device, and the second communication node is a terminal device. The second reference signal is a sidelink reference signal. The measurement configuration of the sidelink reference signal is the measurement configuration of the sidelink reference signal between the associated UE and the terminal device. In some embodiments, the second communication node receives the measurement configuration of the second reference signal from the first communication node, and the measurement configuration of the second reference signal is the same as the configuration of the time-frequency resources, or the measurement configuration of the second reference signal is a subset of the configuration of the time-frequency resources, or the configuration of the time-frequency resources is a subset of the measurement configuration.

In some embodiments, the measurement configuration of the second reference signal includes at least one of the measurement quantity, measurement period, reporting configuration, in addition to at least one of the time-domain resource location, frequency-domain resource location, or spatial-domain resource location.

In some embodiments, the second communication node provides the first communication node with the configuration of the time-frequency resources for the second reference signal.

In some embodiments, the first communication node is a core network device, and the second communication node is an access network device. The second reference signal is an uplink reference signal. The access network device determines the configuration of the time-frequency resources for the uplink reference signal and provides the configuration of the time-frequency resources for the uplink reference signal to the core network device.

In some embodiments, the configuration of time-frequency resources for the uplink reference signal includes at least one of: measurement configuration, measurement quantity, measurement period, reporting configuration, or the like for the uplink reference signal.

Optionally, the access network device refers to the access network device corresponding to the serving cell. In some embodiments, the access network device corresponding to the serving cell determines the configuration of time-frequency resources for the uplink reference signal based on the current network status and resource conditions.

In some embodiments, the access network device corresponding to the serving cell transmits the configuration of time-frequency resources for the uplink reference signal to the core network device. The core network device receives the configuration of time-frequency resources for the uplink reference signal and transmits it to the access network devices corresponding to the associated UE and/or neighboring cells.

In some embodiments, the first communication node is an access network device, and the second communication node is a terminal device. The second reference signal is a sidelink reference signal. Upon receiving a sensing request from the terminal device, the access network device determines the configuration of the time-frequency resources for the sidelink reference signal based on the current network status and wireless resource conditions.

In some embodiments, the second communication node receives the second request from the first communication node.

In some embodiments, the first communication node is a core network device, and the second communication node is an access network device. The second reference signal is an uplink reference signal. The second request is used to request the configuration of time-frequency resources for the uplink reference signal.

In some embodiments, the access network device corresponding to the serving cell receives the second request from the core network device.

In some embodiments, the second request is used to request the access network device corresponding to the serving cell to provide the configuration of time-frequency resources for the uplink reference signal. The uplink reference signal is a reference signal transmitted by the associated UE to the access network device.

In some embodiments, upon receiving the second request from the core network device, the access network device corresponding to the serving cell determines the configuration of time-frequency resources for the uplink reference signal based on the current network status and resource conditions.

In some embodiments, the second communication node transmits a second response to the first communication node.

In some embodiments, the first communication node is a core network device, and the second communication node is an access network device. The second reference signal is an uplink reference signal. The second response includes: configuration of time-frequency resources for the uplink reference signal.

### For Implementation manner 3

In some embodiments, the second communication node transmits handover indication information to the first communication node, which is used to indicate relevant information about the cell handover event of the associated UE.

In some embodiments, the first communication node is a core network device, and the second communication node is an access network device. The access network device includes a source access network device and/or a target access network device, and the handover indication information includes first handover indication information and second handover indication information.

In some embodiments, the second communication node includes a source access network. The source access network device transmits first handover indication information to the first communication node.

The first handover indication information is used to indicate the relevant information of the cell handover event of the associated UE.

In an optional example, the first handover indication information includes at least one of: UE identifier of the associated UE; cell identity of the target cell; or session identifier of the sensing session associated with the associated UE.

In some embodiments, the first handover indication information includes the UE identifier of the associated UE. The UE identifier of the associated UE is information used to uniquely identify the associated UE. The UE identifier may be at least one of the application layer identifier, SUPI, SUCI, 5G-GUTI, or the like of the associated UE. Through the UE identifier of the associated UE, the core network device can identify the associated UE and perform corresponding processing.

In some embodiments, the first handover indication information includes the cell identity of the target cell. The cell identity of the target cell is the identifier information indicating the target cell to which the associated UE is to be handed over. The cell identity of the target cell may be at least one of CGI, PCI, or the like. Through the target cell identity, the core network device can know which cell the associated UE is about to be handed over to, and make corresponding handover decisions and configuration updates.

In some embodiments, the first handover indication information includes a session identifier of the sensing session associated with the associated UE. The session identifier of the sensing session of associated with the associated UE is information used to identify different sensing service sessions, such as a sensing session identifier. Through the session identifier of the sensing session, the core network device can associate the handover indication with the sensing service and perform corresponding processing.

In some embodiments, the source access network device transmits the first handover indication information to the core network device, notifying the core network device that the associated UE has undergone a cell handover, where the associated UE is handed over from the source cell to the target cell (i.e., the serving cell is handed over to the neighboring cell). The core network device receives the first handover indication information from the source access network device, which assists the core network device in making decisions regarding the switching of the sensing node and ensures the smooth progress of the switching process.

In some embodiments, the second communication node includes a target access network device, which transmits second handover indication information to the first communication node.

The second handover indication information is used to indicate the relevant information of the cell handover event of the associated UE.

In an optional example, the second handover indication information includes at least one of: UE identifier of the associated UE; cell identity of the source cell; or session identifier of the sensing session associated with the associated UE.

In some embodiments, the second handover indication information includes the UE identifier of the associated UE. The UE identifier of the associated UE is information used to uniquely identify the associated UE, and the UE identifier may be at least one of the application layer identifier, SUPI, SUCI, 5G-GUTI, or the like of the associated UE. Through the UE identifier of the associated UE, the core network device can identify the associated UE and perform corresponding processing.

In some embodiments, the second handover indication information includes the cell identity of the source cell. The cell identity of the source cell is the identification information indicating the source cell of the associated UE before the handover. The cell identity of the source cell may be at least one of CGI, PCI, or the like. The core network device can use the cell identity of the source cell to determine the cell where the UE was located before the handover and perform configuration updates on the serving cell after the handover.

In some embodiments, the second handover indication information includes the session identifier of the sensing session associated with the associated UE. The session identifier of the sensing session associated with the associated UE is information used to identify different sensing service sessions, such as a sensing session identifier. Through the session identifier of the sensing session, the core network device can associate the handover indication with the sensing service and perform corresponding processing.

In some embodiments, the target access network device transmits second handover indication information to the core network device, notifying the core network device that the associated UE has undergone cell handover, from the source cell to the target cell (i.e., from the serving cell to the neighboring cell). The core network device receives the second handover indication information from the target access network device, which assists the core network device in making decisions regarding the switching of sensing nodes and ensures the smooth progress of the switching process.

In some embodiments, the second communication node receives the third request from the first communication node.

In some embodiments, the first communication node is a core network device, and the second communication node is an access network device. The third request is used to request the access network device to report handover indication information.

In some embodiments, the access network device receives a third request from the core network device, that is, the access network device receives a downlink reference signal request message from the core network device.

The third request is used to instruct the source access network device to provide the core network device with the auxiliary information required for switching the sensing node.

In some embodiments, upon receiving the third request from the core network device, that is, upon receiving the downlink reference signal request message from the core network device, the source access network device provides the core network device with auxiliary information for the switching of the sensing node.

In some embodiments, the auxiliary information may include at least one of the following items.
·Switching type: indicates the type of switching, such as sensing node switching.
·Switching target: indicates the target sensing node (target access network device) for switching.
·Switching parameters: includes the parameters required for switching, such as the switching trigger condition and switching timing.

In summary, in the method according to the embodiments of the present disclosure, the second communication node transmits a first reference signal to an associated UE. This first reference signal is used by the associated UE to measure and then transmit first information to the first communication node. Alternatively, the second communication node transmits the first information to the first communication node. This first information is used to assist the first communication node in determining the switching of a sensing node. Upon receiving the first information from the second communication node, the first communication node determines the switching of the sensing node based on the content of the first information. The sensing node is responsible for performing the sensing service on the sensing target corresponding to the associated UE, ensuring that the sensing target can be uniquely identified when switching between different sensing nodes, and maintaining the continuity of the sensing service.

### First communication node apparatus side

FIG. 22 illustrates a structural block diagram of a first communication apparatus according to some exemplary embodiments of the present disclosure. The apparatus 1500 has the function of implementing the method for performing a sensing service. The first communication apparatus may include: a first receiving module 1510 and a first switching module 1520.

The first receiving module 1510 is configured to receive first information from an associated UE or a second communication node.

The first information is used to assist the first communication apparatus in determining the switching of the sensing node. The first information is reference information used to assist the first communication apparatus in deciding whether the sensing node for the sensing target needs to be switched. The communication range of the second communication node overlaps the communication range of the associated UE.

In some embodiments, the first information includes mobility information about the sensing target. The associated UE is the UE corresponding to the sensing target. The associated UE may be the sensing target itself, such as when the associated UE is a vehicle terminal accessing the communication network. Alternatively, the associated UE may be the UE used by the sensing target, such as when the sensing target is a person and the associated UE is the mobile phone used by that person.

In some embodiments, the first communication apparatus is a core network apparatus, and the second communication node is an access network apparatus. The first information is information transmitted by the associated UE to the core network apparatus, or information transmitted by the access network apparatus to the core network apparatus. The access network apparatus is associated with the serving cell and/or neighboring cells of the associated UE. In the scenario of cell handover, the serving cell of the associated UE includes at least one of the source serving cell or the target serving cell.

In some embodiments, the first information includes measurement results of downlink reference signals from the serving cell and/or neighboring cells, that is, measurement results of downlink reference signals from the serving cell and/or neighboring cells by the associated UE. In some embodiments, the first information includes measurement results of uplink reference signals from the associated UE, that is, measurement results of uplink reference signals from the associated UE by access network apparatuses of the serving cell and/or neighboring cells. In some embodiments, the first information includes a cell handover event. This cell handover event is used to indicate relevant information about the cell handover process of the associated UE. This cell handover event is reported by the access network apparatus corresponding to the source serving cell and/or the target serving cell.

In some embodiments, the first information includes at least one of: measurement results of downlink reference signals from the serving cell and/or neighboring cells, measurement results of uplink reference signals from the associated UE, or cell handover event.

In some embodiments, the first communication apparatus is an access network apparatus, and the second communication node is a terminal device. The first information is information transmitted by an associated UE to the access network apparatus, or information transmitted by the terminal device to the access network apparatus. The first information includes the measurement result of the sidelink reference signal. The first information includes the measurement result of the sidelink reference signal of the associated UE, and/or the measurement result of the sidelink reference signal of the terminal device.

The first switching module 1520 is configured to determine the switching of the sensing node based on the first information.

The first communication apparatus determines or decides whether to switch the sensing node based on the first information. The sensing node is used to perform a sensing service for the sensing target corresponding to the associated UE.

In some embodiments, a sensing node refers to a node configured to perform a sensing service, and the sensing node senses the sensing target corresponding to the associated UE. For example, the sensing service may involve measuring the location of the sensing target within a cell covered by an access network apparatus.

The sensing target may be an object, area, or event that requires sensing operations or monitoring.

In some embodiments, the sensing target is a terminal device capable of establishing a communication connection with an access network apparatus and possessing signal transmission or signal reception capabilities. Optionally, in some embodiments, the sensing target can establish a communication connection with the access network apparatus via an associated UE.

In some embodiments, the access network apparatus provides access services for the associated UE. Taking the access network apparatus as a base station as an example, the access network apparatus includes a serving base station (source base station) and/or a neighboring base station (candidate base station), and the coverage area of the access network apparatus includes a serving cell and/or a neighboring cell.

In some embodiments, the location of the sensing target is determined based on the sensing signal. The sensing target may be constantly moving within the cell covered by the access network apparatus, thus requiring the core network apparatus to switch the sensing node, that is, to switch the access network apparatus.

### For Implementation manner 1

The first receiving module 1510 is further configured to receive the first measurement result from the associated UE.

In some embodiments, the first communication apparatus is a core network apparatus, and the second communication node is an access network apparatus. The first measurement result is the measurement result of the downlink reference signal of the serving cell and/or neighboring cells.

In some embodiments, the associated UE obtains corresponding measurement result after performing measurement. Optionally, the first measurement result may include at least one of RSRP, RSRQ, SINR, or the like of the downlink reference signal of the serving cell and/or neighboring cell. Through the measurement result, the associated UE can acquire information about the downlink reference signal of the serving cell and/or neighboring cell.

In some embodiments, according to the reporting configuration in the measurement configuration, the associated UE can transmit the first measurement result to the core network apparatus, and the core network apparatus receives the first measurement result from the associated UE. Optionally, the measurement configuration is event-triggered reporting. When the first measurement result meets a preset condition, the associated UE transmits the first measurement result to the core network apparatus; or the measurement configuration is periodic reporting, and the associated UE can regularly transmit the first measurement result to the core network apparatus at periodic time intervals.

The associated UE can report its measurement result of the downlink reference signal to the access network apparatus. The access network apparatus corresponding to the serving cell and/or the access network apparatus corresponding to the neighboring cell forward the measurement results to the core network apparatus. These measurement results can be provided to the core network apparatus as a basis for determining the continuity of the sensing service.

In some embodiments, the first communication apparatus is an access network apparatus, and the second communication node is a terminal device. The first measurement result is a measurement result of a sidelink reference signal between an associated UE and the terminal device. In some embodiments, the associated UE obtains the first measurement result after performing a measurement of the sidelink reference signal. Optionally, the first measurement result may include at least one of the frequency range, subcarrier spacing, waveform, or the like of the sidelink reference signal.

In some embodiments, according to the reporting configuration in the measurement configuration, the associated UE can transmit the first measurement result to the access network apparatus. Optionally, the measurement configuration is event-triggered reporting, and the associated UE transmits the first measurement result to the access network apparatus when the first measurement result meets a preset condition; or the measurement configuration is periodic reporting, and the associated UE can regularly transmit the first measurement result to the access network apparatus at periodic time intervals. The first measurement result can be provided to the access network apparatus as a basis for determining the continuity of the sensing service.

In some embodiments, the first communication apparatus further includes a transmitting module.

The transmitting module is configured to transmit a measurement configuration of the first reference signal to the associated UE.

In some embodiments, the first communication apparatus is an access network apparatus, and the second communication node is a terminal device. The first reference signal is a downlink reference signal. The measurement configuration of the first reference signal is the measurement configuration of the downlink reference signal of the serving cell and/or neighboring cell, and is used to perform serving cell and/or neighboring cell measurements to ensure the continuity of the sensing service.

In some embodiments, the core network apparatus provides the associated UE with measurement configuration for downlink reference signals, including: transmitting, by the core network apparatus to the associated UE, the measurement configuration of the downlink reference signal from the access network apparatus corresponding to the serving cell and/or the measurement configuration for the downlink reference signal from the access network apparatus corresponding to the neighboring cell.

In some embodiments, the measurement configuration of the downlink reference signal is generated based on the configuration of time-frequency resources. The measurement configuration of the downlink reference signal is either the same as the configuration of time-frequency resources, or the measurement configuration of the downlink reference signal is a subset of the configuration of time-frequency resources, or the configuration of time-frequency resources is a subset of the measurement configuration.

In some embodiments, the first communication apparatus is an access network device, while the second communication node is a terminal device. The first reference signal is a sidelink reference signal, and the measurement configuration of the first reference signal is the measurement configuration of the sidelink reference signal between the associated UE and the terminal device.

In some embodiments, the access network apparatus provides measurement configuration of the sidelink reference signal to the associated UE, including: providing, by the access network apparatus to the associated UE, the measurement configuration for the terminal device that performs sidelink reference signal transmission with the associated UE.

In some embodiments, the measurement configuration of the sidelink reference signal is generated based on the configuration of time-frequency resources. The measurement configuration of the sidelink reference signal is either the same as the configuration of time-frequency resources, or the measurement configuration of the sidelink reference signal is a subset of the configuration of time-frequency resources, or the configuration of time-frequency resources is a subset of the measurement configuration.

In some embodiments, the measurement configuration of the first reference signal includes at least one of the measurement quantity, measurement period, reporting configuration, or the like of the first reference signal, in addition to at least one of the time-domain resource location, frequency-domain resource location, or spatial-domain resource location. In some embodiments, the first communication apparatus further includes an acquiring module.

The acquiring module is configured to acquire the configuration of the time-frequency resources of the first reference signal from the second communication node.

In some embodiments, the first communication apparatus is an access network apparatus, and the second communication node is a terminal device. The first reference signal is a downlink reference signal. The core network apparatus acquires the configuration of the time-frequency resources of the downlink reference signal from the access network apparatus before transmitting the measurement configuration. The core network apparatus requests the access network apparatus to determine the configuration of the time-frequency resources of the downlink reference signal.

In some embodiments, the access network apparatus determines the configuration of time-frequency resources for the downlink reference signal, including: determining, by the access network apparatus corresponding to the serving cell, the configuration of time-frequency resources for the downlink reference signal; and/or determining, by the access network apparatus corresponding to the neighboring cell, the configuration of time-frequency resources for the downlink reference signal.

In some embodiments, the first communication apparatus is an access network apparatus, and the second communication node is a terminal device. The first reference signal is a sidelink reference signal. Upon receiving a sensing request from the terminal device, the access network apparatus determines the configuration of the time-frequency resources for the sidelink reference signal based on the current network status and wireless resource conditions.

The transmitting module is configured to transmit a first request to the second communication node.

In some embodiments, the first communication apparatus is a core network apparatus, and the second communication node is an access network apparatus. The first request is used to request the configuration of time-frequency resources for downlink reference signals. The core network apparatus transmits the first request to the access network apparatus, including transmitting the first request to the access network apparatus corresponding to the serving cell and/or transmitting the first request to the access network apparatus corresponding to the neighboring cell.

In some embodiments, the first request is used to request the access network apparatus to provide the configuration of time-frequency resources for the downlink reference signal. The downlink reference signal is used by the associated UE to perform measurements related to ensuring the continuity of the sensing service.

In some embodiments, the downlink reference signal may be at least one of: DL Sensing RS, Primary Synchronization Signal, SSB, or CSI-RS.

The first receiving module 1510 is configured to receive the first response from the second communication node.

In some embodiments, the first communication apparatus is a core network apparatus, and the second communication node is an access network apparatus. The first response includes the configuration of time-frequency resources for the downlink reference signal.

In some embodiments, the core network apparatus obtains the configuration of time-frequency resources for the downlink reference signal of the access network apparatus, including obtaining the configuration of time-frequency resources for the downlink reference signal of the access network apparatus corresponding to the serving cell and/or the configuration of time-frequency resources for the downlink reference signal of the access network apparatus corresponding to the neighboring cell.

### For Implementation manner 2

The first receiving module 1510 is configured to receive the second measurement result from the second communication node.

In some embodiments, the first communication apparatus is a core network apparatus, and the second communication node is an access network apparatus. The second measurement result is the measurement result of the uplink reference signal of the associated UE as measured by the access network apparatus.

In some embodiments, the access network apparatus corresponding to the serving cell and the access network apparatus corresponding to the neighboring cell obtains corresponding measurement results after performing measurements. Optionally, the second measurement result may include at least one of RSRP, RSRQ, SINR, or the like of the uplink reference signal of the serving cell and/or neighboring cells.

In some embodiments, according to the reporting configuration in the measurement configuration, the access network apparatus corresponding to the serving cell and/or the access network apparatus corresponding to the neighboring cell can transmit the measurement results to the core network apparatus, and the core network apparatus receives the second measurement results from the access network apparatus.

In some embodiments, the first communication apparatus is an access network apparatus, and the second communication node is a terminal device. The second measurement result is a measurement result of the sidelink reference signal between the associated UE and the terminal device. In some embodiments, the terminal device obtains the second measurement result after performing the measurement of the sidelink reference signal. Optionally, the second measurement result may include at least one of the frequency range, subcarrier spacing, waveform, or the like of the sidelink reference signal.

Optionally, the measurement configuration is event-triggered reporting, where when the second measurement result meets a preset condition, the second communication node immediately transmits the second measurement result to the first communication apparatus device; or the measurement configuration is periodic reporting, where the second communication node regularly transmits the second measurement result to the first communication apparatus at periodic time intervals.

The transmitting module is configured to transmit the measurement configuration of the second reference signal to the second communication node.

In some embodiments, the first communication apparatus is a core network apparatus, and the second communication node is an access network apparatus. The second reference signal is an uplink reference signal, and the measurement configuration of the second reference signal includes all or part of the information required for the access network apparatus to perform uplink reference signal measurements.

In some embodiments, the access network apparatus corresponds to the neighboring cell.

In some embodiments, the measurement configuration for the uplink reference signal from the core network apparatus to the access network apparatus corresponding to the neighboring cell is the same as the measurement configuration determined by the access network apparatus corresponding to the serving cell, or the measurement configuration for the uplink reference signal from the core network apparatus to the access network apparatus corresponding to the neighboring cell is different from the measurement configuration determined by the access network apparatus corresponding to the serving cell.

When the measurement configuration of the uplink reference signal from the core network apparatus to the access network apparatus corresponding to the neighboring cell is different from the measurement configuration determined by the access network apparatus corresponding to the serving cell, the core network apparatus needs to transmit the measurement configuration of the uplink reference signal to the access network apparatus corresponding to the serving cell.

In some embodiments, the first communication apparatus is an access network apparatus, and the second communication node is a terminal device. The second reference signal is a sidelink reference signal, and the measurement configuration of the sidelink reference signal is the measurement configuration of the sidelink reference signal between the associated UE and the terminal device.

In some embodiments, the access network apparatus provides the terminal device with measurement configuration of the sidelink reference signal, including: providing, by the access network apparatus to the terminal device, measurement configuration for sidelink reference signal transmission with the associated UE.

The transmitting module is configured to transmit the transmission configuration of the second reference signal to the associated UE via the second communication node.

In some embodiments, the first communication apparatus is a core network apparatus, and the second communication node is an access network apparatus. The second reference signal is an uplink reference signal, which is used for the access network apparatus corresponding to the serving cell to transmit the first information to the core network apparatus after being measured by the access network apparatus corresponding to the serving cell.

In some embodiments, the core network apparatus transmits the transmission configuration of the uplink reference signal to the associated UE via the access network apparatus, providing a set of parameters and settings to guide the associated UE in transmitting the uplink reference signal.

The transmission configuration may include at least one of the time-frequency resource location, frequency-domain resource location, transmission period, or type of uplink reference signal.

The acquiring module is configured to acquire the configuration of the time-frequency resources of the second reference signal from the second communication node.

In some embodiments, the first communication apparatus is a core network apparatus, and the second communication node is an access network apparatus. The second reference signal is an uplink reference signal. In some embodiments, the access network apparatus corresponding to the serving cell determines the configuration of time-frequency resources for the uplink reference signal based on the current network status and resource conditions.

In some embodiments, the access network apparatus corresponding to the serving cell transmits the configuration of time-frequency resources for the uplink reference signal to the core network apparatus. The core network apparatus receives the configuration of time-frequency resources for the uplink reference signal and transmits it to the access network apparatuses corresponding to the associated UE and/or neighboring cells.

In some embodiments, the configuration of time-frequency resources for the uplink reference signal includes at least one of: measurement configuration, measurement quantity, measurement period, reporting configuration, or the like for the uplink reference signal.

In some embodiments, the first communication apparatus is an access network apparatus, and the second communication node is a terminal device. The access network apparatus determines the configuration of the time-frequency resources for the sidelink reference signal. The configuration of the time-frequency resources for the sidelink reference signal includes at least one of the time-domain resource location, frequency-domain resource location, or spatial-domain resource location of the sidelink reference signal.

The transmitting module is configured to transmit a second request to the second communication node.

In some embodiments, the first communication apparatus is a core network apparatus, and the second communication node is an access network apparatus. The second request is used to request the configuration of time-frequency resources for uplink reference signals.

In some embodiments, the core network apparatus transmits a second request to the access network apparatus corresponding to the serving cell.

In some embodiments, the second request is used to request the access network apparatus corresponding to the serving cell to provide the configuration of the time-frequency resources for the uplink reference signal. The uplink reference signal is a reference signal transmitted by the associated UE to the access network apparatuses.

In some embodiments, the uplink reference signal may be at least one of the uplink sensing reference signal, SRS, DM-RS, or other reference signals.

In some embodiments, by transmitting a second request to the access network apparatus corresponding to the serving cell, the core network apparatus obtains the configuration information of the time-frequency resources for the uplink reference signal, so that the core network apparatus can correctly instruct the associated UE to transmit the uplink reference signal at the appropriate time-frequency resource location and frequency-domain resource location. The core network apparatus can perform at least one of scheduling, optimization, correction, or supplementation based on the configuration information of the time-frequency resources, thereby generating the measurement configuration of the uplink reference signal.

The first receiving module 1510 is configured to receive a second response from the second communication node.

In some embodiments, the first communication apparatus is a core network apparatus, and the second communication node is an access network apparatus. The second response includes the configuration of time-frequency resources for uplink reference signals.

In some embodiments, upon receiving the second request from the core network apparatus, the access network apparatus corresponding to the serving cell transmits a second response to the core network apparatus. The access network apparatus corresponding to the serving cell determines the configuration of time-frequency resources for the uplink reference signal based on the current network status and resource conditions, and transmit the configuration of time-frequency resources back to the core network apparatus as the second response.

### For Implementation manner 3

The first receiving module 1510 is configured to receive handover indication information from the second communication node, wherein the handover indication information is used to indicate relevant information of a cell handover event of an associated UE.

In some embodiments, the first communication apparatus is a core network apparatus, and the second communication node is an access network apparatus. The access network apparatus includes a source access network apparatus and/or a target access network apparatus, and the handover indication information includes first handover indication information and second handover indication information.

The first receiving module 1510, the second communication node includes a source access network, and the first communication apparatus receives first handover indication information from a source access network apparatus.

The first handover indication information is used to indicate the relevant information of the cell handover event of the associated UE.

In an optional example, the first handover indication information includes at least one of: UE identifier of the associated UE, cell identity of the target cell, or session identifier of the sensing session associated with the associated UE.

In some embodiments, the first handover indication information includes the UE identifier of the associated UE. The UE identifier of the associated UE is information used to uniquely identify the associated UE, and the UE identifier may be at least one of the application layer identifier, SUPI, SUCI, 5G-GUTI, or the like of the associated UE. Through the UE identifier of the associated UE, the first communication apparatus can identify the associated UE and perform corresponding processing.

In some embodiments, the first handover indication information includes the cell identity of the target cell. The cell identity of the target cell is the identifier information indicating the target cell to which the associated UE is to be handed over. The cell identity of the target cell may be at least one of CGI, PCI, or the like. Through the target cell identity, the first communication apparatus can know which cell the associated UE is about to be handed over to, and make corresponding handover decisions and configuration updates.

In some embodiments, the first handover indication information includes a session identifier of a sensing session associated with the associated UE. The session identifier of the sensing session associated with the associated UE is information used to identify different sensing service sessions, such as a Sensing Session ID. Through the session identifier of the sensing session, the first communication apparatus can associate the handover indication with the sensing service and perform corresponding processing.

In some embodiments, the first communication apparatus receives the first handover indication information from the target access network apparatus. The first handover indication information is used to indicate to the first communication apparatus that the associated UE has undergone cell handover, where the associated UE is handed over from the source cell to the target cell (i.e., the serving cell is handed over to the neighboring cell). This first handover indication information assists the first communication apparatus in making decisions regarding the switching of the sensing node and ensures the smooth progress of the switching process.

The first receiving module 1510, the second communication node includes a target access network apparatus, which is configured to receive the second handover indication information from the target access network apparatus.

The second handover indication information is used to indicate the relevant information of the cell handover event of the associated UE.

In an optional example, the second handover indication information includes at least one of: UE identifier of the associated UE, cell identity of the source cell; or session identifier of the sensing session associated with the associated UE.

In some embodiments, the second handover indication information includes the UE identifier of the associated UE. The UE identifier of the associated UE is information used to uniquely identify the associated UE, and the UE identifier may be at least one of the application layer identifier, SUPI, SUCI, 5G-GUTI, or the like of the associated UE. Through the UE identifier of the associated UE, the first communication apparatus can identify the associated UE and perform corresponding processing.

In some embodiments, the second handover indication information includes the cell identity of the source cell. The cell identity of the source cell is identification information indicating the source cell of the associated UE before the handover. The cell identity of the source cell may be at least one of CGI, PCI, or the like. The first communication apparatus can use the cell identity of the source cell to determine the cell where the UE was located before the handover and perform configuration updates on the serving cell after the handover.

In some embodiments, the second handover indication information includes the session identifier of the sensing session associated with the associated UE, which is information used to identify different sensing service sessions, such as the Sensing Session ID. Through the session identifier of the sensing session, the first communication apparatus can associate the handover indication with the sensing service and perform corresponding processing.

In some embodiments, the first communication apparatus receives the second handover indication information from the target access network apparatus. The second handover indication information is used to indicate to the first communication apparatus that the associated UE has undergone cell handover, where the associated UEs are handed over from the source cell to the target cell (i.e., the serving cell is handed over to the neighboring cell). This second handover indication information assists the first communication apparatus in making decisions for the handover of sensing nodes and ensures the smooth progress of the handover process.

The first transmitting module is configured to transmit a third request to the second communication node. The third request is used to request the second communication node to report handover indication information.

In some embodiments, the first communication apparatus is a core network apparatus, and the second communication node is an access network apparatus. The third request is used to instruct the source access network apparatus to provide the first communication apparatus with auxiliary information required for switching the sensing node.

In some embodiments, upon receiving the third request from the first communication apparatus, that is, upon receiving the downlink reference signal request message from the first communication apparatus, the source access network apparatus provides the first communication apparatus with auxiliary information for switching the sensing node.

In some embodiments, the auxiliary information may include at least one of the following items.
·Switching type: indicates the type of switching, such as sensing node switching.
·Switching target: indicates the target sensing node (target access network apparatus) for switching.
·Switching parameters: includes the parameters required for switching, such as switching trigger condition, switching timing, and the like.

The first receiving module 1510 is configured to receive capability information reported by the associated UE, which is used to indicate whether the associated UE supports the capability associated with the first information.

In some embodiments, the first communication apparatus is a core network apparatus.

In some embodiments, the capability information includes the measurement capability of the associated UE for the downlink reference signal. Specifically, the capability information includes the measurement capability of the associated UE for the downlink reference signal transmitted by the serving base station corresponding to the current serving cell, as well as the measurement capability for the downlink reference signal transmitted by the neighboring base station corresponding to the neighboring cell.

In some embodiments, capability information includes the transmission capability of the associated UE for uplink reference signals. Illustratively, the associated UE can report its measurements of uplink or downlink reference signals to the first communication apparatus, and submit the measurement results to the first communication apparatus. The measurement results can be provided to the first communication apparatus as a basis for determining the continuity of the sensing service, so that the first communication apparatus can switch the sensing node according to specific situations.

The transmitting module is configured to transmit a reporting request for capability information to the associated UE.

The first receiving module 1510 is configured to receive at least one of: first indication information used to indicate whether the sensing service associated with the sensing target needs to ensure the continuity of the sensing service; second indication information used to indicate that the sensing target is an active sensing target; or identifier information of the associated UE.

In summary, the embodiments of the present disclosure provide a first communication apparatus that determines the switching of the sensing node based on the first information received by the first communication apparatus from the associated UE and the second communication node, the switching of the sensing node is determined based on the content of the first information. The sensing node is configured to perform a sensing service for the sensing target corresponding to the associated UE. This ensures that the sensing target can be uniquely identified when switching between different sensing nodes, maintaining the continuity of the sensing service.

### Associated UE apparatus side

FIG. 23 illustrates a structural block diagram of an apparatus for performing a sensing service according to some exemplary embodiments of the present disclosure. The apparatus 1600 has the function of implementing the method for performing a sensing service. The apparatus may include a second transmitting module 1610.

The second transmitting module 1610 is configured to transmit first information to a first communication node.

The first information is used to assist the first communication node in determining or deciding the switching of the sensing node. The first information is reference information used to assist the first communication node in deciding whether the sensing node for the sensing target needs to be switched. In some embodiments, the first information includes mobility information about the sensing target.

In some embodiments, the sensing node is configured to perform a sensing service for the sensing target corresponding to the apparatus. The communication range of the second communication node overlaps the communication range of the apparatus. The apparatus refers to the terminal device associated with the sensing target.

In some embodiments, the apparatus provides relevant information regarding the mobility of the sensing target to the first communication node by transmitting first information to the first communication node.

In some embodiments, the first communication node is a core network device, and the second communication node is an access network device. The access network device is associated with the serving cell and/or neighboring cells of the apparatus.

Optionally, the first information includes measurement results of downlink reference signals from the serving cell and/or neighboring cells. The apparatus transmits the first information to the core network device, wherein the first information includes the measurement results, as measured by the apparatus, of the downlink reference signals of the serving cell and/or neighboring cells transmitted by the access network device.

In some embodiments, the downlink reference signal is a signal from the base station to the apparatus, used for transmitting data and providing related services. The apparatus can assess the signal status of its serving cell and/or neighboring cells by measuring the strength, quality, and other parameters of the downlink reference signal.

In some embodiments, by transmitting the first measurement result to the core network device, the apparatus can provide information about the signal status of the serving cell and/or neighboring cells to the core network device. The first measurement result can be used to assist the core network device in determining the switching of the sensing node, ensuring the continuous execution and effective coverage of the sensing service.

In some embodiments, the first communication node is an access network device, and the second communication node is a terminal device. The apparatus transmits a first information to the access network device. The first information includes the measurement result of the sidelink reference signal. The first information includes the measurement result of the sidelink reference signal of the apparatus.

The second transmitting module 1610 is configured to transmit the first measurement result to the first communication node.

In some embodiments, the first communication node is a core network device. The first measurement result is the measurement result of the downlink reference signal of the serving cell and/or the neighboring cell.

In some embodiments, after the apparatus performs measurement of the downlink reference signal, a first measurement result is obtained. Optionally, the first measurement result may include at least one of RSRP, RSRQ, SINR, or the like of the downlink reference signal of the serving cell and/or neighboring cells.

The apparatus can report its measurement result of the downlink reference signal to the access network device, and the access network device then report the measurement result to the core network device. The measurement results can be provided to the core network device as a basis for determining the continuity of the sensing service.

In some embodiments, the first communication node is an access network device. The first measurement result is a measurement result of the sidelink reference signal between the apparatus and the terminal device. In some embodiments, the apparatus obtains the first measurement result after performing the measurement of the sidelink reference signal. Optionally, the first measurement result may include at least one of the frequency range, subcarrier spacing, waveform, or the like of the sidelink reference signal.

In some embodiments, according to the reporting configuration in the measurement configuration, the apparatus can transmit the first measurement result to the first communication node. Optionally, the measurement configuration is event-triggered reporting, and when the first measurement result meets a preset condition, the apparatus transmits the first measurement result to the first communication node; or the measurement configuration is periodic reporting, and the apparatus can regularly transmit the first measurement result to the first communication node at periodic time intervals.

In some embodiments, the apparatus further includes a receiving module.

The receiving module is configured to receive the measurement configuration of the first reference signal from the first communication node;

In some embodiments, the first communication node is a core network device, and the second communication node is an access network device. The first reference signal is a downlink reference signal. The measurement configuration of the downlink reference signal is the measurement configuration of the downlink reference signal of the serving cell and/or neighboring cells, used to perform the measurement of the serving cell and/or neighboring cells to ensure the continuity of the sensing service.

The core network device provides measurement configuration of the downlink reference signal to the apparatus, including: transmitting, by the core network device to the apparatus, the measurement configuration of the downlink reference signal from the access network device corresponding to the serving cell and/or the measurement configuration of the downlink reference signal from the access network device corresponding to the neighboring cell.

In some embodiments, the first communication node is an access network device, and the second communication node is a terminal device. The first reference signal is a sidelink reference signal. The measurement configuration of the sidelink reference signal is the measurement configuration of the sidelink reference signal between the apparatus and the terminal device. In some embodiments, the access network device provides the measurement configuration of the sidelink reference signal to the apparatus, including: providing, by the access network device to the apparatus, the measurement configuration of the terminal device that performs sidelink reference signal transmission with the apparatus. In some embodiments, the measurement configuration of the first reference signal is generated based on the configuration of time-frequency resources. The measurement configuration of the first reference signal is either the same as the configuration of time-frequency resources, or the measurement configuration of the first reference signal is a subset of the configuration of time-frequency resources, or the configuration of time-frequency resources is a subset of the measurement configuration.

In some embodiments, the measurement configuration of the first reference signal further includes at least one of the measurement quantity, measurement period, reporting configuration, and the like of the first reference signal, in addition to at least one of the time-domain resource location, frequency-domain resource location, or spatial-domain resource location. In some embodiments, the apparatus further includes a reporting module.

The reporting module is configured to report capability information to the first communication node, wherein the capability information is used to indicate whether the apparatus supports the capability associated with the first information.

In some embodiments, the first communication node is a core network device.

In some embodiments, the capability information includes the measurement capability of the apparatus for the downlink reference signal. Optionally, the capability information includes: the measurement capability of the apparatus for the downlink reference signal transmitted by the serving base station corresponding to the current serving cell, and/or the measurement capability of the apparatus for the downlink reference signal transmitted by the neighboring base station corresponding to the neighboring cell.

In some embodiments, the capability information includes the transmission capability of the apparatus for uplink reference signals, wherein the transmission capability includes at least one of whether to support the transmission of uplink reference signals, which type of uplink reference signals to support for transmission, the supported frequency range for transmission, or the supported maximum transmit power.

In some embodiments, the first communication node is an access network device. The capability information includes the measurement capability of the apparatus for the sidelink reference signal. Optionally, the capability information includes the measurement capability of the apparatus for the sidelink reference signal transmitted by the terminal device, and/or the capability information includes the transmission capability of the apparatus for the sidelink reference signal. Optionally, the capability information includes the capability of the apparatus to transmit the sidelink reference signal to the terminal device.

The receiving module is configured to receive a reporting request for capability information from the first communication node.

The second transmitting 1610 is configured to transmits at least one of: first indication information used to indicate whether the sensing service associated with the sensing target needs to ensure the continuity of the sensing service; second indication information used to indicate that the sensing target is an active sensing target; or identifier information of the apparatus.

FIG. 24 illustrates a structural block diagram of an apparatus for performing a sensing service according to some exemplary embodiments of the present disclosure. The apparatus 1700 has the function of implementing the method for performing a sensing service. The apparatus may include: a second receiving module 1710.

The second receiving module 1710 is configured to receive a transmission configuration of a second reference signal from a first communication node.

In some embodiments, the first communication node is a core network device, the second communication node is an access network device, and the second reference signal is an uplink reference signal.

The uplink reference signal is used for the access network device to measure and transmit the first information to the core network device.

In some embodiments, the uplink reference signal is a signal from the apparatus to the access network device, used for transmitting data and providing related services.

In some embodiments, the core network device provides a set of parameters and settings to the apparatus by transmitting the transmission configuration of the uplink reference signal, to guide the apparatus in transmitting the uplink reference signal.

In some embodiments, the apparatus receives and applies the transmission configuration of the uplink reference signal from the core network device. The apparatus configures and adjusts its own way of transmitting the uplink reference signal based on the parameters and settings provided by the core network device.

In some embodiments, the apparatus transmits an uplink reference signal to the access network device. The access network device measures and evaluates the received uplink reference signal from the apparatus, and then transmits the measurement result to the core network device as the first information.

In some embodiments, the apparatus receives the transmission configuration of the uplink reference signal from the core network device, and transmits the uplink reference signal according to the guidance of the transmission configuration. The access network device measures the strength, quality, and other parameters of the uplink reference signal, and transmits the measurement result to the core network device. The measurement result is used to provide information about the signal status at the location of the apparatus.

In some embodiments, the apparatus further includes a transmitting module.

The transmitting module is configured to transmit the second reference signal based on the transmission configuration of the second reference signal.

In some embodiments, the first communication node is a core network device, the second communication node is an access network device, and the second reference signal is an uplink reference signal.

The uplink reference signal is used for the access network device to measure and transmit the first information to the core network device.

In some embodiments, the core network device transmits the transmission configuration of the uplink reference signal to the apparatus via the access network device, providing the apparatus with a set of parameters and settings to guide the apparatus in transmitting the uplink reference signal.

In some embodiments, after receiving the activation indication forwarded by the access network device corresponding to the serving cell, the apparatus transmits the uplink reference signal according to the time-domain resource location in the configuration information of the uplink reference signal.

In summary, the embodiments of the present disclosure provide an apparatus that transmits first information to a first communication node, or receives a transmission configuration of a second reference signal from the core network device. The second reference signal is used for a second communication node to measure and then transmit the first information to the first communication node. The first information is used to assist the first communication node in determining the switching of a sensing node. After receiving the first information from the apparatus, the first communication node determines the switching of the sensing node according to the content of the first information. The sensing node is configured to perform a sensing service on a sensing target corresponding to the apparatus, ensuring that the sensing target can be uniquely identified when switching between different sensing nodes, and maintaining the continuity of the sensing service.

### Second communication apparatus side

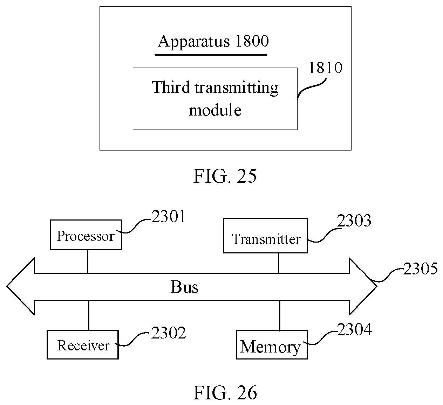

FIG. 25 illustrates a structural block diagram of a second communication apparatus according to some exemplary embodiments of the present disclosure. The apparatus 1800 has the function of implementing the method for performing a sensing service. The second communication apparatus may include a third transmitting module 1810.

The third transmitting module 1810 is configured to transmit a first reference signal.

In some embodiments, the first communication node is a core network device, the second communication apparatus is an access network apparatus, and the first reference signal is a downlink reference signal.

The downlink reference signal is used for the associated UE to measure and transmit the first information to the core network device. The first information is reference information used to assist the core network device in deciding whether the sensing node for the sensing target needs to be switched. In some embodiments, the first information includes mobility information about the sensing target.

In some embodiments, the downlink reference signal is a signal transmitted by the access network apparatus to the associated UE, used for transmitting data and providing related services.

In some embodiments, the associated UE measures the received downlink reference signal. Optionally, the associated UE can measure parameters such as RSRP, RSRQ, and SINR of the downlink reference signal. The measurement results can assist the associated UE in evaluating the quality and performance of the downlink reference signal.

In some embodiments, the associated UE transmits first information to the core network device, and the first information provides feedback from the associated UE on the downlink reference signal. The first information can assist the core network device in understanding the reception status of the downlink reference signal by the associated UE, so that the core network device can perform corresponding optimization and adjustment.

In some embodiments, the first communication node is an access network apparatus, the second communication apparatus is a terminal apparatus, and the first reference signal is a sidelink reference signal. The sidelink reference signal is a reference signal used to measure the channel state between the terminal apparatus and the associated UE. The sidelink reference signal is used to by the associated UE to measure and then transmit the first information to the access network apparatus. The first information is reference information used to assist the access network apparatus in deciding whether the sensing node for the sensing target needs to be switched.

The third transmitting module 1810 is configured to transmit the first information to the first communication node.

The first information is used to assist the core network device in determining the switching of the sensing node. The first information includes relevant data or requests regarding the sensing service. The sensing node is used to perform the sensing service on the sensing target corresponding to the associated UE.

In some embodiments, the first communication node is a core network device, while the second communication apparatus is an access network apparatus. The access network apparatus is associated with the serving cell and/or neighboring cells of the associated UE. In some embodiments, the access network apparatus provides relevant information regarding performing the sensing service to the core network device by transmitting first information to the core network device.

Optionally, the first information includes the measurement result of the uplink reference signal transmitted by the associated UE. The access network apparatus transmits the first information to the core network device, including: transmitting, by the access network apparatus to the core network device, the measurement result of the uplink reference signal transmitted by the associated UE.

In some embodiments, the access network apparatus transmits the first information to the core network device, which may include information related to the mobility of the sensing target, such as the location information of the associated UE. The access network apparatus communicates with the core network device to transmit the first information to the core network device, wherein the first information is used by the core network device to coordinate performing the sensing service. For example, the core network device determines the switching of sensing nodes based on the first information transmitted by the access network apparatus.

In some embodiments, the first communication node is an access network apparatus, and the second communication apparatus is a terminal apparatus. The first information is information from an associated UE to the access network apparatus, or information from the terminal apparatus to the access network apparatus. The first information includes the measurement result of the sidelink reference signal. The first information includes the measurement result of the sidelink reference signal of the associated UE, and/or the measurement result of the sidelink reference signal of the terminal apparatus.

### For Implementation manner 1

In some embodiments, the second communication apparatus further includes a providing module.

The providing module is configured to provide the first communication node with the configuration of the time-frequency resources for the first reference signal.

In some embodiments, the first communication node is a core network device, the second communication apparatus is an access network apparatus, and the first reference signal is a downlink reference signal.

In some embodiments, the access network apparatus determines the configuration of time-frequency resources for the downlink reference signal based on the current network status and resource conditions, that is, determines at least one of the time-domain resource location, frequency-domain resource location, or spatial-domain resource location of the downlink reference signal. Optionally, the configuration of time-frequency resources further includes reporting configuration. The access network apparatus carries these configurations of time-frequency resources in the first response and returns them to the core network device.

In some embodiments, the access network apparatus determines the configuration of time-frequency resources for the downlink reference signal, including: determining, by the access network apparatus corresponding to the serving cell, the configuration of time-frequency resources for the downlink reference signal; and/or determining, by the access network apparatus corresponding to the neighboring cell, the configuration of time-frequency resources for the downlink reference signal.

In some embodiments, the access network apparatus provides the core network device with the configuration of time-frequency resources for the downlink reference signal, including: providing the configuration of time-frequency resources for the downlink reference signal of the access network apparatus corresponding to the serving cell and/or the configuration of time-frequency resources for the downlink reference signal of the access network apparatus corresponding to the neighboring cell.

In some embodiments, the second communication apparatus further includes a receiving module.

The receiving module is configured to receive the first request from the first communication node.

In some embodiments, the first communication node is a core network device, and the second communication apparatus is an access network apparatus. The first request is used to request the configuration of time-frequency resources for downlink reference signals.

In some embodiments, the access network apparatus receives a first request from the core network device, which includes: a first request transmitted by the core network to the access network apparatus corresponding to the serving cell and/or the access network apparatus corresponding to the neighboring cell.

The first request is used to request the configuration of time-frequency resources for the downlink reference signal.

In some embodiments, the downlink reference signal may be at least one of the reference signals such as DL Sensing RS, PRS, SSB, or CSI-RS.

The third transmitting module 1810 is configured to transmit a first response to the first communication node.

In some embodiments, the first communication node is a core network device, and the second communication apparatus is an access network apparatus. The first response includes: configuration of time-frequency resources for the downlink reference signal.

In some embodiments, the second communication apparatus transmits a first response to the core network device, that is, the second communication apparatus transmits the configuration of time-frequency resources for the downlink reference signal to the core network device, including: the configuration of time-frequency resources for the downlink reference signal of the second communication apparatus corresponding to the serving cell and/or the configuration of time-frequency resources for the downlink reference signal of the second communication apparatus corresponding to the neighboring cell.

### For Implementation manner 2

The third transmitting module 1810 is configured to transmit the second measurement result to the first communication node.

In some embodiments, the first communication node is a core network device, and the second communication apparatus is an access network apparatus. The second measurement result is the measurement result of the uplink reference signal of the associated UE as measured by the access network apparatus.

In some embodiments, the access network apparatus obtains corresponding measurement results after performing measurements. Optionally, the second measurement result may include at least one of RSRP, RSRQ, SINR, or the like of the uplink reference signal of the serving cell and/or neighboring cells.

In some embodiments, the first communication node is an access network apparatus, and the second communication apparatus is a terminal apparatus. The second measurement result is a measurement result of the sidelink reference signal between the associated UE and the terminal apparatus. Optionally, the second measurement result may include at least one of the frequency range, subcarrier spacing, waveform, or the like of the sidelink reference signal.

In some embodiments, according to the reporting configuration in the measurement configuration, the second communication apparatus can transmit the measurement result to the first communication node, and the first communication node receives the second measurement result from the second communication apparatus.

Optionally, the measurement configuration is event-triggered reporting, where the second communication apparatus immediately transmits the second measurement result to the first communication node when the second measurement result meets a preset condition; or the measurement configuration is periodic reporting, where the second communication apparatus regularly transmits the second measurement result to the first communication node at periodic intervals.

The receiving module is configured to receives the measurement configuration of the second reference signal from the first communication node.

In some embodiments, the first communication node is a core network device, and the second communication apparatus is an access network apparatus. The second reference signal is an uplink reference signal. The measurement configuration of the uplink reference signal includes all information required for the access network apparatus to perform uplink reference signal measurement.

In some embodiments, the access network apparatus is the access network apparatus corresponding to the neighboring cell.

In some embodiments, the first communication node is an access network apparatus, and the second communication apparatus is a terminal apparatus. The second reference signal is a sidelink reference signal. The measurement configuration of the sidelink reference signal is the measurement configuration of the sidelink reference signal between the associated UE and the terminal apparatus. In some embodiments, the second communication apparatus receives the measurement configuration of the second reference signal from the first communication node, and the measurement configuration of the second reference signal is the same as the configuration of the time-frequency resources, or the measurement configuration of the second reference signal is a subset of the configuration of the time-frequency resources, or the configuration of the time-frequency resources is a subset of the measurement configuration.

In some embodiments, the measurement configuration of the second reference signal includes at least one of the measurement quantity, measurement period, reporting configuration, in addition to at least one of the time-domain resource location, frequency-domain resource location, or spatial-domain resource location.

The providing module is configured to provide the first communication node with the configuration of the time-frequency resources for the second reference signal.

In some embodiments, the first communication node is a core network device, and the second communication apparatus is an access network apparatus. The second reference signal is an uplink reference signal. The access network apparatus determines the configuration of the time-frequency resources for the uplink reference signal and provides the configuration of the time-frequency resources for the uplink reference signal to the core network device.

In some embodiments, the configuration of time-frequency resources for the uplink reference signal includes at least one of: measurement configuration, measurement quantity, measurement period, reporting configuration, or the like for the uplink reference signal.

Optionally, the access network apparatus refers to the access network apparatus corresponding to the serving cell. In some embodiments, the access network apparatus corresponding to the serving cell determines the configuration of time-frequency resources for the uplink reference signal based on the current network status and resource conditions.

In some embodiments, the access network apparatus corresponding to the serving cell transmits the configuration of time-frequency resources for the uplink reference signal to the core network device. The core network device receives the configuration of time-frequency resources for the uplink reference signal and transmits it to the access network apparatuses corresponding to the associated UE and/or neighboring cells.

In some embodiments, the first communication node is an access network apparatus, and the second communication apparatus is a terminal apparatus. The second reference signal is a sidelink reference signal. Upon receiving a sensing request from the terminal apparatus, the access network apparatus determines the configuration of the time-frequency resources for the sidelink reference signal based on the current network status and wireless resource conditions.

The receiving module is configured to receive the second request from the first communication node.

In some embodiments, the first communication node is a core network device, and the second communication apparatus is an access network apparatus. The second reference signal is an uplink reference signal. The second request is used to request the configuration of time-frequency resources for the uplink reference signal.

In some embodiments, the access network apparatus corresponding to the serving cell receives the second request from the core network device.

In some embodiments, the second request is used to request the access network apparatus corresponding to the serving cell to provide the configuration of time-frequency resources for the uplink reference signal. The uplink reference signal is a reference signal transmitted by the associated UE to the access network apparatus.

In some embodiments, upon receiving the second request from the core network device, the access network apparatus corresponding to the serving cell determines the configuration of time-frequency resources for the uplink reference signal based on the current network status and resource conditions.

The third transmitting module 1810 is configured to transmit a second response to the first communication node.

In some embodiments, the first communication node is a core network device, and the second communication apparatus is an access network apparatus. The second reference signal is an uplink reference signal. The second response includes: configuration of time-frequency resources for the uplink reference signal.

### For Implementation manner 3

The third transmitting module 1810 is configured to transmit handover indication information to the first communication node, which is used to indicate relevant information about the cell handover event of the associated UE.

In some embodiments, the first communication node is a core network device, and the second communication apparatus is an access network apparatus. The access network apparatus includes a source access network apparatus and/or a target access network apparatus, and the handover indication information includes first handover indication information and second handover indication information.

The third transmitting module 1810, the second communication apparatus includes a source access network, which is configured to transmit first handover indication information to the first communication node.

The first handover indication information is used to indicate the relevant information of the cell handover event of the associated UE.

In an optional example, the first handover indication information includes at least one of: UE identifier of the associated UE; cell identity of the target cell; or session identifier of the sensing session associated with the associated UE.

In some embodiments, the first handover indication information includes the UE identifier of the associated UE. The UE identifier of the associated UE is information used to uniquely identify the associated UE. The UE identifier may be at least one of the application layer identifier, SUPI, SUCI, 5G-GUTI, or the like of the associated UE. Through the UE identifier of the associated UE, the core network device can identify the associated UE and perform corresponding processing.

In some embodiments, the first handover indication information includes the cell identity of the target cell. The cell identity of the target cell is the identifier information indicating the target cell to which the associated UE is to be handed over. The cell identity of the target cell may be at least one of CGI, PCI, or the like. Through the target cell identity, the core network device can know which cell the associated UE is about to be handed over to, and make corresponding handover decisions and configuration updates.

In some embodiments, the first handover indication information includes a session identifier of the sensing session associated with the associated UE. The session identifier of the sensing session of associated with the associated UE is information used to identify different sensing service sessions, such as Sensing Session ID. Through the session identifier of the sensing session, the core network device can associate the handover indication with the sensing service and perform corresponding processing.

In some embodiments, the second communication apparatus transmits the first handover indication information to the core network device, notifying the core network device that the associated UE has undergone a cell handover, where the associated UE is handed over from the source cell to the target cell (i.e., the serving cell is handed over to the neighboring cell). The core network device receives the first handover indication information from the second communication apparatus, which assists the core network device in making decisions regarding the switching of the sensing node and ensures the smooth progress of the switching process.

The third transmitting module 1810, the second communication apparatus includes a target access network apparatus, which transmits second handover indication information to the first communication node.

The second handover indication information is used to indicate the relevant information of the cell handover event of the associated UE.

In an optional example, the second handover indication information includes at least one of: UE identifier of the associated UE; cell identity of the source cell; or session identifier of the sensing session associated with the associated UE.

In some embodiments, the second handover indication information includes the UE identifier of the associated UE. The UE identifier of the associated UE is information used to uniquely identify the associated UE, and the UE identifier may be at least one of the application layer identifier, SUPI, SUCI, 5G-GUTI, or the like of the associated UE. Through the UE identifier of the associated UE, the core network device can identify the associated UE and perform corresponding processing.

In some embodiments, the second handover indication information includes the cell identity of the source cell. The cell identity of the source cell is the identification information indicating the source cell of the associated UE before the handover. The cell identity of the source cell may be at least one of CGI, PCI, or the like. The core network device can use the cell identity of the source cell to determine the cell where the UE was located before the handover and perform configuration updates on the serving cell after the handover.

In some embodiments, the second handover indication information includes the session identifier of the sensing session associated with the associated UE. The session identifier of the sensing session associated with the associated UE is information used to identify different sensing service sessions, such as Sensing Session ID. Through the session identifier of the sensing session, the core network device can associate the handover indication with the sensing service and perform corresponding processing.

In some embodiments, the second communication apparatus transmits second handover indication information to the core network device, notifying the core network device that the associated UE has undergone cell handover, from the source cell to the target cell (i.e., from the serving cell to the neighboring cell). The core network device receives the second handover indication information from the second communication apparatus, which assists the core network device in making decisions regarding the switching of sensing nodes and ensures the smooth progress of the switching process.

The receiving module is configured to receive the third request from the first communication node.

In some embodiments, the first communication node is a core network device, and the second communication apparatus is an access network apparatus. The third request is used to request the second communication apparatus to report handover indication information.

In some embodiments, the second communication apparatus receives a third request from the core network device, that is, the second communication apparatus receives a downlink reference signal request message from the core network device.

The third request is used to instruct the second communication apparatus to provide the core network device with the auxiliary information required for switching the sensing node.

In some embodiments, upon receiving the third request from the core network device, that is, upon receiving the downlink reference signal request message from the core network device, the second communication apparatus provides the core network device with auxiliary information for the switching of the sensing node.

In some embodiments, the auxiliary information may include at least one of the following items.
·Switching type: indicates the type of switching, such as sensing node switching.
·Switching target: indicates the target sensing node (second communication apparatus) for switching.
·Switching parameters: includes the parameters required for switching, such as the switching trigger condition and switching timing.

In summary, the embodiments of the present disclosure provide a second communication apparatus that transmits a first reference signal to an associated UE. This first reference signal is used by the associated UE to measure and then transmit first information to the first communication node. Alternatively, the second communication apparatus transmits the first information to the core network device. This first information is used to assist the first communication node in determining the switching of a sensing node. Upon receiving the first information from the second communication apparatus, the first communication node determines the switching of the sensing node based on the content of the first information. The sensing node is responsible for performing the sensing service on the sensing target corresponding to the associated UE, ensuring that the sensing target can be uniquely identified when switching between different sensing nodes, and maintaining the continuity of the sensing service.

It should be noted that when the apparatus according to the above embodiment achieves its functions, it is exemplified only based on the division of the above functional modules. In practical applications, the above functions can be allocated to different functional modules as needed, that is, the internal structure of the terminal device can be divided into different functional modules to complete all or part of the functions described above. In addition, the apparatus according to the above embodiment and the method embodiment belong to the same concept.

FIG. 26 illustrates the structural block diagram of a communication device according to some embodiments of the present disclosure. This communication device may be configured to implement the method for performing a sensing service according to the aforementioned embodiments. The sensing device may include: a processor 2301, a receiver 2302, a transmitter 2303, a memory 2304, and a bus 2305.

The processor 2301 includes one or more processing cores, and executes various functional applications and information processing by running software programs and modules.

The receiver 2302 and the transmitter 2303 may be implemented as a transceiver, which may be a communication chip.

The memory 2304 is connected to the processor 2301 via the bus 2305; in some embodiments, the processor 2301 may be implemented as a first IC chip, and the processor 2301 and the memory 2304 may be jointly implemented as a second IC chip; the first chip or the second chip may be an application specific integrated circuit (ASIC) chip.

The memory 2304 can be configured to store at least one computer program, processor 2301 is configured to execute the at least one computer program, so as to implement the various steps performed by the communication system in the above method embodiments.

In addition, the memory 2304 can be implemented by any type of volatile or non-volatile storage device, or a combination thereof. Volatile or non-volatile storage devices include, but are not limited to: random-access memory (RAM), read-only memory (ROM), erasable programmable ROM (EPROM), electrically EPROM (EEPROM), flash memory or other solid-state storage technologies, compact disc ROM (CD-ROM), digital video disc (DVD) or other optical storage, magnetic tape cartridges, magnetic tapes, disk storage, or other magnetic storage devices.

In exemplary embodiments, a chip is also provided, which includes programmable logic circuitry and/or one or more program instructions. The chip, when running on a multi-link device, is caused to implement the method for performing a sensing service.

In exemplary embodiments, a computer-readable storage medium is also provided. The computer-readable storage medium stores at least one computer program, which when executed by a processor, cause the processor to perform the method for performing a sensing service.

In exemplary embodiments, a computer program product is also provided. The computer program product, when executed by a processor, cause the processor to perform the method for performing a sensing service.

It should be understood that the term "a plurality of " mentioned herein refers to two or more. The term "and/or" describes the association relationship between related objects, indicating that there may be three types of relationships. For example, the phrase "A and/or B" means (A), (B), or (A and B). The character "/" generally indicates that the associated objects before and after it are in an "or" relationship. In addition, the step numbers described herein only exemplarily show one possible execution sequence among the steps. In some other embodiments, the above steps may not be executed in the numerical order. For example, two steps with different numbers may be executed simultaneously, or two steps with different numbers may be executed in an order opposite to the one shown in the diagram. This is not limited by the embodiments of the present disclosure.

Described above are merely optional embodiments of the present disclosure and are not intended to limit the present disclosure. Any modifications, equivalent substitutions, improvements, or the like, made within the concept and principle of the present disclosure should fall within the protection scope of the present disclosure.

## Claims

1. A method for performing a sensing service, performed by a first communication node, the method comprising:
receiving first information from an associated UE or a second communication node;
determining switching of a sensing node based on the first information, wherein the sensing node is configured to perform a sensing service on a sensing target corresponding to the associated UE, and a communication range of the second communication node overlaps a communication range of the associated UE.

2. The method according to claim 1, wherein receiving the first information from the associated UE comprises:
receiving a first measurement result from the associated UE, wherein the first measurement result is a measurement result of a first reference signal that is transmitted by the second communication node.

3. The method according to claim 2, further comprising:
transmitting a measurement configuration of the first reference signal to the associated UE.

4. The method according to claim 3, further comprising:
acquiring a configuration of a time-frequency resource for the first reference signal from the second communication node.

5. The method according to claim 4, wherein acquiring the configuration of the time-frequency resource for the first reference signal from the second communication node comprises:
transmitting a first request to the second communication node, wherein the first request is used to request the configuration of the time-frequency resource for the first reference signal;
receiving a first response from the second communication node, wherein the first response is used to indicate the configuration of the time-frequency resource for the first reference signal.

6. The method according to claim 1, wherein receiving the first information from the second communication node comprises:
receiving a second measurement result from the second communication node, wherein the second measurement result is a measurement result of a second reference signal that is transmitted by the associated UE.

7. The method according to claim 6, further comprising:
transmitting a measurement configuration of the second reference signal to the second communication node.

8. The method according to claim 6, further comprising:
transmitting a transmission configuration of the second reference signal to the associated UE.

9. The method according to claim 7 or 8, further comprising:
acquiring a configuration of a time-frequency resource for the second reference signal from the second communication node.

10. The method according to claim 9, wherein acquiring the measurement configuration of the time-frequency resource for the second reference signal from the second communication node comprises:
transmitting a second request to the second communication node, wherein the second request is used to request the configuration of the time-frequency resource for the second reference signal;
receiving a second response from the second communication node, wherein the second response is used to indicate the configuration of the time-frequency resource for the second reference signal.

11. The method according to claim 1, wherein receiving the first information from the second communication node comprises:
receiving handover indication information from the second communication node, wherein the handover indication information is used to indicate relevant information of a cell handover event of the associated UE.

12. The method according to claim 11, wherein the second communication node comprises at least one of a source access network device or a target access network device, and receiving the handover indication information from the second communication node comprises at least one of:
receiving first handover indication information from the source access network device; or
receiving second handover indication information from the target access network device.

13. The method according to claim 12, wherein the first handover indication information comprises at least one of:
a UE identifier of the associated UE;
a cell identity of a target cell;
a session identifier of a sensing session associated with the associated UE.

14. The method according to claim 12, wherein the second handover indication information comprises at least one of:
a UE identifier of the associated UE;
a cell identity of a source cell; or
a session identifier of a sensing session associated with the associated UE.

15. The method according to any one of claims 11 to 14, further comprising:
transmitting a third request to the second communication node, wherein the third request is used to request the second communication node to report the handover indication information.

16. The method according to any one of claims 1 to 15, further comprising:
receiving capability information reported by the associated UE, wherein the capability information is used to indicate whether the associated UE supports a capability associated with the first information.

17. The method according to claim 16, further comprising:
transmitting a reporting request for the capability information to the associated UE.

18. The method according to any one of claims 1 to 15, further comprising:
receiving at least one of:
first indication information, wherein the first indication information is used to indicate whether a sensing service associated with the sensing target needs to ensure continuity of the sensing service;
second indication information, wherein the second indication information is used to indicate that the sensing target is an active sensing target; or
identifier information of the associated UE.

19. The method according to any one of claims 1 to 18, wherein the first communication node is a core network device and the second communication node is an access network device, and/or the first communication node is an access network device and the second communication node is a terminal device.

20. A method for performing a sensing service, performed by an associated UE, the method comprising:
transmitting first information to a first communication node; or
receiving a transmission configuration of a second reference signal from the first communication node, wherein the second reference signal is used for a second communication node to measure and transmit first information to the first communication node;
wherein the first information is used to assist the first communication node in determining switching of a sensing node, the sensing node is configured to perform a sensing service on a sensing target corresponding to the associated UE, and a communication range of the second communication node overlaps a communication range of the associated UE.

21. The method according to claim 20, wherein transmitting the first information to the first communication node comprises:
transmitting a first measurement result to the first communication node, wherein the first measurement result is a measurement result of a first reference signal of a serving cell and/or a neighboring cell of the associated UE.

22. The method according to claim 21, further comprising:
receiving a measurement configuration of the first reference signal from the first communication node.

23. The method according to claim 20, further comprising:
transmitting the second reference signal based on the transmission configuration of the second reference signal.

24. The method according to any one of claims 20 to 23, further comprising:
reporting capability information to the first communication node, wherein the capability information is used to indicate whether the associated UE supports a capability associated with the first information.

25. The method according to claim 24, further comprising:
receiving a reporting request for capability information from the first communication node.

26. The method according to any one of claims 20 to 23, further comprising:
transmitting at least one of:
first indication information, wherein the first indication information is used to indicate whether a sensing service associated with the sensing target needs to ensure the continuity of the sensing service;
second indication information, wherein the second indication information is used to indicate that the sensing target is an active sensing target; or
identifier information of the associated UE.

27. The method according to any one of claims 20 to 26, wherein the first communication node is a core network device and the second communication node is an access network device, and/or the first communication node is an access network device and the second communication node is a terminal device.

28. A method for performing a sensing service, performed by a second communication node, the method comprising:
transmitting a first reference signal, wherein the first reference signal is used for an associated UE to measure and transmit first information to a first communication node; or
transmitting the first information to the first communication node;
wherein the first information is used to assist the first communication node in determining switching of a sensing node, the sensing node is configured to perform a sensing service on a sensing target corresponding to the associated UE, and a communication range of the second communication node overlaps a communication range of the associated UE.

29. The method according to claim 28, further comprising:
providing a configuration of a time-frequency resource for the first reference signal to the first communication node.

30. The method according to claim 29, wherein providing the configuration of the time-frequency resource for the first reference signal to the core network device comprises:
receiving a first request from the first communication node, wherein the first request is used to request the configuration of the time-frequency resource for the first reference signal;
transmitting a first response to the first communication node, wherein the first response is used to indicate the configuration of the time-frequency resource for the first reference signal.

31. The method according to claim 28, wherein transmitting the first information to the first communication node comprises:
transmitting a second measurement result to the first communication node, wherein the second measurement result is a measurement result of a second reference signal that is transmitted by the associated UE.

32. The method according to claim 31, further comprising:
receiving a measurement configuration of the second reference signal from the first communication node.

33. The method according to claim 32, further comprising:
providing a configuration of a time-frequency resource for the second reference signal to the first communication node.

34. The method according to claim 33, wherein providing the configuration of the time-frequency resource for the second reference signal to the first communication node comprises:
receiving a second request from the first communication node, wherein the second request is used to request the configuration of the time-frequency resource for the second reference signal;
transmitting a second response to the first communication node, wherein the second response is used to indicate the configuration of the time-frequency resource for the second reference signal.

35. The method according to claim 28, wherein transmitting the first information to the first communication node comprises:
transmitting handover indication information to the first communication node, wherein the handover indication information is used to indicate relevant information of a cell handover event of the associated UE.

36. The method according to claim 35, wherein the second communication node comprises a source access network device and/or a target access network device;
transmitting the handover indication information to the first communication node comprises at least one of:
transmitting, by the source access network device, first handover indication information to the first communication node; or
transmitting, by the target access network device, second handover indication information to the first communication node.

37. The method according to claim 36, wherein the first handover indication information comprises at least one of:
a UE identifier of the associated UE;
a cell identity of a target cell;
a session identifier of a sensing session associated with the associated UE.

38. The method according to claim 36, wherein the second handover indication information comprises at least one of:
a UE identifier of the associated UE;
a cell identity of a source cell; or
a session identifier of a sensing session associated with the associated UE.

39. The method according to any one of claims 35 to 38, further comprising:
receiving a third request from the first communication node, wherein the third request is used to request the second communication node to report the handover indication information.

40. The method according to any one of claims 28 to 39, wherein the first communication node is a core network device and the second communication node is an access network device, and/or the first communication node is an access network device and the second communication node is a terminal device.

41. An apparatus for performing a sensing service, comprising:
a first receiving module, configured to receive first information from an associated UE or a second communication node; and
a first switching module, configured to determine switching of a sensing node based on the first information, wherein the sensing node is configured to perform a sensing service on a sensing target corresponding to the associated UE, and a communication range of the second communication node overlaps a communication range of the associated UE.

42. An apparatus for performing a sensing service, comprising:
a second transmitting module, configured to transmit first information to a first communication node; or
a second receiving module, configured to receive a transmission configuration of a second reference signal from the first communication node, wherein the second reference signal is used for a second communication node to measure and transmit first information to the first communication node;
wherein the first information is used to assist the core network device in determining switching of a sensing node, the sensing node is configured to perform a sensing service on a sensing target corresponding to an associated UE, and a communication range of the second communication node overlaps a communication range of the associated UE.

43. An apparatus for performing a sensing service, comprising:
a third transmitting module, configured to transmit a first reference signal, wherein the first reference signal is used for an associated UE to measure and transmit first information to a first communication node; or configured to transmit first information to the first communication node;
wherein the first information is used to assist the first communication node in determining switching of a sensing node, the sensing node is configured to perform a sensing service on a sensing target corresponding to the associated UE, and a communication range of a second communication node overlaps a communication range of the associated UE.

44. A sensing device, wherein the communication device comprises a processor and a memory, wherein the memory is configured to store at least one computer program, which when executed by the processor, cause the communication device to perform the method for performing a sensing service according to any one of claims 1 to 19, or to perform the method for performing a sensing service according to any one of claims 20 to 27, or to perform the method for performing a sensing service according to any one of claims 28 to 40.

45. A computer-readable storage medium, wherein the storage medium stores at least one computer program, which when executed by a processor, cause the processor to perform the method for performing a sensing service according to any one of claims 1 to 19, or to perform the method for performing a sensing service according to any one of claims 20 to 27, or to perform the method for performing a sensing service according to any one of claims 28 to 40.

46. A chip, wherein the chip comprises programmable logic circuitry and/or one or more program instructions, wherein the chip, when running, is caused to perform the method for performing a sensing service according to any one of claims 1 to 19, or to perform the method for performing a sensing service according to any one of claims 20 to 27, or to perform the method for performing a sensing service according to any one of claims 28 to 40.

47. A computer program product, wherein the computer program product comprises one or more computer instructions stored in a computer-readable storage medium, wherein the one or more computer instructions, when read from the computer-readable storage medium and executed by a processor, cause the processor to perform the method for performing a sensing service according to any one of claims 1 to 19, or to perform the method for performing a sensing service according to any one of claims 20 to 27, or to perform the method for performing a sensing service according to any one of claims 28 to 40.
